(19) Europäisches Patentamt
European Patent Office
Office européen des brevets

(11) **EP 4 400 558 A1**

(12) **EUROPEAN PATENT APPLICATION**
published in accordance with Art. 153(4) EPC


(43) Date of publication:
**17.07.2024 Bulletin 2024/29**

(21) Application number: **22867170.7**

(22) Date of filing: **19.08.2022**

(51) International Patent Classification (IPC):
***C09K 11/06*** (2006.01) ***G02B 5/20*** (2006.01)

(52) Cooperative Patent Classification (CPC):
**C09K 11/06; G02B 5/20**

(86) International application number:
**PCT/JP2022/031415**

(87) International publication number:
**WO 2023/037848 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.09.2021 JP 2021147386**



(71) Applicant: **Kyushu University, National University Corporation**
**Nishi-ku**
**Fukuoka-shi**
**Fukuoka 819-0395 (JP)**

(72) Inventors:
- **YANAI, Nobuhiro**
  **Fukuoka-shi, Fukuoka 819-0395 (JP)**
- **KIMIZUKA, Nobuo**
  **Fukuoka-shi, Fukuoka 819-0395 (JP)**
- **HARADA, Naoyuki**
  **Fukuoka-shi, Fukuoka 819-0395 (JP)**
- **SASAKI, Yoichi**
  **Fukuoka-shi, Fukuoka 819-0395 (JP)**
- **UJI, Masanori**
  **Fukuoka-shi, Fukuoka 819-0395 (JP)**
- **ROY, Bibhisan**
  **Fukuoka-shi, Fukuoka 819-0395 (JP)**

(74) Representative: **Zimmermann & Partner Patentanwälte mbB**
**Postfach 330 920**
**80069 München (DE)**


(54) **PHOTON UPCONVERSION COMPOSITION, FILM, MYOPIA-SUPPRESSING TRANSPARENT PRODUCT, AND METHOD FOR CONVERTING VISIBLE LIGHT INTO ULTRAVIOLET LIGHT**


(57) A photon upconversion composition containing a compound having a coumarin skeleton and not containing a heavy metal exhibits a high photon upconversion efficiency at a low excitation light intensity.


**EP 4 400 558 A1**

## Description

### Technical Field

The present invention relates to a photon upconversion composition useful as a creation source for UV light, a film using the photon upconversion composition, a myopia-suppressing transparent product and a method for converting visible light into ultraviolet light.

### Background Art

Photon upconversion is a technique for converting low-energy light to high-energy light, and attention is paid thereto as an energy creation technology that can improve the efficiency of solar light-using devices including solar cells and photocatalysts.

As a material system in which photon upconversion works, there is known a photon upconversion composition that contains, as combined, a donor functioning as a sensitizer and an acceptor functioning as a light emitter. In the composition, when the donor is excited to an excited singlet state by irradiation with excitation light, and is then converted into an excited triplet state through intersystem crossing, and the triplet energy transfers to the acceptor. In the acceptor thus having been in an excited triplet state through energy acceptance, triplets between two molecules meet to cause triplet-triplet annihilation, and one molecule among them transitions into an excited singlet state having a higher energy than the excited triplet state to bring about light emission (photon upconversion emission). Owing to the triplet-triplet annihilation-based photon upconversion mechanism, the composition can convert an irradiation light into a light in a higher energy level (light having a shorter wavelength).

The mainstream of conventional photon upconversion compositions is those using a donor compound containing a heavy metal such as an iridium complex shown below, which, however, involves a problem in industrial usability due to the need for addressing environmental concerns and to the difficulty in securing stable raw materials. In addition, a photon upconversion composition using such an iridium complex as a donor has a limitation in improving the conversion efficiency into photon upconversion light from visible light (UC efficiency), since the visible light absorption by the donor is weak, while the reabsorption of photon upconversion light (UC light) thereby is large.

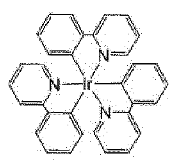
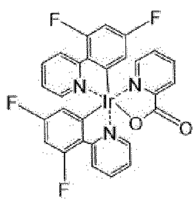
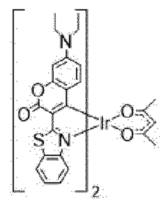

Ir(ppy)$_3$ FIrpic Ir(C6)$_2$(acac)

In view of this, as a result of a research carried out with the aim of realizing a heavy metal-free photon upconversion composition, a photon upconversion composition using a compound such as biacetyl, tetrakis(carbazol-9-yl)-1,3-dicyanobenzene (4CzIPN) or 10-butyl-2-chloro-9(10H)-acridone (BCA), as a donor has been developed. However, the photon upconversion composition using such a compound as a donor also includes problems in that the visible light absorption by the donor therein is weak and, in addition, the excitation light intensity (threshold excitation intensity $I_{th}$) necessary for maximizing the UC efficiency is high, and the maximum value of the UC efficiency is low. For example, NPL 1 proposes a heavy metal-free photon upconversion composition that uses BCA as a donor and uses 2,6-di-tert-butylnaphthalene (DTB-NPh) as an acceptor, but the heavy metal-free photon upconversion composition has the extremely high threshold excitation intensity Ith of 1300 mW/cm2 and therefore, the actual situation is far from the practical level.

### Citation List

#### Non Patent Literature

NPL 1: Y. Murakami et al., Phys. Chem. Chem. Phys., 2020, 22, 27134

## Summary of Invention

### Technical Problem

Given the situation, the present inventors have promoted assiduous studies for providing a heavy metal-free photon upconversion composition that exhibits a high UC efficiency at a low excitation light intensity.

### Solution to Problem

As a result of assiduous studies made for the purpose of solving the problems as above, the present inventors have found that a heavy metal free-photon upconversion composition using a compound having a coumarin skeleton as a donor exhibits a high UC efficiency at a low excitation light intensity.

The present invention has been proposed based on such findings, and specifically has the following constitution.

[1] A photon upconversion composition containing a compound having a coumarin skeleton and not containing a heavy metal.

[2] The photon upconversion composition according to [1], wherein the compound having a coumarin skeleton has a carbonyl group outside the coumarin skeleton.

[3] The photon upconversion composition according to [1] or [2], in which the compound having a coumarin skeleton has a halogen atom.

[4] The photon upconversion composition according to [3], wherein the halogen atom is a bromine atom.

[5] The photon upconversion composition according to any one of [1] to [4], wherein the compound having a coumarin skeleton has a tertiary amino group.

[6] The photon upconversion composition according to any one of [1] to [5], wherein the compound having a coumarin skeleton has two or more coumarin skeletons.

[7] The photon upconversion composition according to [6], wherein the compound having a coumarin skeleton has a structure in which two coumarin skeletons are linked by a carbonyl group.

[8] A film containing the photon upconversion composition of any one of [1] to [7].

[9] The film according to [8], wherein the photon upconversion composition is impregnated in a porous film.

[10] A myopia-suppressing transparent product containing a photon upconversion composition.

[11] The myopia-suppressing transparent product according to [10], wherein the photon upconversion composition is the photon upconversion composition of any one of [1] to [7].

[12] A method for converting a visible light into a UV light by irradiating the photon upconversion composition of any one of [1] to [7] or the film of [8] with a visible light.

[13] The method according to [12], wherein emission of the UV light is recognized in a range of 360 to 400 nm.

### Advantageous Effects of Invention

According to the present invention, there can be realized a heavy metal-free photon upconversion composition that exhibits a high UC efficiency at a low excitation light intensity.

### Brief Description of Drawings

[Fig. 1] Fig. 1 is a view for explaining a UC emission mechanism of a photon upconversion composition of the present invention.

[Fig. 2] Fig. 2 shows UC emission spectra of a toluene solution of Compound A1 and Compound D1 (Composition 1) with a 445-nm excitation light.

[Fig. 3] Fig. 3 is a graph showing excitation light intensity dependence of UC efficiency of a toluene solution of Compound A1 and Compound D1 (Composition 1).

[Fig. 4] Fig. 4 is a double logarithmic graph showing excitation light intensity dependence of UC emission intensity of a toluene solution of Compound A1 and Compound D1 (Composition 1).

[Fig. 5] Fig. 5 is a graph showing the difference in the excitation light intensity dependence of UC emission intensity, depending on the presence or absence of microlens array.

Description of Embodiments

Hereinunder the present invention is described in detail. The constitutional elements may be described below with reference to representative embodiments and specific examples of the invention, but the invention is not limited to the embodiments and the examples. In the description herein, a numerical range expressed as "to" means a range that includes the numerical values described before and after "to" as the lower limit and the upper limit. In the description, the hydrogen atom that is present in the molecule of the compound used in the invention is not particularly limited in isotope species, and for example, all the hydrogen atoms in the molecule may be $^1H$, and all or a part of them may be $^2H$ (deuterium D).

<Photon Upconversion Composition>

The photon upconversion composition of the present invention contains a compound having a coumarin skeleton, and does not contain a heavy metal.

In the following description, the "coumarin skeleton-having compound" can be referred to as the "coumarin compound".

The "heavy metal" in "heavy metal-free" in the present invention means a metal having a specific gravity of 4 g/cm$^3$ or more. The phrase "heavy metal-free" means that the composition does not substantially contain a heavy metal in any embodiment of a heavy meal as a constituent element of a compound and a heavy metal as an elemental heavy metal, and does not exclude the composition containing a heavy metal as an impurity inevitably mixed therein. Here, "does not substantially contain a heavy metal" means that the content of a heavy metal in the composition is 0.1 ppm or less.

The "photon upconversion composition" in the present invention means a composition exhibiting a performance of converting a light (irradiation light) applied to the composition into a light having a shorter wavelength. The light of a conversion source to be converted into "a light having a shorter wavelength" is a light that excites the coumarin compound contained in the photon upconversion composition, and is preferably a light falling in a longer wavelength region than a UV region, more preferably a visible light. Here, "a light that excites" can be selected from a light of which the wavelength region of an emission peak overlaps with the wavelength region where the target substance to be excited with the light exhibits photoabsorption, and in the following description, the light is referred to as "an excitation light" for the target substance. The "light having a shorter wavelength" to which the light of a conversion source is to be converted is preferably a UV light. Namely, a preferred embodiment of the "photon upconversion composition" of the present invention is a composition that exhibits a performance of converting a visible light into a UV light. Here, the "visible light" in the present description means a light of which the wavelength falls within a range of more than 400 nm to 800 nm, and the "UV light" means a light of which the wavelength falls within a range of 200 nm or more and 400 nm or less. The light of a conversion source, and the UV light that contains the converted light can be a single light or can also be a composite light containing plural lights differing in the emission maximum wavelength. The light of a conversion source can contain a visible light and a light except a visible light, and the converted light can contain a UV light and a light except a UV light.

In the present specification, the phenomenon that the photon upconversion composition emits an irradiation light (excitation light) to convert the light into a light having a shorter wavelength can be referred to as "photon upconversion emission" or "UC emission", and the light emitted by photon upconversion emission (a light having a shorter wavelength than the irradiation light) can be referred to as "a UC light", and the conversion efficiency of an irradiation light into a UC light can be referred to as "upconversion efficiency" or "UC efficiency". In addition, the "photon upconversion composition of the present invention" can be referred to merely as the "composition of the present invention".

Containing a coumarin compound, the photon upconversion composition of the present invention exhibits a high UC efficiency at a low excitation light intensity while being heavy metal free. This is presumed to be because of the following mechanism.

Namely, it is presumed that, when the photon upconversion composition of the present invention is irradiated with a light, the coumarin compound therein absorbs the irradiation light to be excited into an excited single state, and thereby a triplet energy can be efficiently generated through intersystem crossing from the excited singlet state to an excited triplet state. Consequently, even at a low excitation light intensity, photon upconversion emission by triplet-triplet annihilation is efficiently generated to exhibit a high UC efficiency. Here, the fact that the light emission from the composition is photon upconversion emission by triplet-triplet annihilation can be confirmed by the fact that the lifetime of the photon upconversion emission is delayed fluorescence on the order of milliseconds to $10^{-1}$ milliseconds and the fact that, in double logarithmic plotting of excitation light intensity dependence of a photon upconversion emission intensity, the inclination changes from 2 to 1.

In the following, the structure of the coumarin compound for use in the present invention is described in detail.

Unless otherwise specifically indicated, "alkyl group" and "aryl group" in the following description are substituents each falling in the following range.

"Alkyl group" can be any of linear, branched or cyclic ones. Preferably, the carbon number of the group is 1 to 20, further preferably 1 to 10, even more preferably 1 to 6. Specific examples of the alkyl group include a methyl group, an ethyl group, an n-propyl group, and an isopropyl group, but the "alkyl group" is not limited to these specific examples. At least one hydrogen atom of the alkyl group can be substituted with a substituent.

"Aryl group" can be composed of a monocyclic aromatic ring or can be composed of a condensed ring formed by condensation of two or more aromatic rings, or can also be composed of a linked ring formed by linking of two or more aromatic rings. In the case where two or more aromatic rings are linked, they can be linked linearly, or can be linked in a branched form. The carbon number of the aromatic ring to constitute the aryl group is preferably 6 to 22, more preferably 6 to 18, even more preferably 6 to 14, further more preferably 6 to 10. Specific examples of the aryl group include a phenyl group, a naphthalenyl group and a biphenyl group, but the "aryl group" is not limited to these specific groups. At least one hydrogen atom of the aryl group can be substituted with a substituent.

[Coumarin Skeleton-Having Compound (Coumarin Compound)]

The coumarin compound for use in the present invention is a compound having a coumarin skeleton represented by the following formula. In the following formula, the number shown around the skeleton indicates the position number of the coumarin skeleton.

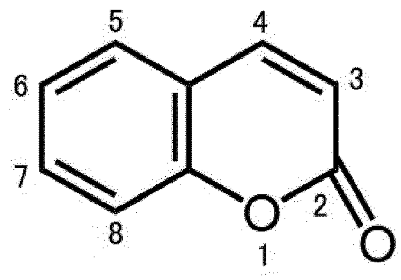

The coumarin compound is preferably a coumarin derivative in which at least one hydrogen atom of the coumarin skeleton is substituted with a substituent. Here, the "substituent" in the coumarin skeleton means an atom or an atomic group that bonds to the constituent carbon of the coumarin skeleton in place of a hydrogen atom. In the following, the substituent of the coumarin skeleton is described.

The coumarin compound for use in the present invention preferably has a carbonyl group represented by the following formula, outside the coumarin skeleton.

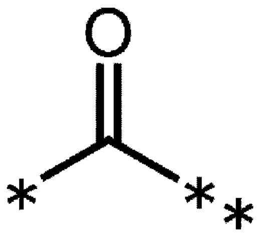

In the formula, * and ** each indicate the bonding position to the adjacent atom.

Here, "having a carbonyl group outside the coumarin skeleton" means that the compound has a carbonyl group inside the substituent of the coumarin skeleton. The number of the carbonyl groups that the coumarin compound has outside the coumarin skeleton can be one or can be two or more. In the case where the coumarin compound has two or more carbonyl groups outside the coumarin skeleton, these carbonyl groups can be contained in the same substituent or can be individually contained in different substituents (inside the substituents differing from each other in the position). Examples of the substituent containing two or more carbonyl groups include a substituent having a dione structure represented by the following formula.

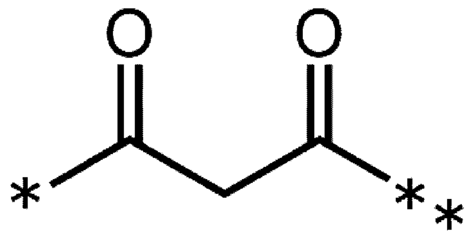

In the formula, * and ** each indicate the bonding position to the adjacent atom.

The carbonyl group contained in the substituent can bond to the constituent carbon of the coumarin skeleton via a single bond at one bonding position *, and can bond to the constituent carbon of the coumarin skeleton via a linking group at one bonding position *. Examples of the linking group include a carbonyl group, an alkylene group, a phenylene group, an ethenylene group, -N=N-, -NH-, and a linking group formed by linking two or more of these. The hydrogen atom of the alkylene group, the phenylene group, an ethenylene group and -NH- can be substituted, and examples of the substituent include an alkyl group, an aryl group and a cyano group. Examples of the linking group formed by linking two or more groups include -CH=C(CN)- and -N=N-NH-. At the other bonding position ** of the carbonyl group, a hydrogen atom can bond, or any other atom or atomic group can bond. The atom includes a halogen, and the atomic group includes an alkoxy group, an alkyl group, an amino group, an alkylamino group, a phenylamino group, a pyridyl group and a hydroxyl group. Here, the alkoxy group and the alkyl group can be linear, branched or cyclic. The carbon number of the alkoxy group and the alkyl group is preferably 1 to 20, more preferably 1 to 10, even more preferably 1 to 6. Specific examples of the alkoxy group include a methoxy group, an ethoxy group, an n-propoxy group, and an isopropoxy group. Specific examples of the alkyl group include a methyl group, an ethyl group, an n-propyl group and an isopropyl group.

The substitution position of the carbonyl group-containing substituent in the coumarin skeleton is, though not specifically limited, preferably at least the 3-position.

The coumarin compound can have one or more halogen atoms. Examples of the halogen atom include a fluorine atom, a chlorine atom, a bromine atom and an iodine atom, and a bromine atom is preferred. In the case where the coumarin compound has two or more halogen atoms, these halogen atoms can be the same as or different from each other. The halogen atom that the coumarin compound has can be introduced into the coumarin skeleton as a substituent, or can be contained as a part of a substituent, but is preferably introduced as a substituent, that is, it is preferable that a halogen atom bonds to the constituent carbon of the coumarin skeleton via a single bond. Examples of the substituent containing a halogen atom as a part thereof include a halogenated alkyl group, a trifluoromethyl group, and a bromophenyl group. Regarding the description of the alkyl group substituted with a halogen atom of the "halogenated alkyl group", reference can be made to the description relating to the "alkyl group" given hereinabove. The substituent containing a halogen atom as a part thereof can be one containing one halogen atom, or can be one containing two or more halogen atoms. The substitution position of the halogen atom or the substituent containing a halogen atom as a part thereof in the coumarin skeleton is not specifically limited. For example, the substitution position can be at least the 6-position, or can be at least the 8-position, or can be at least the 6-position and the 8-position.

Also preferably, the coumarin compound has a tertiary amino group. The substituent to constitute the tertiary amino group includes an alkyl group and an aryl group. Regarding the description, the preferred range and the specific examples of the alkyl group and the aryl group, reference can be made to the description of the "alkyl group" and the "aryl group" given hereinabove. The tertiary amino group is preferably a dialkylamino group, a diarylamino group or an alkylarylamino group, more preferably a dialkylamino group. Here, the two alkyl groups of the dialkylamino group can be the same as or different from each other. The two aryl groups of the diarylamino group can be the same as or different from each other. The substituent of the tertiary amino group can be further substituted with a substituent. The substituent includes an alkyl group and an aryl group. The number of the tertiary amino groups that the coumarin compound has can be one or can be two or more. In the case where the coumarin compound has two or more tertiary amino groups, these tertiary amino groups can be the same as or different from each other. The tertiary amino group that the coumarin compound has can be introduced into the coumarin skeleton as a substituent, or can be contained as a part of a substituent, but is preferably introduced as a substituent, that is, it is preferable that the tertiary amino group bonds to the constituent carbon of the coumarin skeleton via a single bond. Examples of the substituent containing a tertiary amino group as a part thereof include an alkyl group substituted with a tertiary amino group, and an aryl group substituted with a tertiary amino group. Regarding the description, the preferred range and the specific examples of the alkyl group of the "alkyl group substituted with a tertiary amino group" and the aryl group of the "aryl group substituted with a tertiary amino group", reference can be made to the description relating to the "alkyl group" and the "aryl group" given hereinabove. The substituent containing a tertiary amino group as a part thereof can contain one tertiary amino group, or can contain two or more tertiary amino groups. The substitution position of the tertiary amino group or the substituent containing a tertiary amino group as a part thereof in the coumarin skeleton is, though not specifically limited, preferably at least the

7-position.

The hydrogen atom of the coumarin skeleton can be substituted with a carbonyl group-containing substituent, a halogen atom or a substituent except a tertiary amino group. Examples of the substituent include a primary amino group, a secondary amino group, a thiocarbonyl group, a halogenated alkyl group (e.g., a trifluoromethyl group), a hydroxyl group, an alkyl group, a cyano group, an imine group, a benzothiazole group, a benzoxazole group, a benzimidazole group, a furan group, a pyrrole group, a thiophene group, an oxazole group, an imidazole group, and a thiazole group. The coumarin skeleton can be condensed with a ring. The ring to be condensed with the coumarin skeleton can be an aromatic ring or an alicyclic ring. The ring that can be condensed with the coumarin skeleton includes a benzene ring, a polycyclic aromatic ring formed by condensation of two or more benzene rings (e.g., a naphthalene ring, an anthracene ring), a cyclohexadiene ring, a cyclohexene ring, a cyclopentaene ring, a dihydrofuran ring, a heterocyclic ring (e.g., a furan ring, a pyrrole ring, a thiophene ring, an oxazole ring, an imidazole ring, a thiazole ring, a benzothiazole ring, a benzoxazole ring, a benzimidazole ring, a piperidine ring, a pyrrolidine ring, and a ring formed by condensation of two or more of these), a BODIPY ring (boron-dipyrromethene ring).

The "coumarin skeleton" as referred to in the present invention includes not only a skeleton of coumarin in which the 1-position is an oxygen atom and the 2-position is a carbonyl group, but also a skeleton in which the 1-positioned oxygen atom of coumarin is substituted with a sulfur atom, a skeleton in which the 2-positioned carbonyl group of coumarin is substituted with a thiocarbonyl group, and a skeleton in which the 1-positioned oxygen atom of coumarin is substituted with a sulfur atom and the 2-positioned carbonyl group is substituted with a thiocarbonyl group. Preferred is a skeleton of coumarin.

The number of the coumarin skeletons that the coumarin compound has can be one or can be two or more. In the case where the coumarin compound has two or more coumarin skeletons, these coumarin skeletons can be the same as or different from each other in point of the presence or absence of a substituent in each position of the coumarin skeleton and of the kind of the substituent. Also in the case where the coumarin compound has two or more coumarin skeletons, preferably these coumarin skeletons link together via a linking group containing a carbonyl group. The number of the carbonyl groups that the linking group contains can be one or can be two or more. Preferred examples of the coumarin compound include a compound having a structure where two coumarin skeletons link together via a carbonyl group. More preferred examples include a compound having a structure where two coumarin skeletons link together via a 3-positioned carbonyl group.

Preferably, the coumarin compound used in the present invention has a structure represented by the following general formula (1).

General Formula (1)

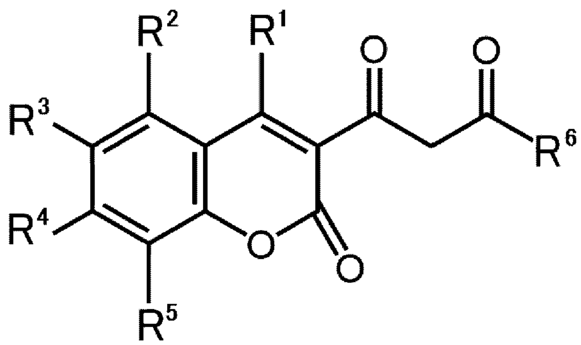

In the general formula (1), $R^1$ to $R^6$ each independently represent a hydrogen atom or a substituent. $R^1$ to $R^6$ can be the same as or different from each other. Regarding the description, the preferred range, and the specific examples of the substituent that $R^1$ to $R^6$ can represent, reference can be made to the description relating to the substituent of the coumarin skeleton and to the atom and the atomic group bonding to the bonding position ** of the carbonyl group. $R^1$ and $R^2$, and adjacent two of $R^2$ to $R^5$ each can bond to each other to form a ring. Regarding the description, the preferred range, and the specific examples of the ring to be formed by $R^1$ to $R^5$ bonding to each other, reference can be made to the description relating to the ring that can be condensed with the coumarin skeleton described hereinabove. In one embodiment of the present invention, the coumarin compound is a compound of the general formula (1) where at least $R^3$ and $R^5$ are hydrogen atoms. In another embodiment of the present invention, the coumarin compound is a compound of the general formula (1) where at least one of $R^3$ and $R^5$ is a halogen atom. Here, the halogen atom is preferably a bromine atom. In the general formula (1), $R^4$ is preferably a tertiary amino group, and $R^6$ is preferably an alkoxy group. Regarding the description, the preferred range, and the specific examples of the tertiary amino group,

reference can be made to the description relating to the tertiary amino group described hereinabove as a substituent of the coumarin skeleton, and regarding the description, the preferred range, and the specific examples of the alkoxy group, reference can be made to the description relating to the description of the carboxy group bonding to the bonding position ** of the carbonyl group described hereinabove.

Also preferably, the coumarin compound for use in the present invention has a structure represented by the following general formula (2).

General Formula (2)

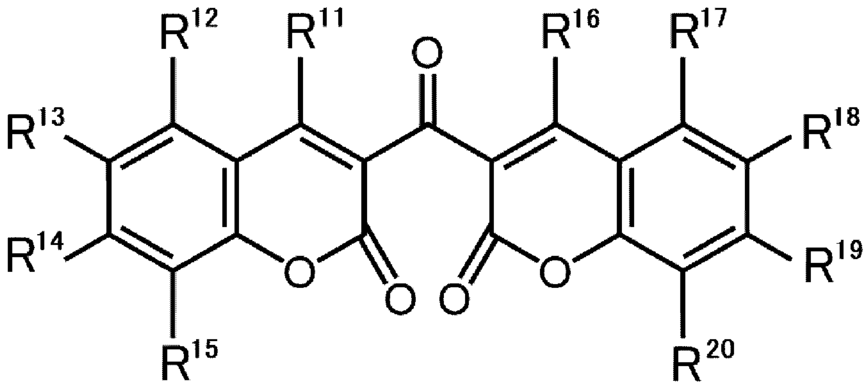

In the general formula (2), $R^1$ to $R^{20}$ each independently represent a hydrogen atom or a substituent. $R^1$ to $R^{20}$ can be the same as or different from each other. Regarding the description, the preferred range, and the specific examples of the substituent that $R^1$ to $R^{20}$can represent, reference can be made to the description relating to the substituent of the coumarin skeleton described hereinabove. $R^{11}$ and $R^{12}$, adjacent two of $R^{12}$ to $R^{15}$, $R^{16}$ and $R^{17}$, and adjacent two of $R^{17}$ to $R^{20}$ each can bond to each other to form a ring. Regarding the description, the preferred range, and the specific examples of the ring to be formed by $R^{11}$ to $R^{20}$ bonding to each other, reference can be made to the description relating to the ring that can be condensed with the coumarin skeleton described hereinabove. In one embodiment of the present invention, the coumarin compound is a compound of the general formula (2) where at least $R^{13}$, $R^{15}$, $R^{18}$ and $R^{20}$ are hydrogen atoms, in another embodiment of the present invention, the coumarin compound is a compound of the general formula (2) where at least one of $R^{13}$ and $R^{15}$ is a halogen atom, and in still another embodiment of the present invention, the coumarin compound is a compound of the general formula (2) where at least one of $R^{13}$ and $R^{15}$ is a halogen atom, and at least one of $R^{18}$ and $R^{20}$ is a halogen atom. Here, the halogen atom is preferably a bromine atom. Here, the halogen atom is preferably a bromine atom. Also in the general formula (2), at least one of $R^{14}$ and $R^{19}$ is preferably a tertiary amino group, and more preferably both of $R^{14}$ and $R^{19}$ each are a tertiary amino group. Regarding the description, the preferred range, and the specific examples of the tertiary amino group, reference can be made to the description relating to the tertiary amino group described hereinabove as a substituent of the coumarin skeleton. The compound represented by the general formula (2) can have a line-symmetric structure, or does not have a line-symmetric structure. Namely, combinations of $R^{11}$ and $R^{16}$, $R^{12}$ and $R^{17}$, $R^{13}$ and $R^{18}$, $R^{14}$ and $R^{19}$, and $R^{15}$ and $R^{20}$ each can have the same structure, or at least one of these combinations can have a different structure.

Specific examples of the coumarin compound are shown below, but the coumarin compound for use in the present invention should not be limitatively interpreted by these specific examples.

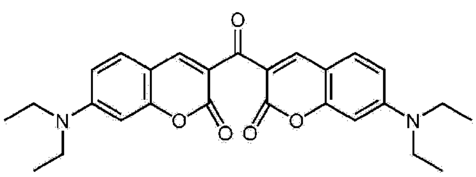

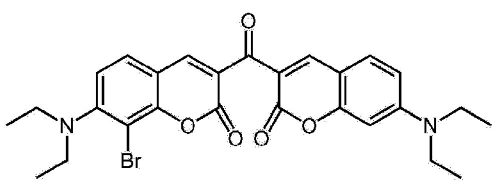

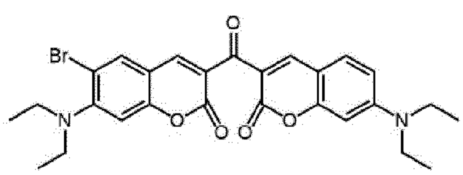

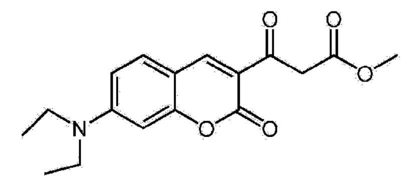

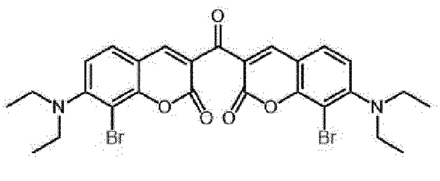

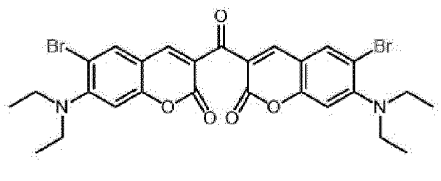

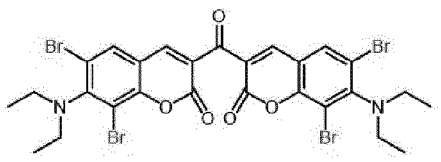

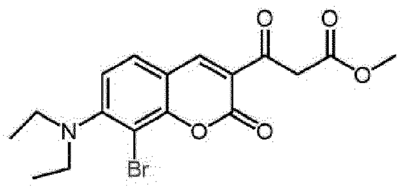

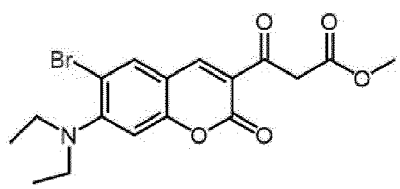

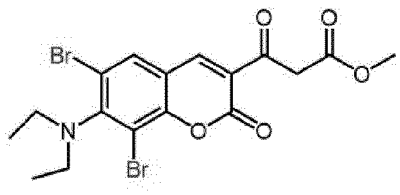

The photon upconversion composition of the present invention can contain only one kind of a coumarin compound selected from a group of compounds having a coumarin skeleton (coumarin compound), or can contain two or more kinds thereof. Also the photon upconversion composition of the present invention can contain a coumarin compound and a component except a coumarin compound (a component not having a coumarin skeleton, and this is hereinafter referred to as "other component"). The other component includes, for example, an acceptor compound capable of receiving the energy that the coumarin compound has obtained by absorption of light to thereby provide photon upconversion emission through triplet-triplet annihilation. In the following description where the photon upconversion composition contains an acceptor compound, the coumarin compound contained in the composition is referred to as a "donor compound".

It is presumed that the photon upconversion composition containing an acceptor compound and a donor compound can provide photon upconversion emission in triplet-triplet annihilation according to the mechanism, for example, as shown in Fig. 1. Hereinunder the UC emission mechanism is described. Here, the acceptor compound and the donor compound are such that the lowest excited singlet energy level $S_{1,A}$ of the acceptor compound is higher than the lowest excited triplet energy level $S_{1,D}$ of the donor compound, and the lowest excited triplet energy level $T_{1,A}$ of the acceptor compound is lower than the lowest excited triplet energy level $T_{1,D}$ of the donor compound. The irradiation light to the composition is the excitation light for the donor compound. In Fig. 1, "ISC" indicates intersystem crossing, "TET" indicates triplet energy transfer from the donor compound to the acceptor compound, and "TTA" indicates triplet-triplet annihilation.

First, when a photon upconversion composition containing a donor compound and an acceptor compound is irradiated with an excitation light, the molecule of the donor compound (donor molecule) absorbs the light to be excited in an excited singlet state ($S_{1,D}$), and then undergoes intersystem crossing to transition into an excited triplet state ($T_{1,D}$), as shown in Fig. 1. The energy of the donor molecule thus being in the excited triplet state transfers to the molecule of the acceptor compound (acceptor molecule). As a result of this, in the acceptor compound thus being in an excited triplet state ($T_{1,A}$), the triplets of two molecules meet to undergo triplet-triplet annihilation and one molecule thereof transitions into an excited singlet state ($S_{1,A}$). Namely, there occurs photon upconversion by the triplet-triplet annihilation of the acceptor molecules. The acceptor molecule thus being in an excited singlet state emits fluorescence (UC light) and deactivates, thereby, the composition provides UC emission. At that time, the excited singlet state ($S_{1,A}$) to form through photon upconversion by triplet-triplet annihilation has an extremely high energy level, and therefore by radiation deactivation from the excited singlet state, a UC light having a higher energy (having a shorter wavelength) than the excitation light is thus formed.

The coumarin compound for use as the donor compound mentioned above preferably satisfies at least one of the following requirements (A) and (B), and more preferably satisfies both the following requirements (A) and (B).

(A) Having a high absorbance.
(B) Having a low absorbance in the region at least overlapping with the wavelength region of the UC light among the UV region.

The compound satisfying the requirements (A) and (B) can efficiently absorb irradiation light, while on the other hand, does not absorb UC light, and therefore, using such a compound as a donor compound, the threshold excitation intensity $I_{th}$ of the composition can be lower and the UC efficiency thereof can be higher. Here, "threshold excitation intensity $I_{th}$" is an excitation light intensity at the refraction point on the double logarithmic graph that shows the excitation light intensity dependence of UC emission intensity, corresponding to the excitation light intensity necessary for maximizing UC emission. A lower threshold excitation intensity $I_{th}$ means that UC efficiency can be higher at a lower excitation light intensity.
In the requirement (A), "high absorbance" means that the absorbance index is 50,000 $M^{-1}m^{-1}$ or more.
In the requirement (B), "low absorbance" means that the absorbance index is 40,000 $M^{-1}cm^{-1}$ or less.

[Acceptor Compound]

The acceptor compound for use in the photon upconversion composition of the present invention is preferably a compound satisfying the following requirement (C).
(C) Having a higher lowest excited singlet energy level $S_{1,A}$ than the lowest excited singlet energy level $S_{1,D}$ of the donor compound, and having a lower lowest excited triplet energy level $T_{1,A}$ than the lowest excited triplet energy level $T_{1,D}$ of the donor compound.
The molecule of the acceptor compound satisfying the requirement (C) has a higher lowest excited singlet energy level $S_{1,A}$ than the lowest excited singlet energy level $S_{1,D}$ of the donor compound, and therefore can emit a UC light having a shorter wavelength than the excitation light of the donor compound. Also the molecule of the acceptor compound satisfying the requirement (C) has a lower lowest excited triplet energy level $T_{1,A}$ than the lowest excited triplet energy level $T_{1,D}$ of the acceptor compound, and therefore can readily receive the excited triplet energy from the donor compound. This makes it possible to more reliably allow the mechanism of UC emission shown in Fig. 1 to function.
The difference between the lowest excited singlet energy level $S_{1,A}$ of the acceptor compound and the lowest excited singlet energy level $S_{1,D}$ of the donor compound, ($S_{1,A}$-$S_{1,D}$) is preferably 0.3 to 2 eV, more preferably 0.4 to 1 eV, even more preferably 0.4 to 0.8 eV
The difference between the lowest excited triplet energy level $T_{1,D}$ of the donor compound and the lowest excited triplet energy level $T_{1,A}$ of the acceptor compound, ($T_{1,D}$-$T_{1,A}$) is preferably 0.01 to 1 eV, more preferably 0.01 to 0.5 eV, even more preferably 0.01 to 0.2 eV.
Regarding the measurement method for the lowest excited singlet energy level $S_{1,A}$, $S_{1,D}$ and the lowest excited triplet energy level $T_{1,A}$, $T_{1,D}$, reference can be made to the description in the section of (Measurement method for lowest excited singlet energy level $S_1$ and lowest excited triplet energy level $T_1$) given hereinunder. These energy levels can be determined also by density-functional calculation.
As the acceptor compound, herein usable is a compound having a condensed ring resulting from condensation of an aromatic ring and a heterocyclic ring (provided that the total number of the rings existing in the molecule of the compound is 2 to 5, and the molecule of the compound does not contain a coumarin ring), and a substituted polycyclic aromatic hydrocarbon compound. In the following description, the "compound having a condensed ring resulting from condensation of an aromatic ring and a heterocyclic ring (provided that the total number of the rings existing in the molecule of the compound is 2 to 5, and the molecule of the compound does not contain a coumarin ring)" can be referred to as "polycyclic aromatic hetero compound". The "substituted polycyclic aromatic hydrocarbon compound" as referred to herein means a polycyclic aromatic hydrocarbon compound in which at least one hydrogen atom is substituted with a substituent, and the substituent that the benzene ring-condensed polycyclic structure has is not limited to a hydrocarbon. Preferred are a substituted naphthalene compound and a substituted pyrene compound.
The photon upconversion composition can contain, as the acceptor compound, one kind of compound or two or more kinds of compounds selected from a compound group consisting of a polycyclic aromatic hetero compound and a substituted polycyclic aromatic hydrocarbon compound. However, in one embodiment of the present invention, the acceptor compound is a compound except a naphthalene compound substituted with a substituent containing at least one selected from a group consisting of an alkynyl groupgroup, a substituted silyl group, a benzene ring, a heteroaromatic ring, a cyano group and a halogen atom.
In the condensed ring of the polycyclic aromatic heterocyclic compound for use as the acceptor compound, at least one hydrogen atom can be substituted with a substituent. In the case where the substituent of the condensed ring

contains a ring, the "total number of the rings" in the phrase "the total number of the rings existing in the molecule of the compound is 2 to 5" described above is a sum total of the total number of the rings constituting the condensed ring and the total number of the rings contained in the substituent. For example, in the following compounds shown as specific examples of the polycyclic aromatic heterocyclic compound in the following section, the total number of the rings is 5.

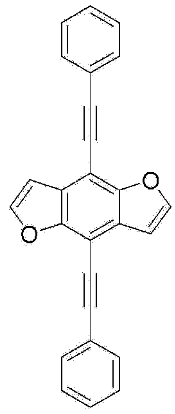

The aromatic ring constituting the condensed ring of the polycyclic aromatic hetero compound can be an aromatic ring composed of a carbon atom and a hydrogen atom (aromatic hydrocarbon ring), or can be an aromatic ring containing a heteroatom (aromatic heterocyclic ring). The aromatic hydrocarbon ring includes a benzene ring. The heteroatom constituting the aromatic heterocyclic ring includes a nitrogen atom, an oxygen atom and a sulfur atom, and preferred is a nitrogen atom. The number of the heteroatoms that the aromatic heterocyclic ring contains can be one, or can be two or more. In the case where the aromatic heterocyclic ring contains two or more heteroatoms, these heteroatoms can be the same as or different from each other. Preferred examples of the aromatic heterocyclic ring include a nitrogen-containing aromatic heterocyclic ring, in which the number of ring members is 5 or 6 and 1 to 3 of the ring members are nitrogen atoms, and more preferred examples include a nitrogen-containing aromatic heterocyclic ring, in which the number of ring members is 6 and 1 to 3 of the ring members are nitrogen atoms. Specific examples of the aromatic heterocyclic ring include a pyridine ring, a pyridazine ring, a pyrimidine ring, a pyrazine ring, and a triazine ring.

The heterocyclic ring constituting the condensed ring of the polycyclic aromatic hetero compound can be an aromatic heterocyclic ring, or can be an alicyclic heterocyclic ring. The heteroatom constituting the heterocyclic ring includes a nitrogen atom, an oxygen atom, a sulfur atom and a cerium atom. The number of the heteroatoms that the heterocyclic ring contains can be one, or can be two or more. In the case where the heterocyclic ring contains two or more heteroatoms, these heteroatoms can be the same as or different from each other. The heterocyclic ring has 5 or 6 ring members, in which, preferably, 1 to 3 of the ring members are heteroatoms. Specific examples of the heterocyclic ring include a pyrrole ring, a pyrroline ring, a pyrazole ring, an imidazole ring, a triazole ring, a pyridine ring, a pyridazine ring, a pyrimidine ring, a pyrazine ring, a triazine ring, a thiophene ring, a 2,3-dihydrothiophene ring, a furan ring, a 2,3-dihydrofuran ring, a 1,3-dioxole ring, a 2,3-dihydro-1,4-dioxine ring, an oxazole ring, an isoxazole ring, an oxadiazole ring, a thiazole ring, an isothiazole ring, a thiadiazole ring, and a selenadiazole ring.

The number of the rings constituting the condensed ring can be any of 2 to 5, but is preferably 2 or 3.

In the following, specific examples of the condensed ring constituting the polycyclic aromatic hetero compound are shown, but the polycyclic aromatic hetero compounds usable as the acceptor compound in the present invention are not limited to these condensed ring-having ones.

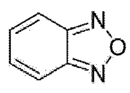 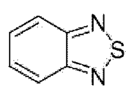 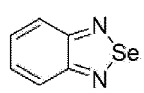 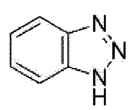

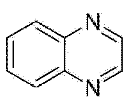 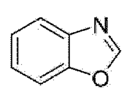 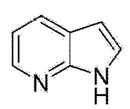 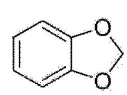

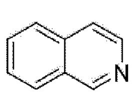 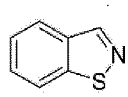 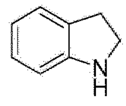 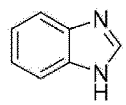

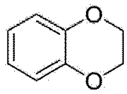 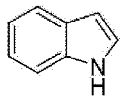 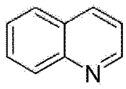 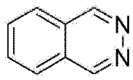

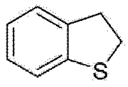 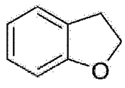 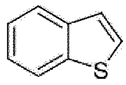 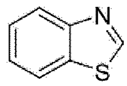

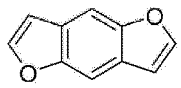 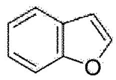 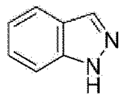

As described above, at least one hydrogen atom of the condensed ring constituting the polycyclic aromatic hetero compound, and at least one hydrogen atom of the condensed ring constituting the polycyclic aromatic hydrocarbon compound can be substituted with a substituent. Not specifically limited, examples of the substituent include an alkynyl group, a substituted silyl group, an aryl group, a heteroaryl group, and a cyano group.

Regarding the description, the preferred range and the specific examples of the aryl group, reference can be made to the description relating to the "aryl group" described hereinabove.

The alkynyl group can be linear, branched or cyclic. The carbon number of the alkynyl group is preferably 2 to 20, further preferably 2 to 10, even more preferably 2 to 6. Examples of the alkynyl group include an ethynyl group, a propynyl group and a butynyl group. At least one hydrogen atom of the alkynyl group can be substituted with a substituent. Examples of the substituent include an alkyl group, a halogenated alkyl group, a dialkoxyalkyl group, a substituted silyl group, an aryl group, and a pinacolatoboryl group. Regarding the description, the preferred range and the specific examples of the substituted silyl group, reference can be made to the description relating to the "substituted silyl group" as a substituent of the condensed ring described hereinabove, and regarding the description, the preferred range and the specific examples of the aryl group, reference can be made to the description relating to the "aryl" described hereinabove.

The alkyl group as a substituent of the alkynyl group can be linear, branched or cyclic, but is preferably linear or branched. The carbon number of the alkyl group is preferably 1 to 20. Specific examples of the linear alkyl group include a methyl group, an ethyl group, an n-propyl group, and in addition, also include a long-chain alkyl group such as a dodecyl group, a tridecyl group, a tetradecyl group, a pentadecyl group, and a hexadecyl group. Specific examples of the branched alkyl group include a branched alkyl group having 3 to 6 carbon atoms, such as an isopropyl group, an isobutyl group, a sec-butyl group, a tert-butyl group, an isopentyl group, a neopentyl group, a tert-pentyl group, and an isohexyl group.

The halogenated alkyl group as a substituent of the alkynyl group can be a halogenated alkyl group in which all the hydrogen atoms of the alkyl group are substituted with halogen atoms, or can be a partially halogenated alkyl group in which a part of the hydrogen atoms of the alkyl group are substituted with halogen atoms. Regarding the description, the preferred range and the specific examples of the alkyl group substituted with a halogen atom, reference can be made to the description relating to the "alkyl group" described hereinabove. The halogen atom includes a fluorine atom, a chlorine atom, a bromine atom, and an iodine atom, and preferred is a fluorine atom.

The dialkoxyalkyl group as a substituent of the alkynyl group preferably has a structure in which an alkoxy group bonds to each the two carbon atoms at the terminal of the alkyl group. Regarding the description, the preferred range and the specific examples of the alkyl group constituting the "dialkoxyalkyl group", reference can be made to the description relating to the "alkyl group" described hereinabove. The two alkoxy groups constituting the "dialkoxyalkyl group" can be linear or branched. The carbon number of the alkoxy group is preferably 1 to 20, more preferably 1 to 10, even more preferably 1 to 6. Specific examples of the alkoxy group include a methoxy group, an ethoxy group, an n-propoxy group and an isopropoxy group. The two alkoxy groups constituting the "dialkoxyalkyl group" can be the same as or different from each other.

The substituted silyl group as a substituent of the condensed ring can be any of a mono-substituted silyl group, a di-substituted silyl group or a tri-substituted silyl group, but preferred is a tri-substituted silyl group. In the di-substituted

silyl group and the tri-substituted silyl group, the plural substituents can be the same as or different from each other. The substituent of the substituted silyl group includes an alkyl group, and an aryl group. The alkyl group can be any of linear, branched or cyclic ones, but is preferably linear or branched. The carbon number of the alkyl group can be one or more, or can be two or more, but is preferably two or more, more preferably three or more. In the case where the substituted silyl group is a trialkylsilyl group, the total carbon number of the three alkyl groups is preferably 6 or more. The upper limit of the carbon number is not specifically limited, but is preferably 20 or less. Regarding the description, the preferred range and the specific examples of the aryl group, reference can be made to the description relating to the "aryl group" described hereinabove. Specific examples of the substituted silyl group include a trimethylsilyl group, a triethylsilyl group, a tri-n-propylsilyl group, a triisopropylsilyl group, and a triphenylsilyl group.

The heteroaryl group as a substituent of the condensed ring is preferably composed of a monocyclic aromatic heterocyclic ring. The heteroatom to constitute the aromatic heterocyclic ring includes a nitrogen atom, an oxygen atom, and a sulfur atom. The number of the heteroatoms that the aromatic heterocyclic ring contains can be one, or can be two or more. In the case where the aromatic heterocyclic ring contains two or more heteroatoms, these heteroatoms can be the same as or different from each other. The heteroaryl group is more preferably composed of an aromatic heterocyclic ring, in which the number of ring members is 5 or 6 and 1 to 3 of the ring members are heteroatoms. Specific examples of the aromatic heterocyclic ring constituting the heteroaryl group include a pyrrole ring, an imidazole ring, a pyridine ring, a pyridazine ring, a pyrimidine ring, a pyrazine ring, a triazine ring, a furan ring, a thiophene ring, an oxazole ring, and a thiazole ring. At least one hydrogen atom of the aromatic heterocyclic ring can be substituted with a substituent.

The position of the substituent of the condensed ring is not specifically limited, and the substitution number thereof can be any number falling within a range not overstepping the number of the substitutable positions. The number of the substituents can be selected from, for example within a range of 1 to 4, can be selected from a range of 1 to 3, or can be 1 or 2. For example, in the case where the condensed ring containing a benzene ring has two substituents, the position of the substituents can be in a relation of an ortho-position of the benzene ring, or can be in a meta-position, or can be in a para-position. In the case where the condensed ring is substituted with two or more substituents, these substituents can be the same as or different from each other.

Specific examples of the acceptor compound are shown below, but the acceptor compound usable in the present invention should not be limitatively interpreted by these specific examples.

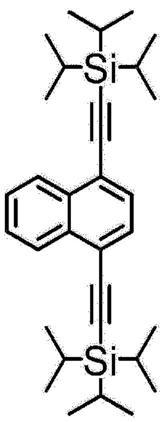
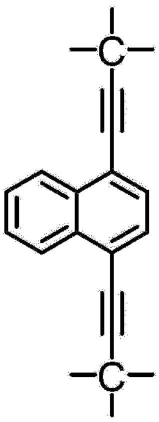
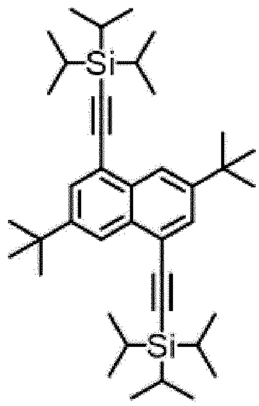

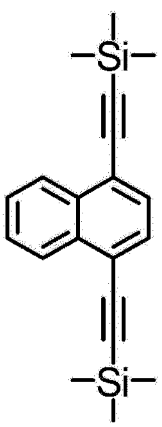
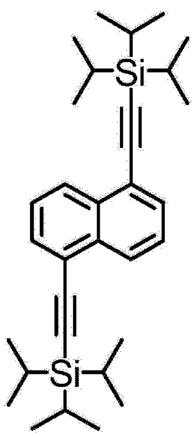
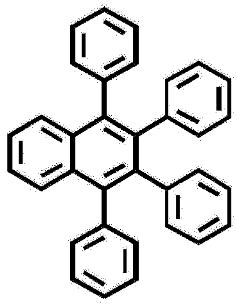

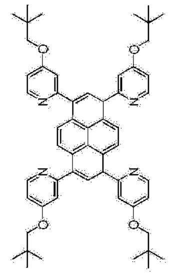
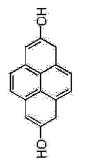
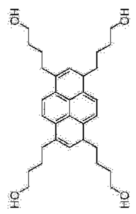
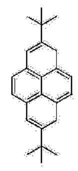
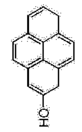
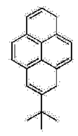
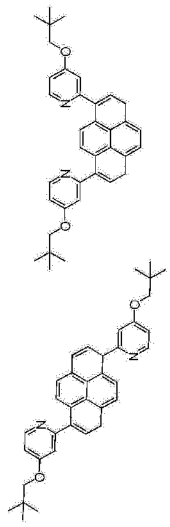
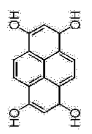
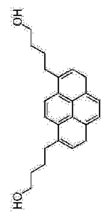
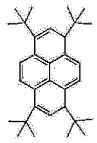
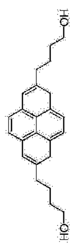
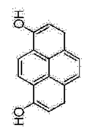
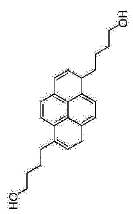
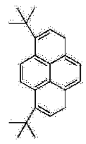
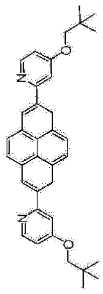
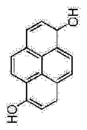
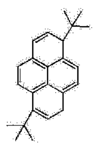
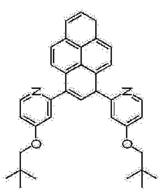
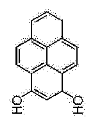
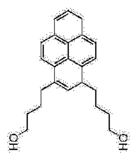
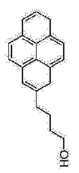
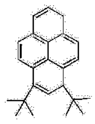
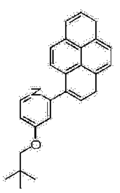
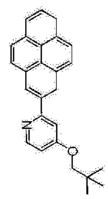
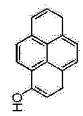
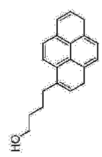
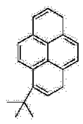

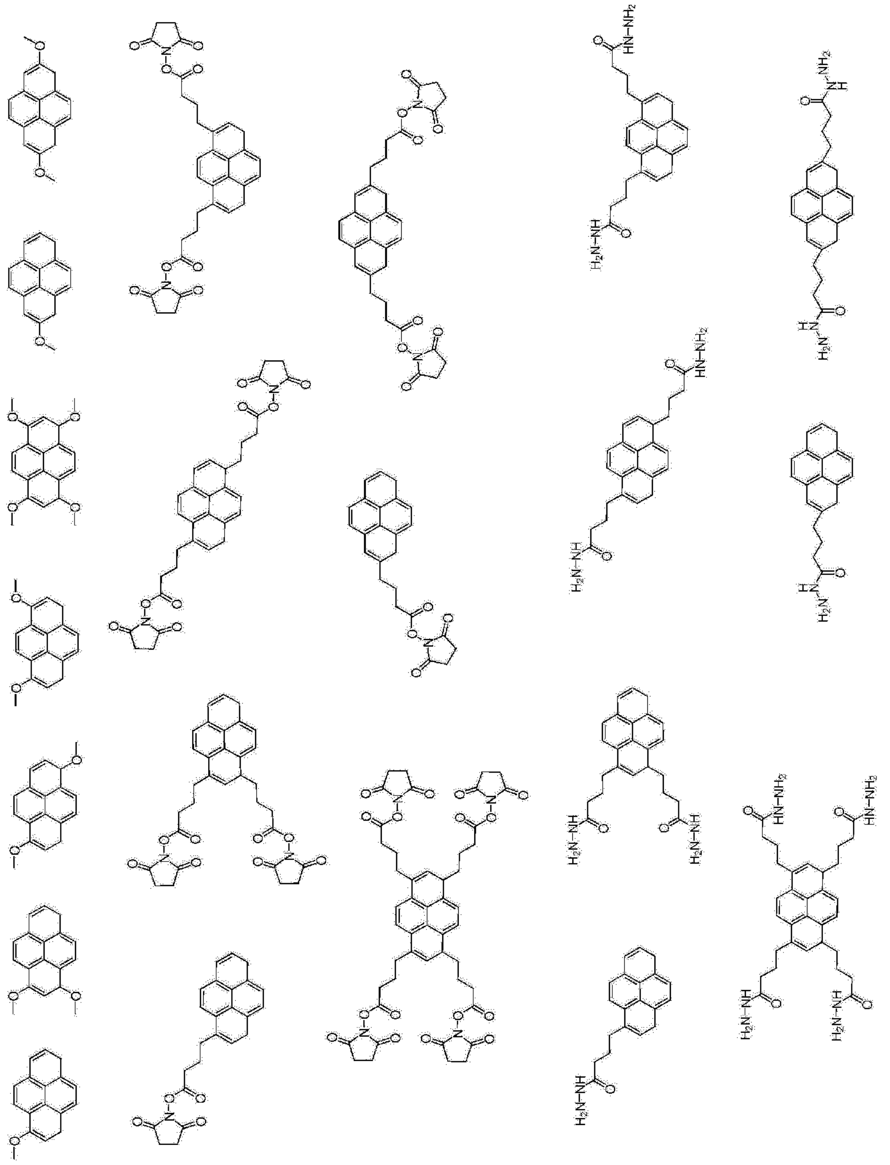

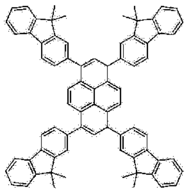
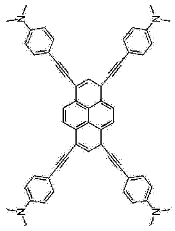
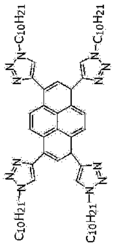
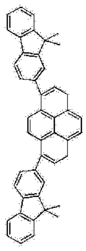
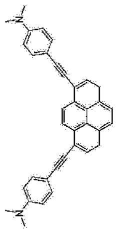
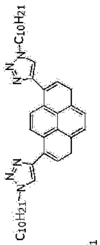
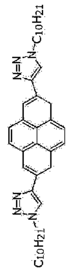
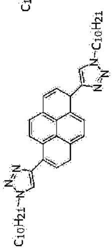
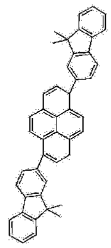
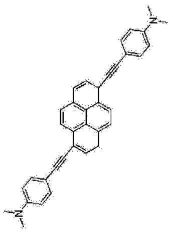
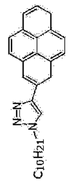
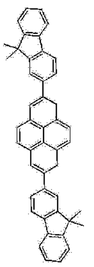
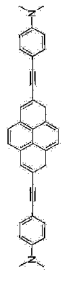
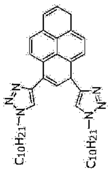
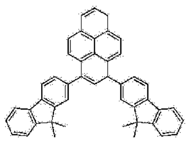
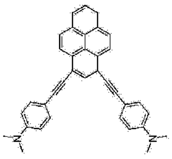
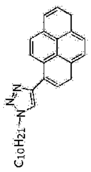
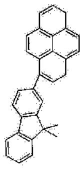
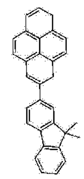
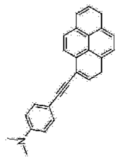
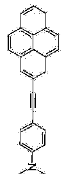

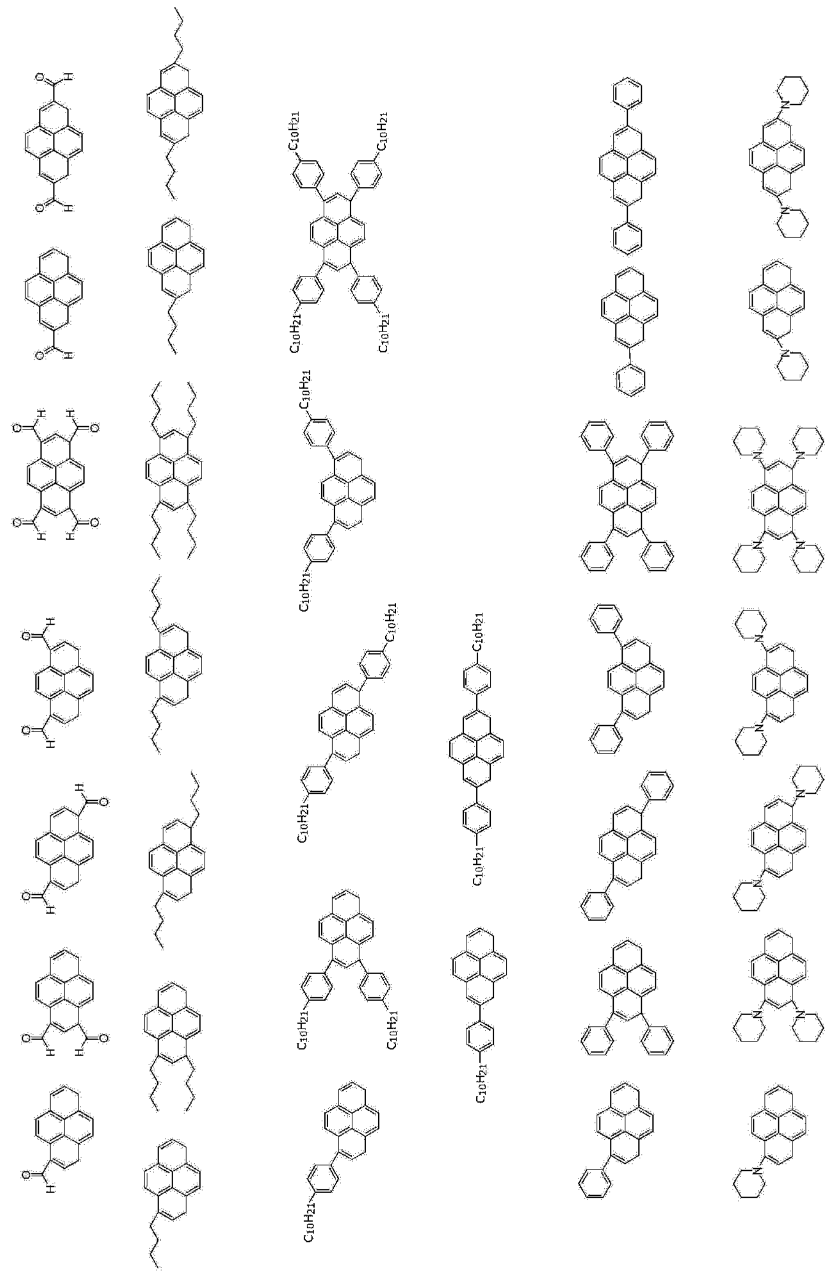

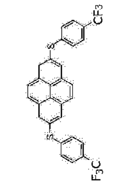

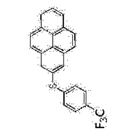

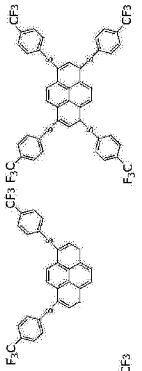

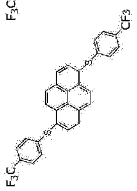

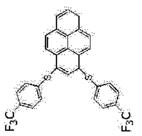

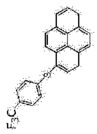

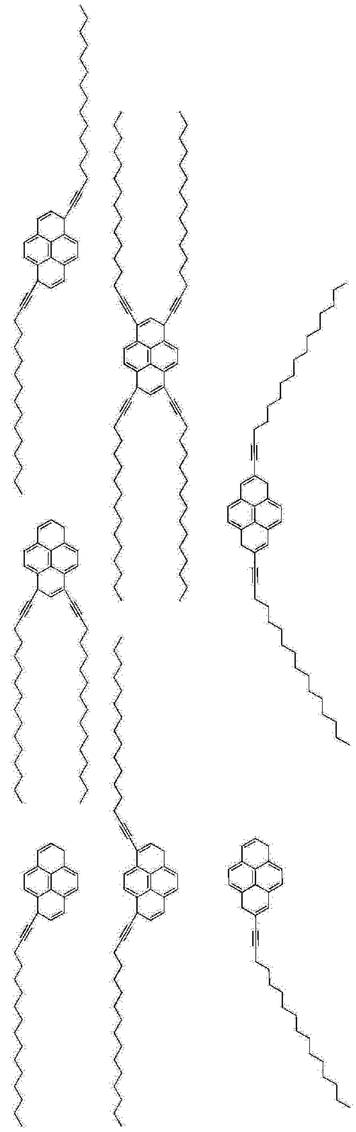

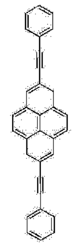

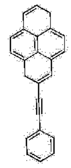

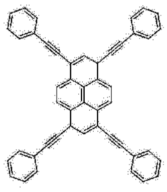

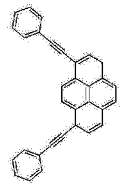

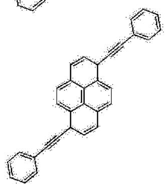

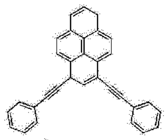

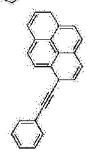

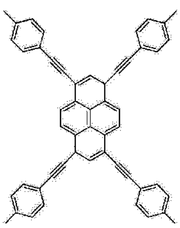

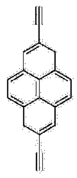

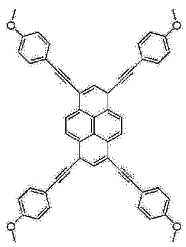

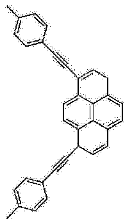
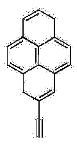
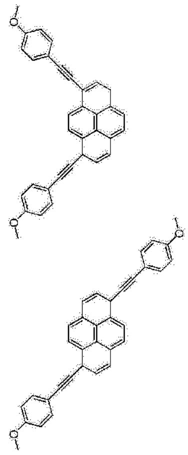
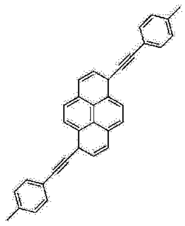
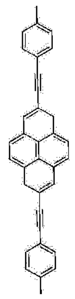
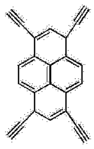
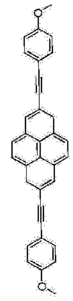
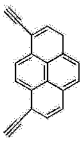
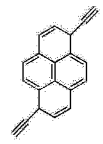
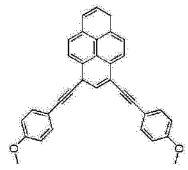
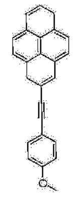
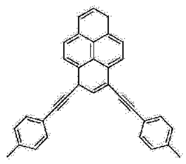
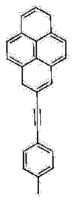
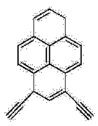
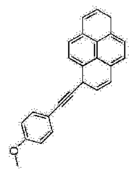
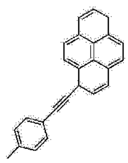
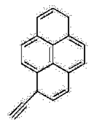

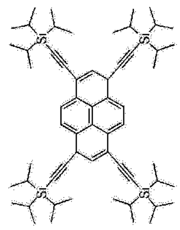
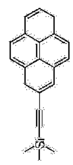
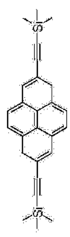
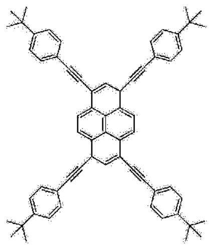

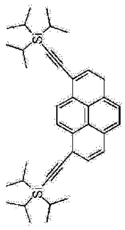
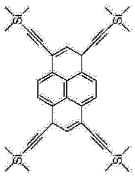
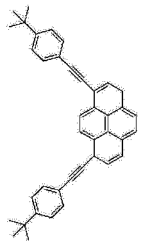
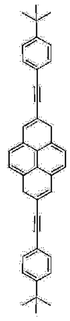
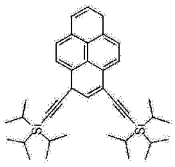
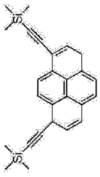
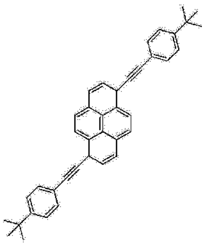
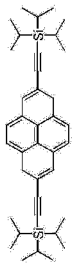
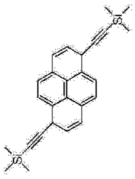
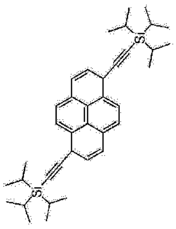
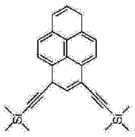
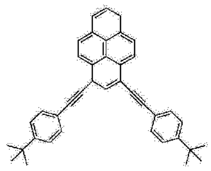
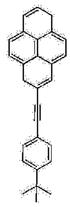
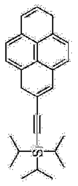
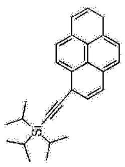
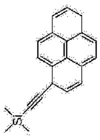
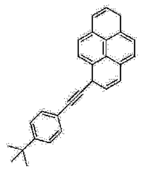

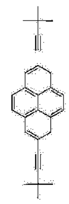
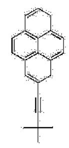
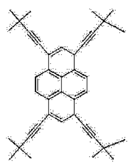
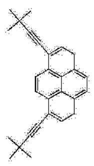
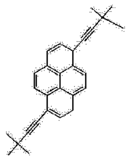
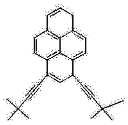
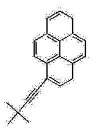
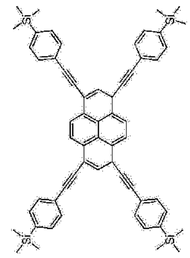
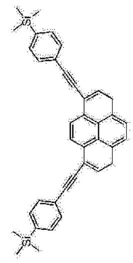
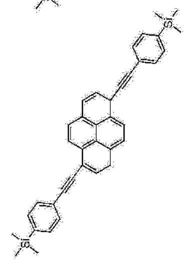
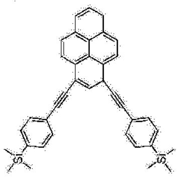
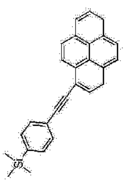
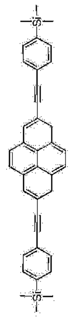
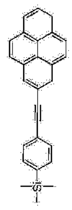
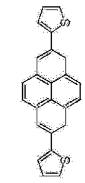
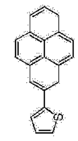
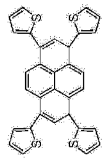
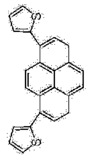
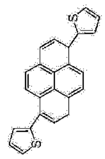
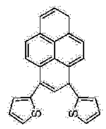
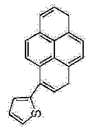
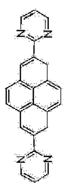
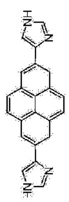
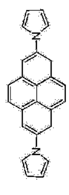
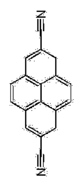

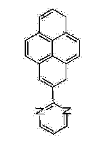
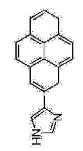
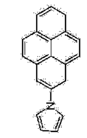
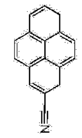
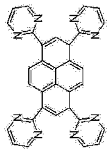
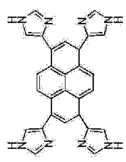
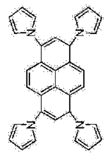
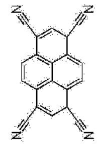
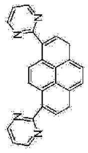
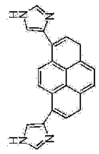
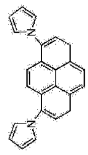
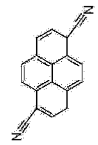
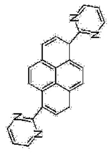
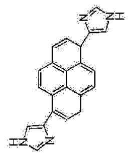
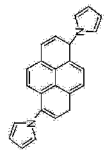
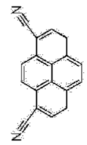
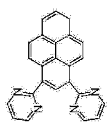
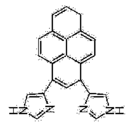
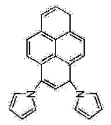
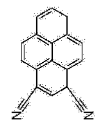
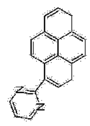
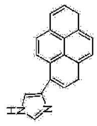
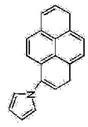
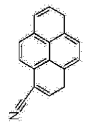
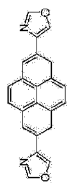
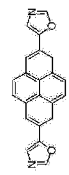
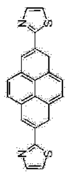
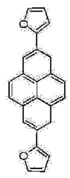
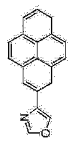
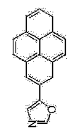
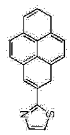
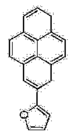

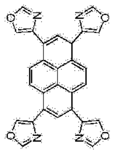
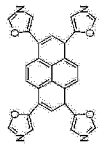
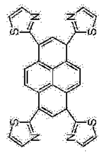
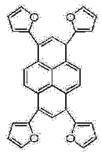
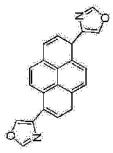
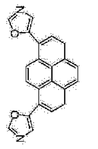
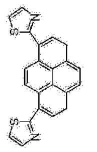
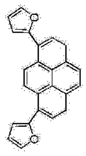
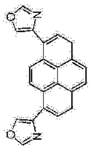
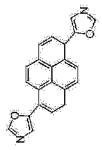
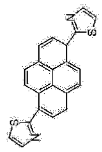
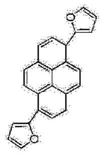
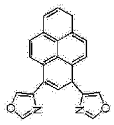
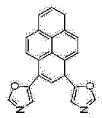
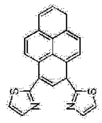
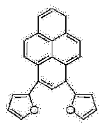
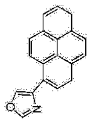
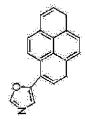
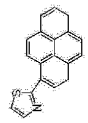
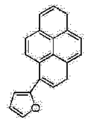
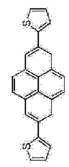
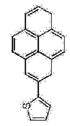
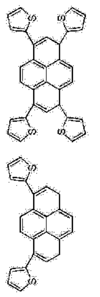
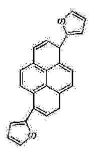
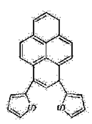
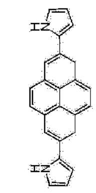
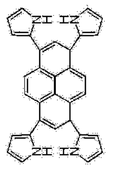
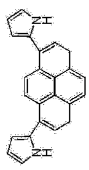
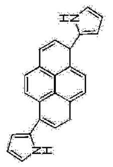
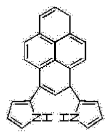
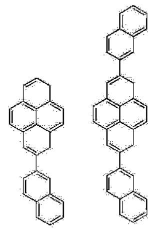
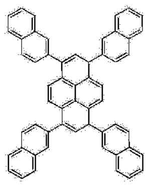
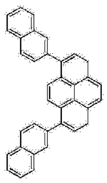
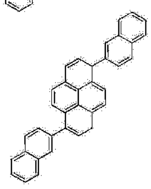
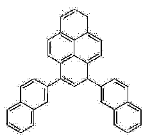
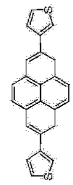
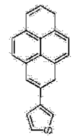
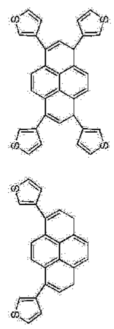
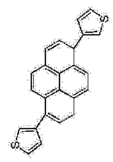
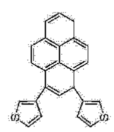

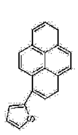 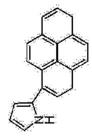 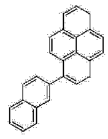 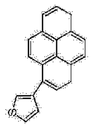

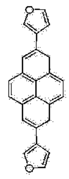 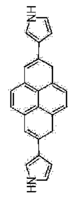 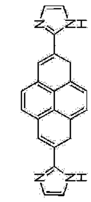 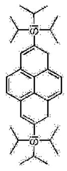

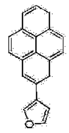 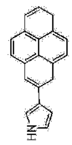 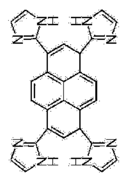 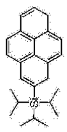

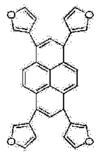 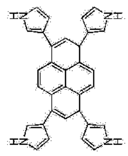 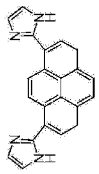 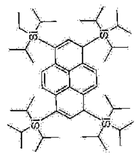

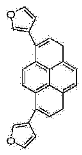 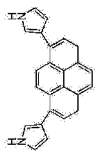 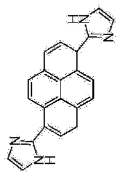 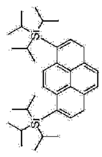

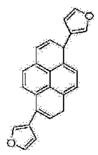 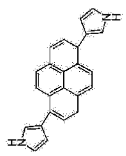 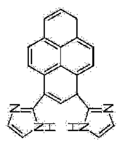 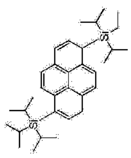

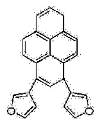 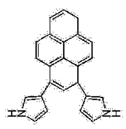 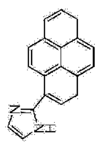 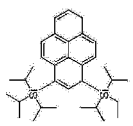

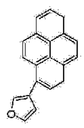 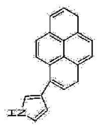 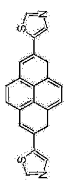 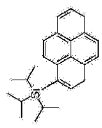

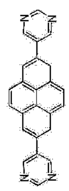 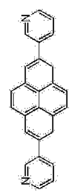 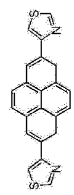 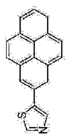

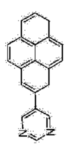 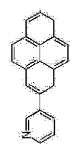 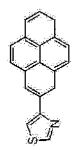

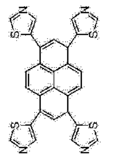
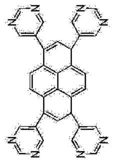
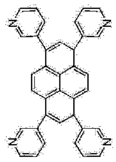
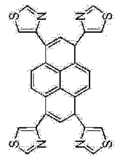

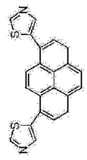
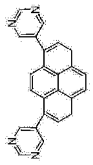
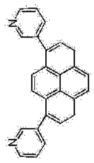
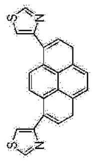

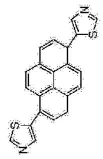
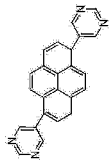
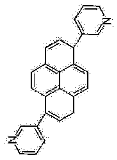
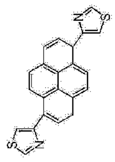

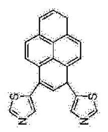
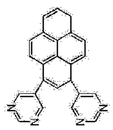
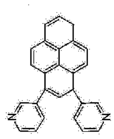
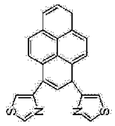

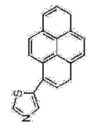
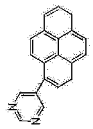
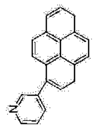
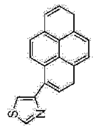

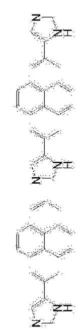
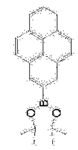
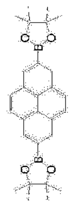
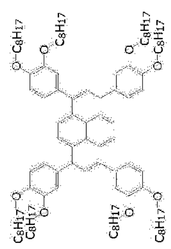
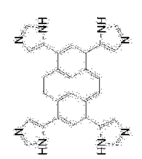
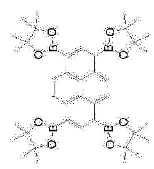
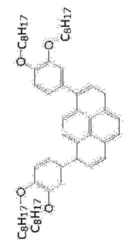
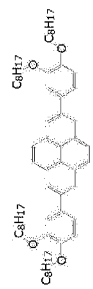
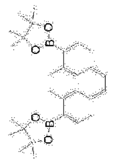
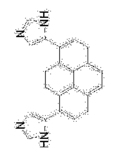
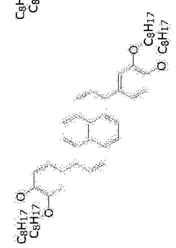
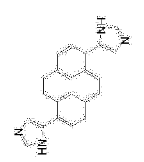
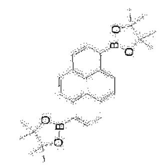
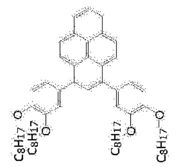
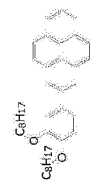
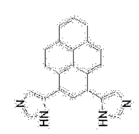
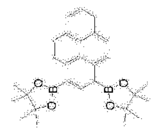
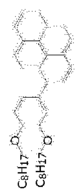
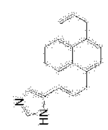
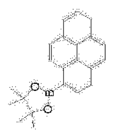

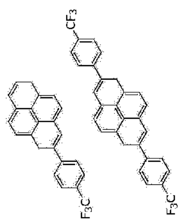
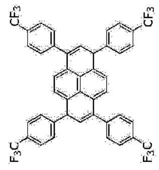
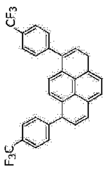
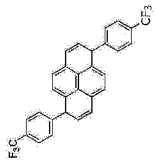
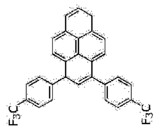
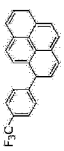
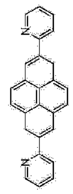
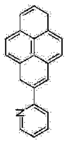
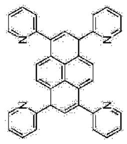
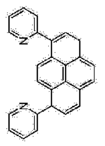
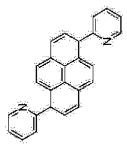
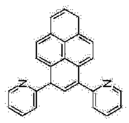
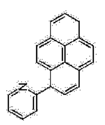
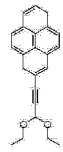
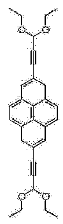
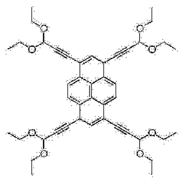
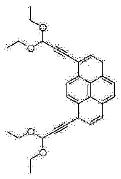
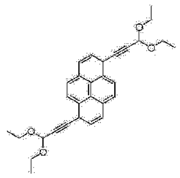
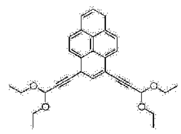
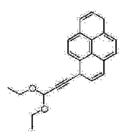
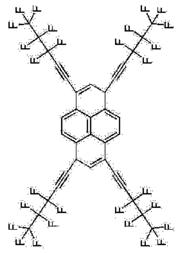
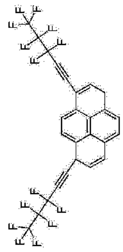
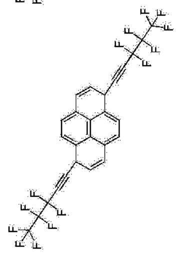
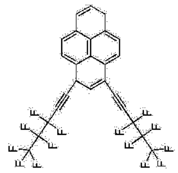
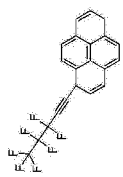
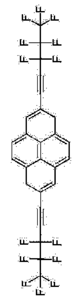
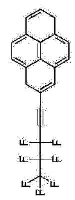

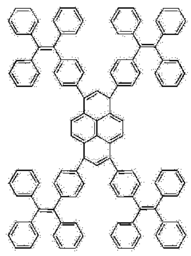

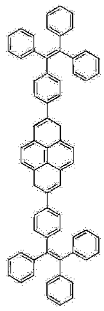

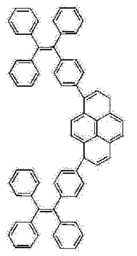

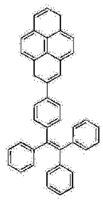

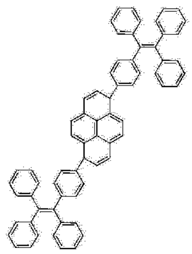

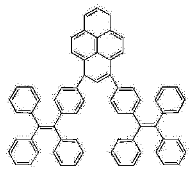

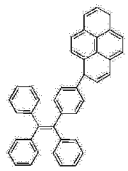

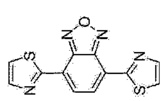

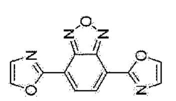

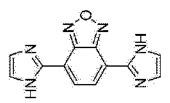

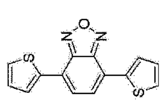

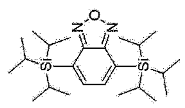

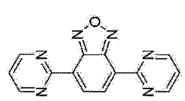

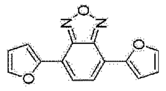

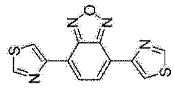

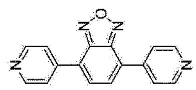

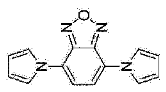

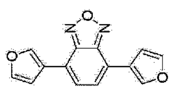

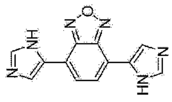

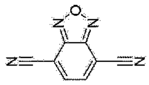
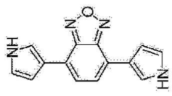
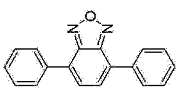
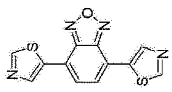
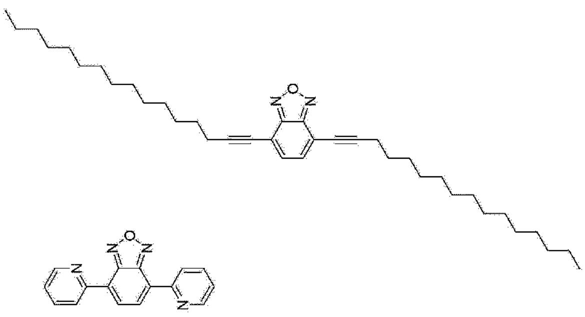
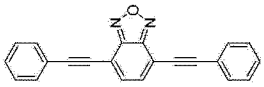
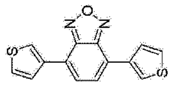

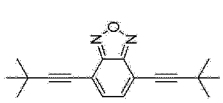
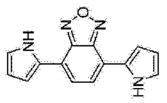
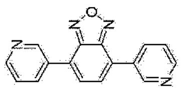
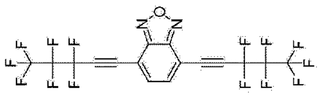

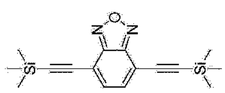
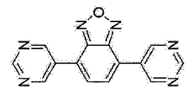
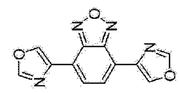
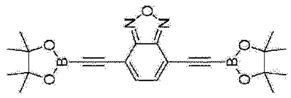

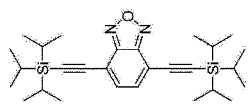
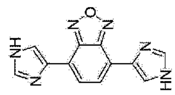
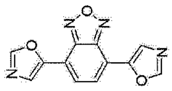
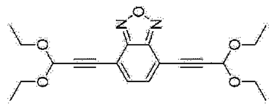

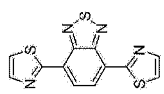
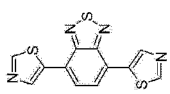
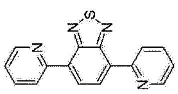

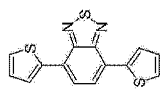
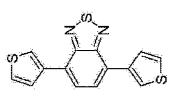
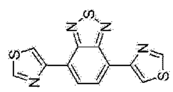

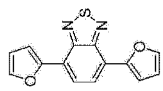
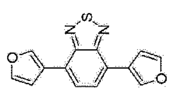
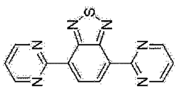

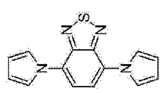
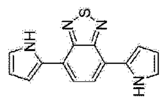
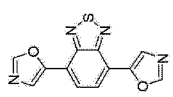

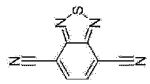
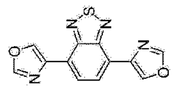
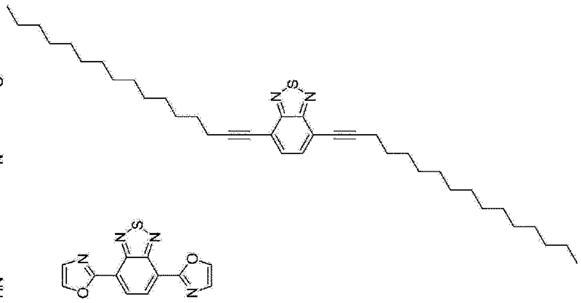
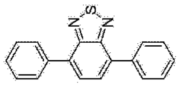
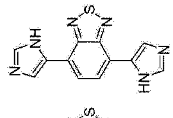
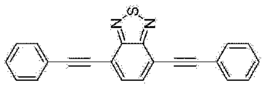
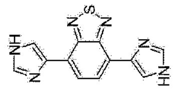

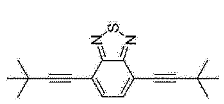
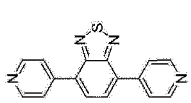
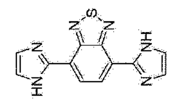
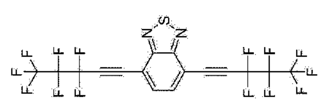

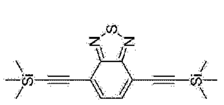
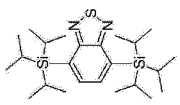
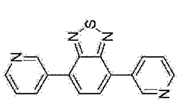
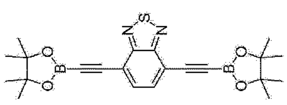

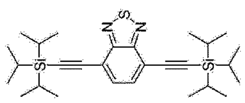
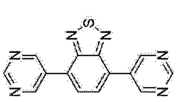
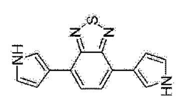
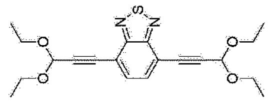

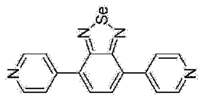
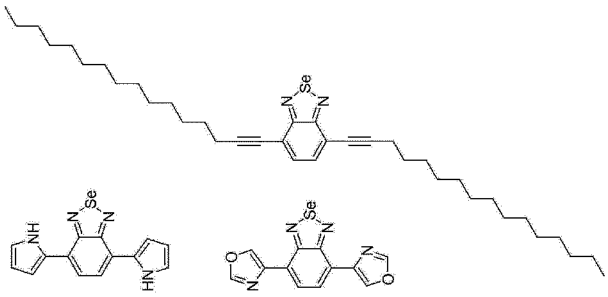

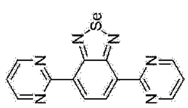

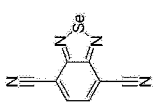
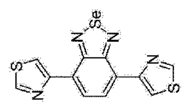
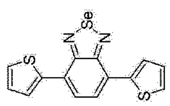

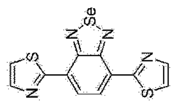
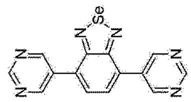
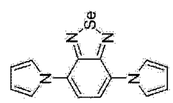

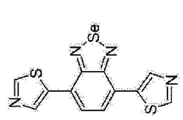
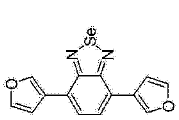
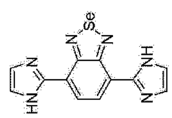

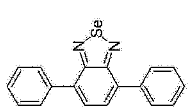
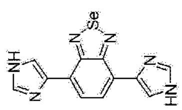
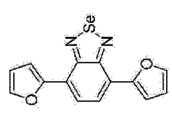

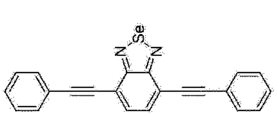
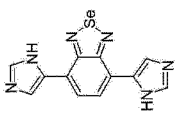
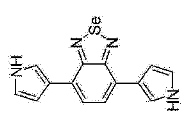

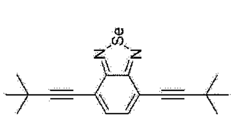
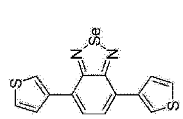
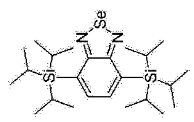
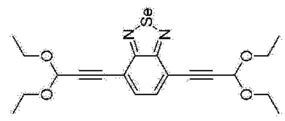

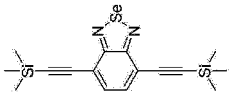 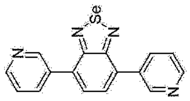 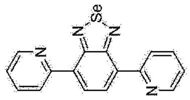 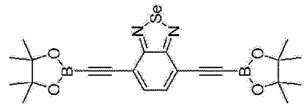

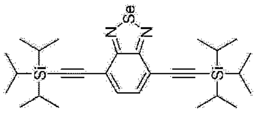 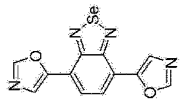 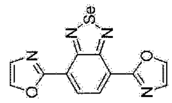 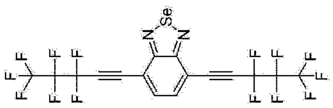

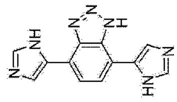 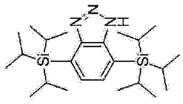 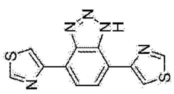

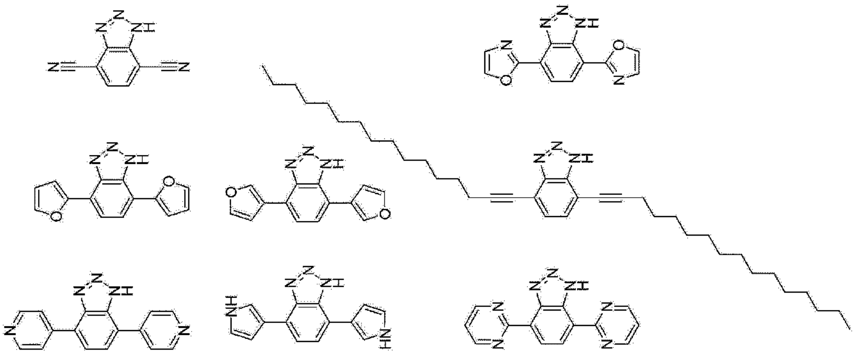

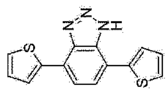 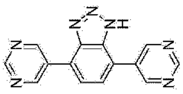 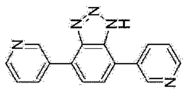

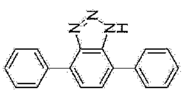 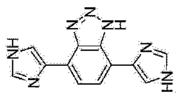 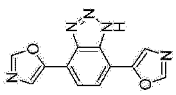

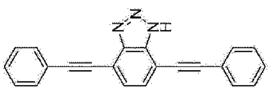 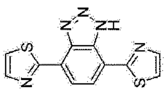 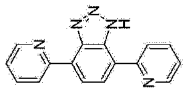

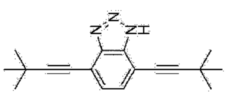 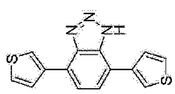 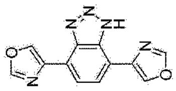 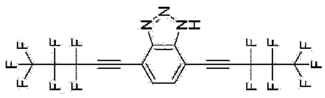

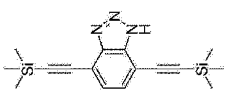 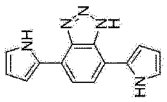 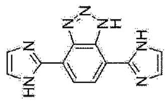 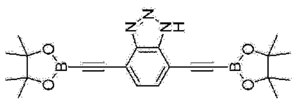

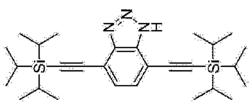 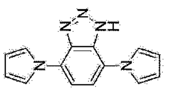 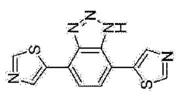 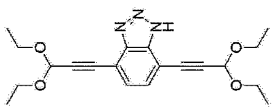

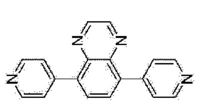
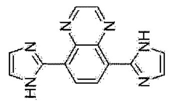
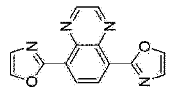

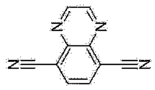
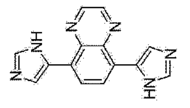
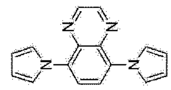

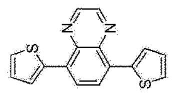
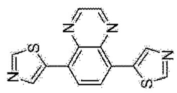
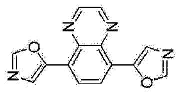
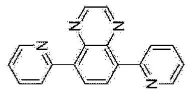

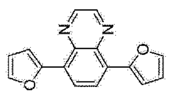
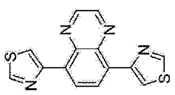
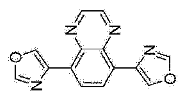
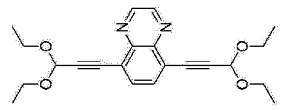

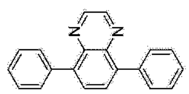
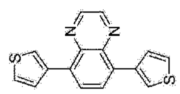
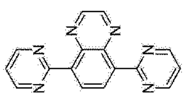
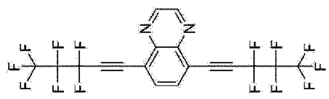

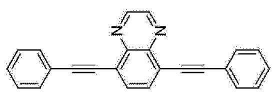
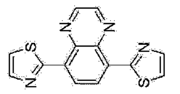
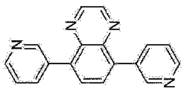
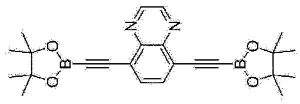

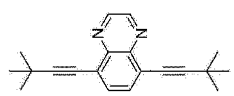
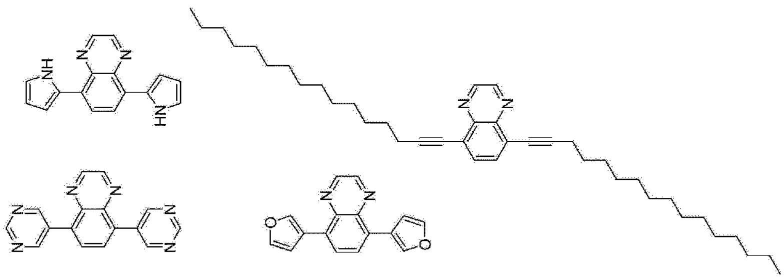
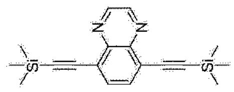

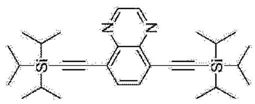
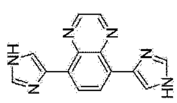
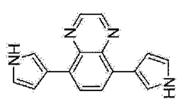
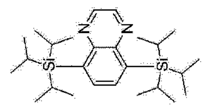

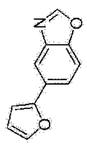
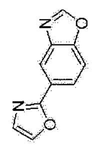
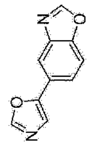
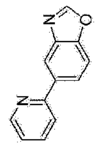

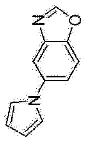
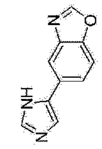
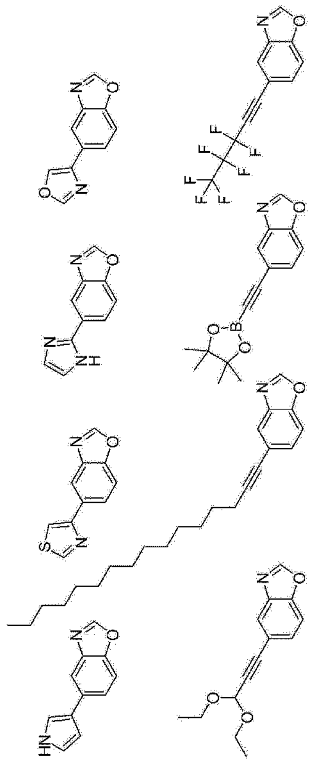

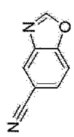
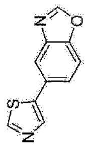

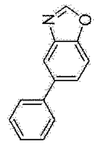
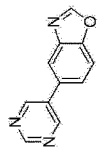

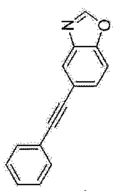
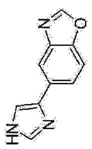

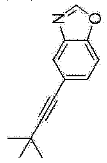
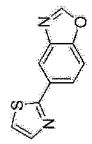
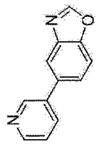
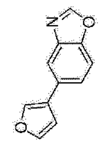

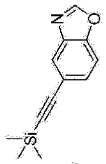
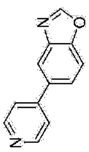
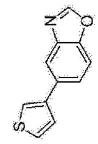
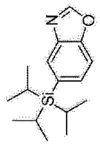

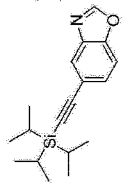
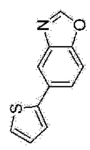
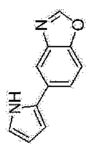
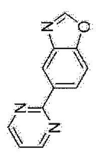

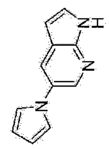
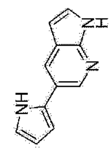
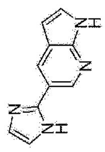
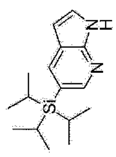

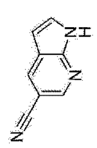
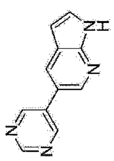
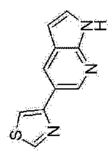
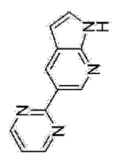
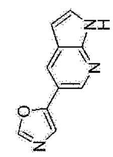

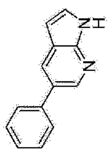
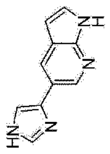
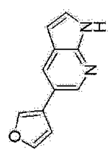
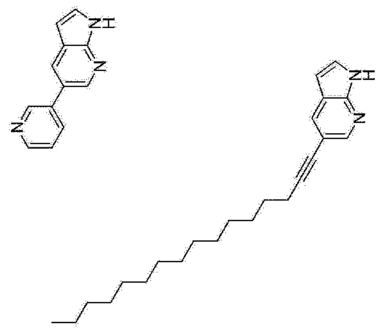
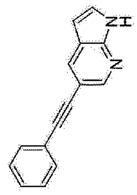
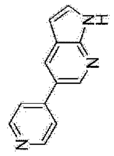
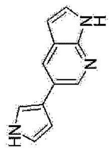
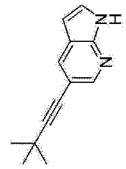
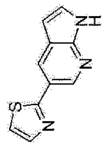
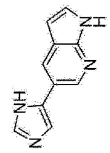
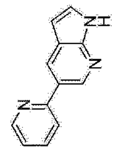
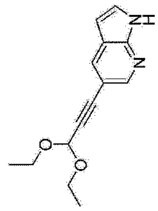
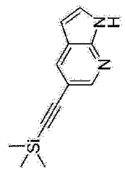
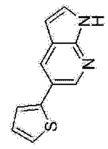
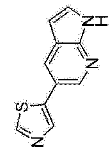
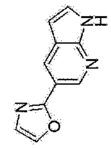
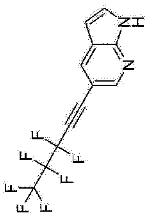
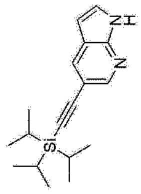
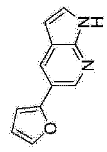
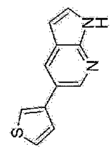
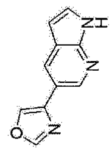
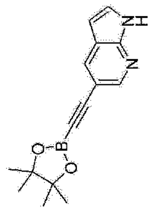
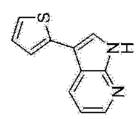
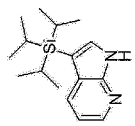
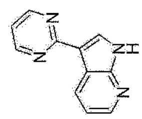
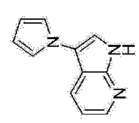
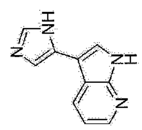
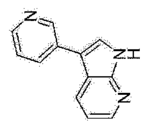
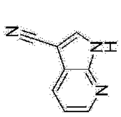
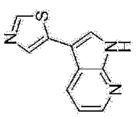
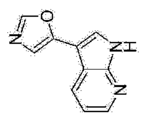

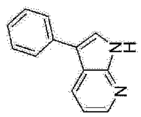
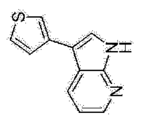
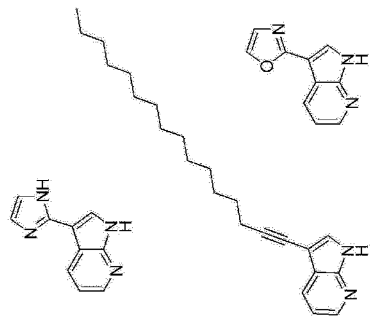
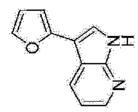
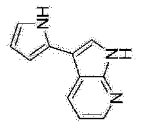
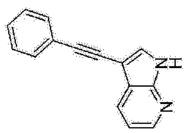
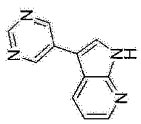
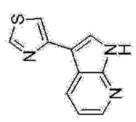
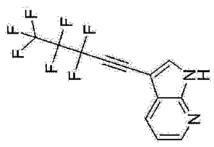
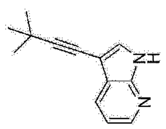
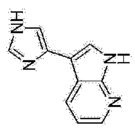
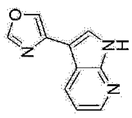
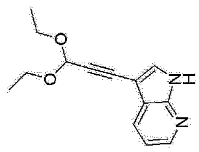
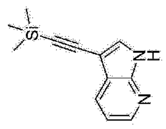
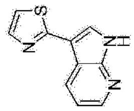
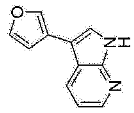
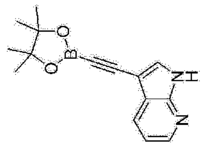
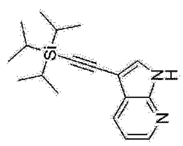
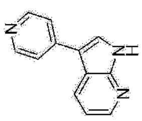
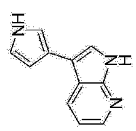
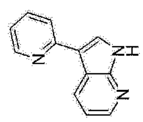
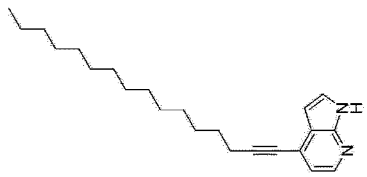
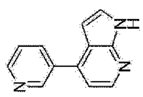
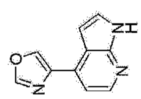
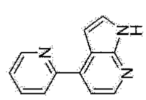
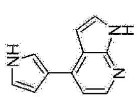
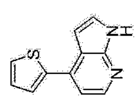
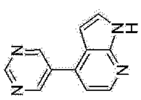
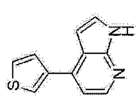
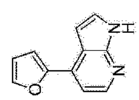
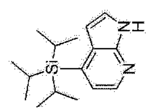
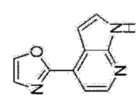

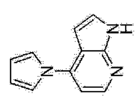 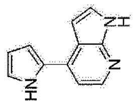 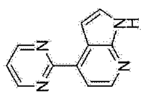

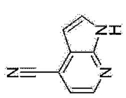 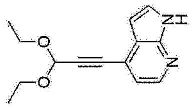 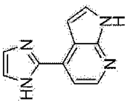

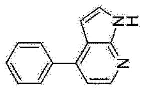 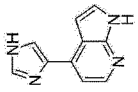 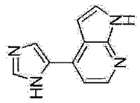

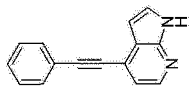 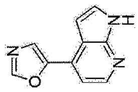 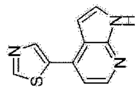

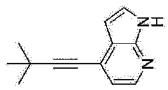 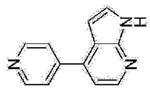 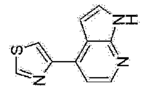

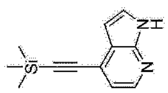 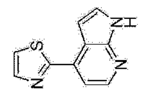 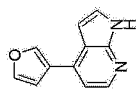

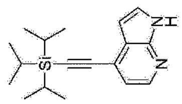 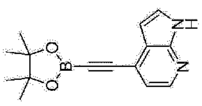 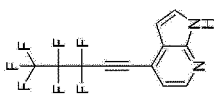

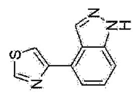 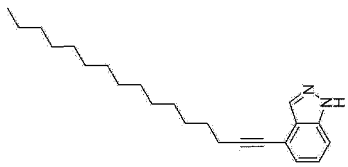

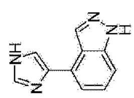 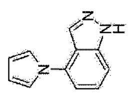 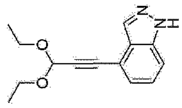

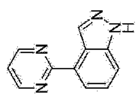 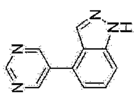 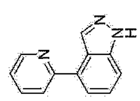

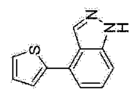 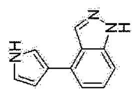 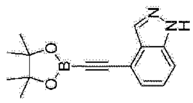

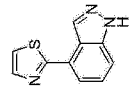 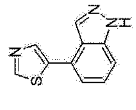 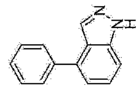

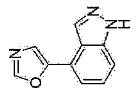
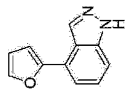
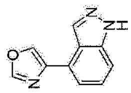

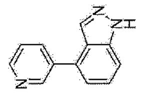
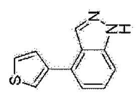
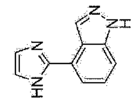

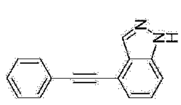
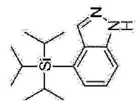
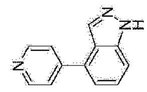

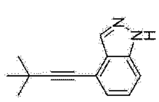
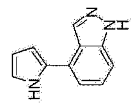
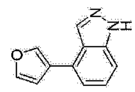

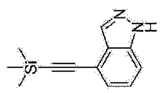
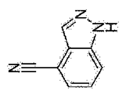
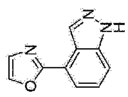

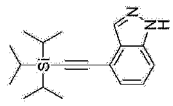
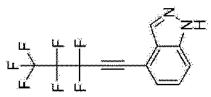
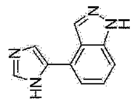

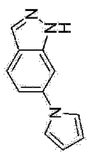
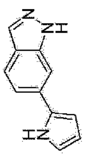
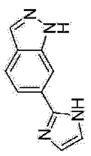
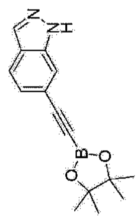

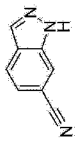
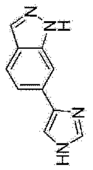
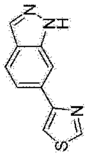
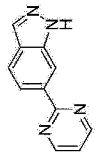
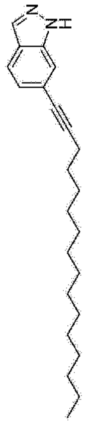
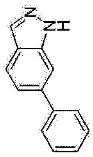
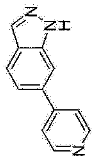
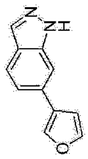
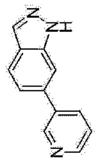
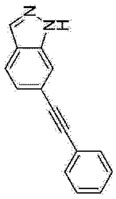
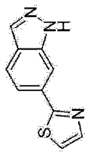
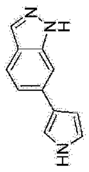
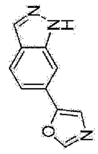
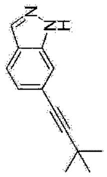
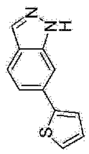
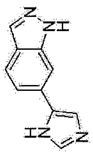
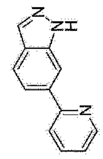
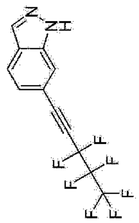
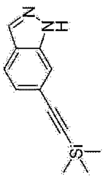
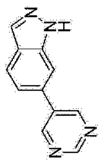
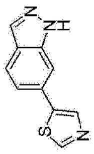
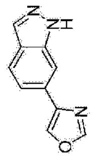
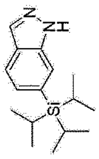
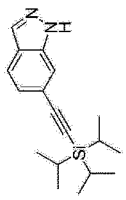
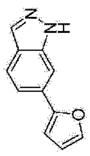
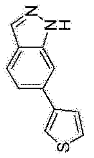
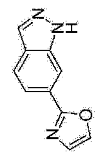
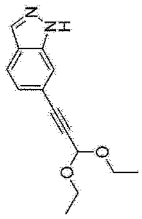
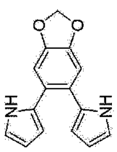
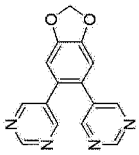
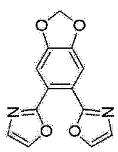
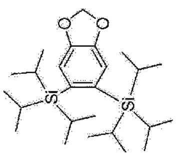
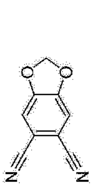
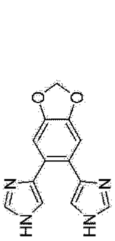
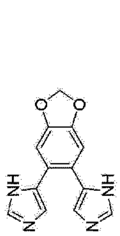
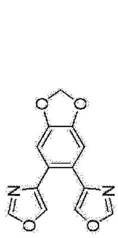
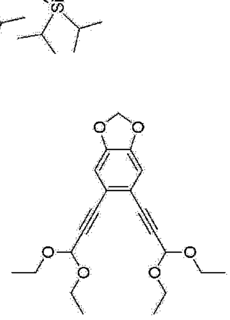

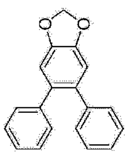
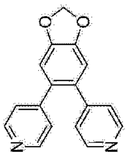
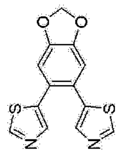
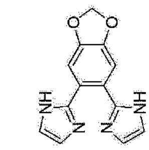
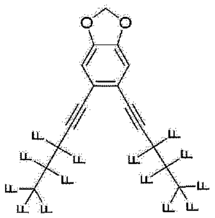
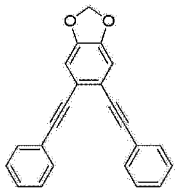
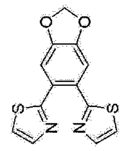
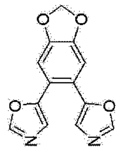
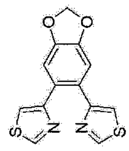
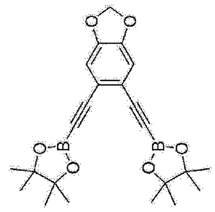
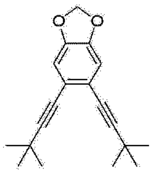
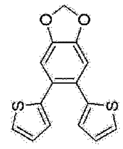
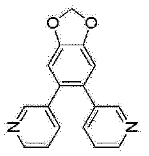
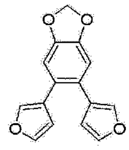
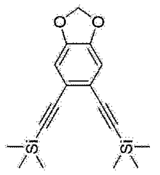
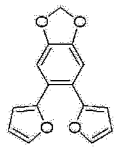
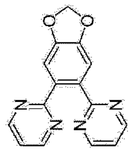
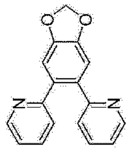
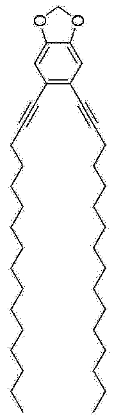
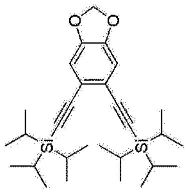
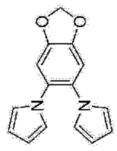
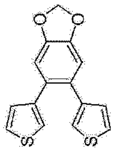
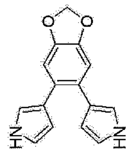
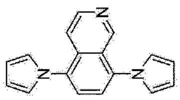
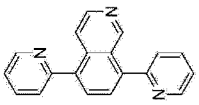
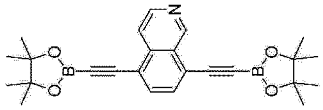
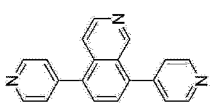
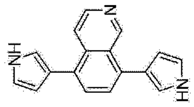
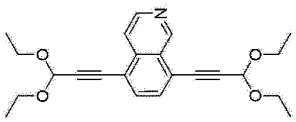
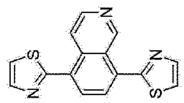
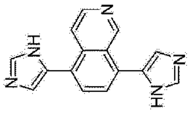
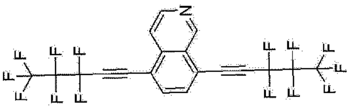
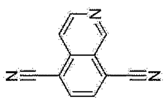
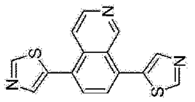
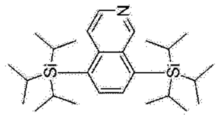

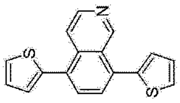
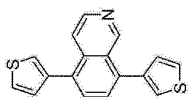
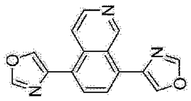
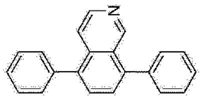
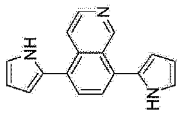
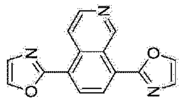
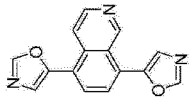
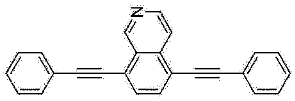
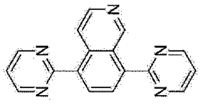
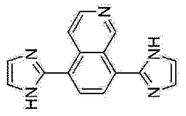
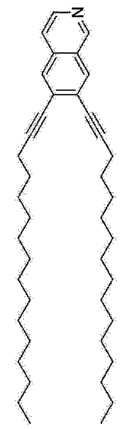
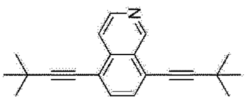
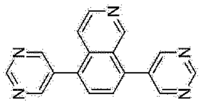
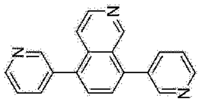
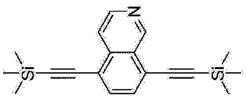
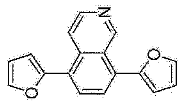
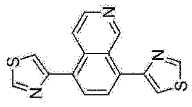
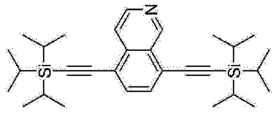
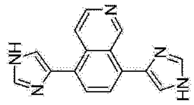
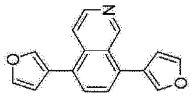
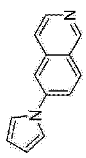
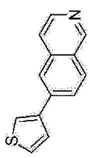
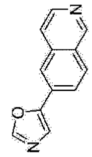
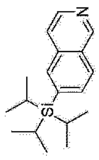
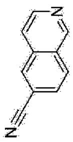
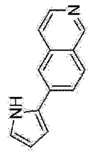
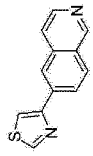
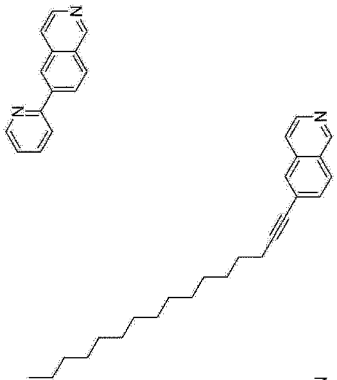
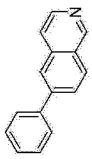
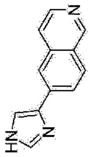
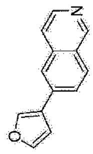
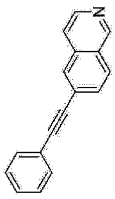
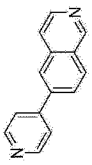
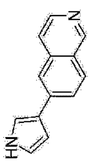
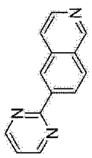
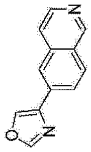

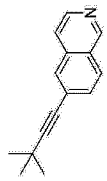
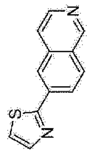
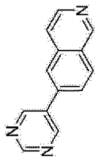
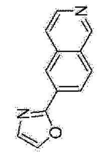
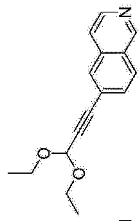

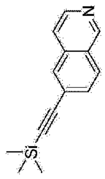
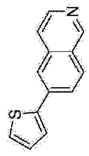
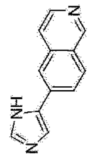
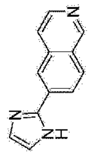
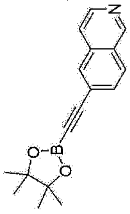

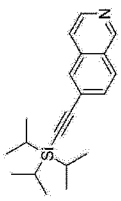
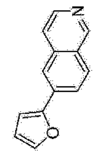
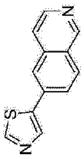
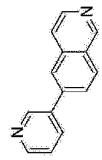
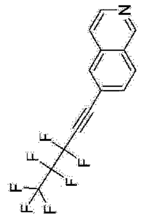

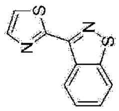
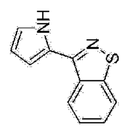

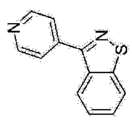
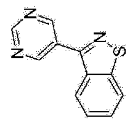
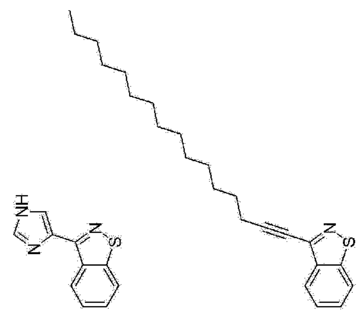

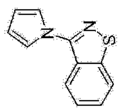
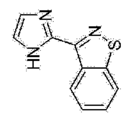

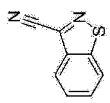
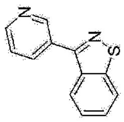
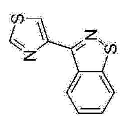
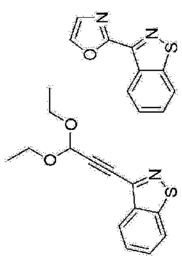

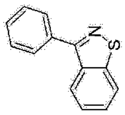
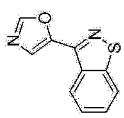
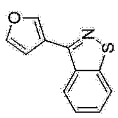

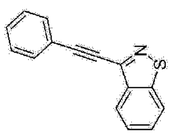
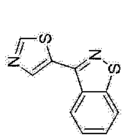
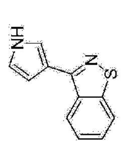
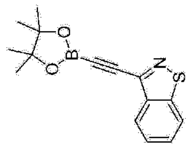

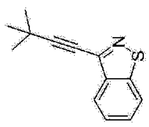 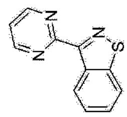 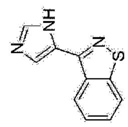 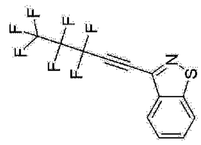

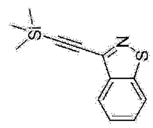 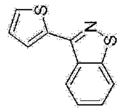 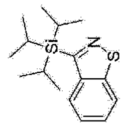 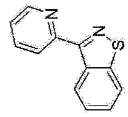

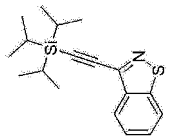 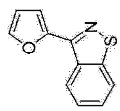 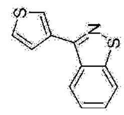 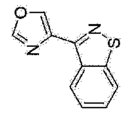

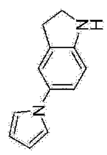 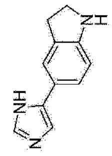 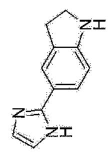 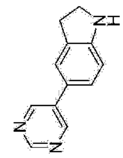

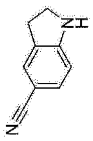 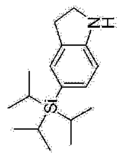 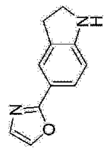 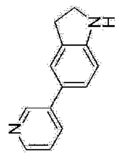

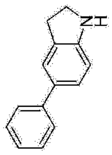
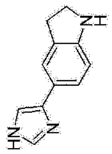
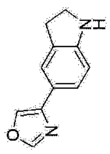
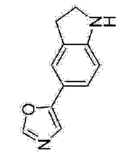
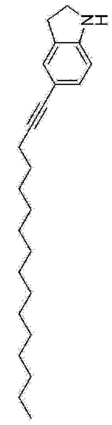
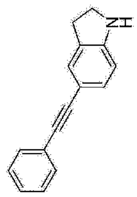
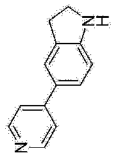
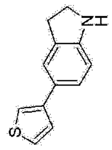
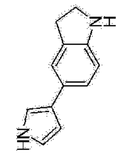
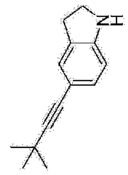
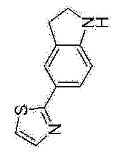
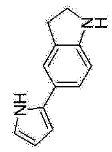
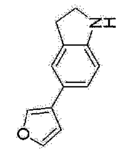
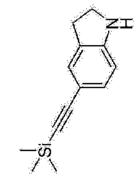
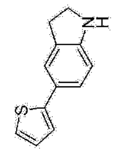
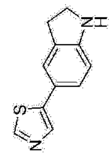
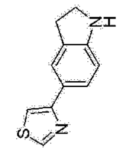
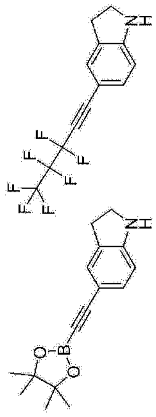
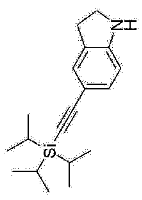
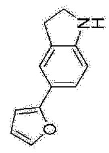
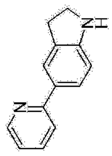
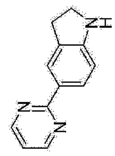
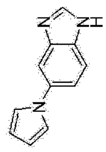
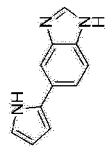
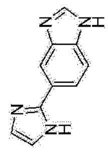
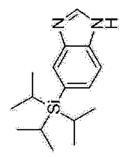
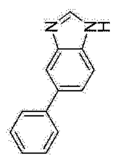
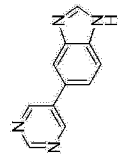
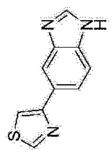
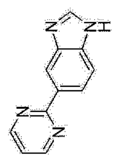
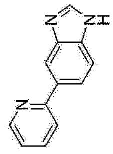

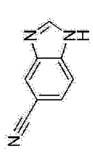
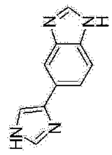
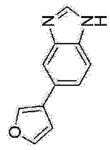
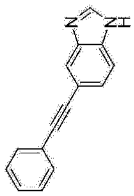
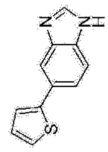
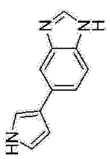
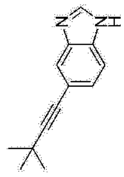
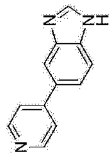
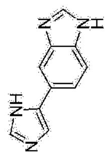
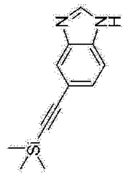
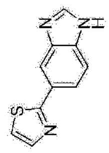
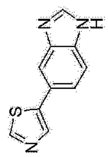
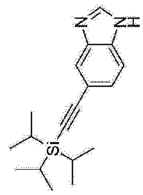
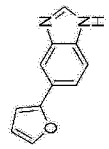
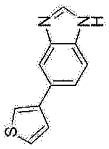
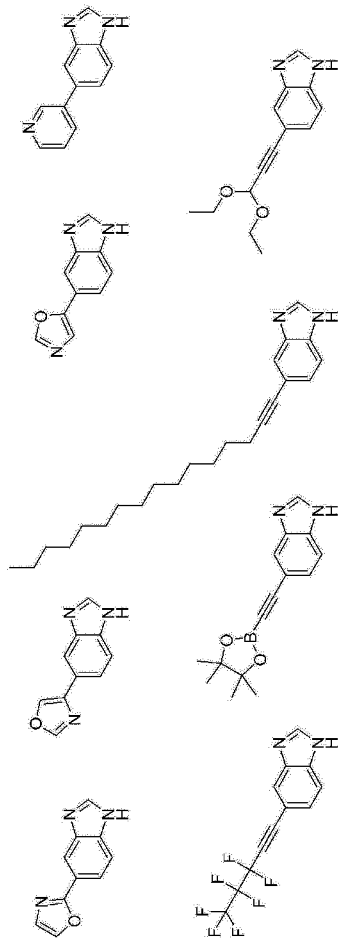
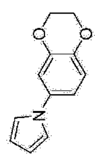
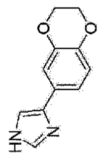
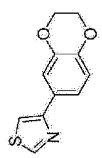
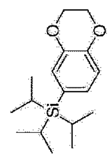

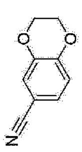
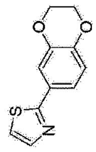
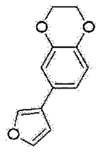
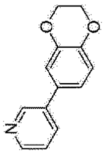
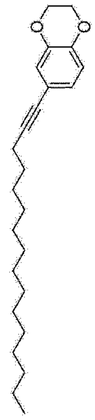
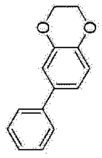
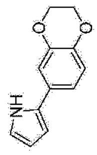
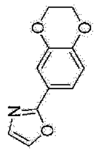
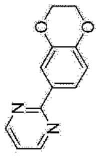
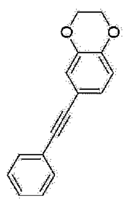
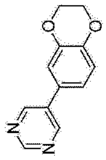
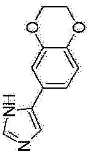
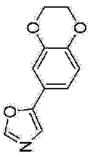
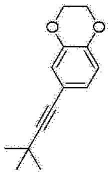
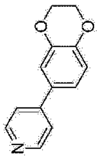
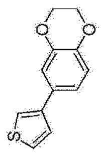
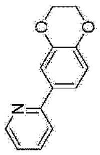
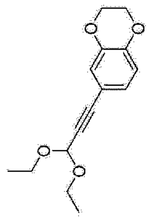
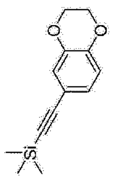
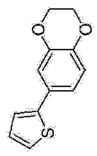
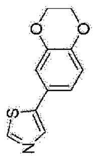
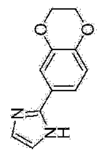
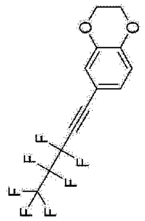
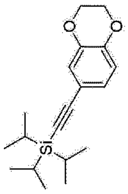
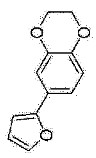
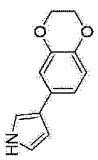
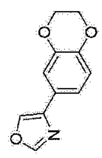
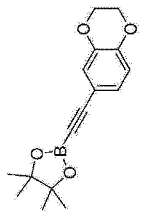
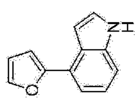
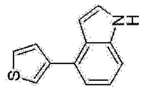
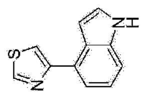
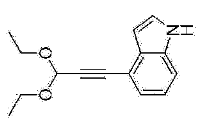
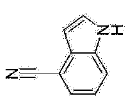
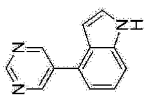
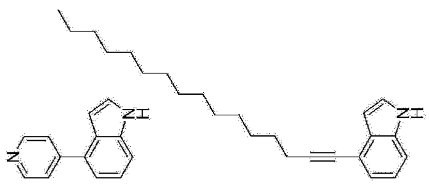

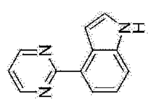 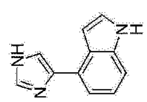 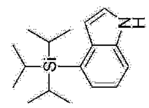 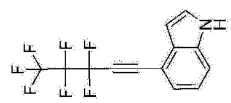

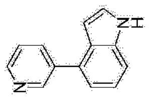 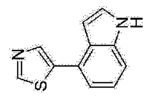 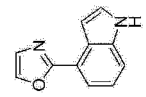 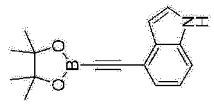

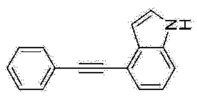 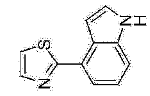 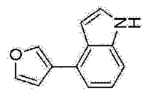 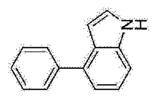

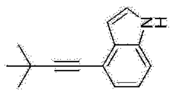 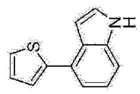 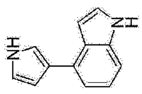 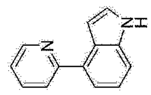

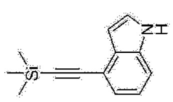 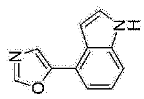 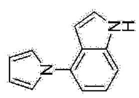 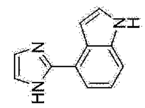

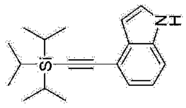 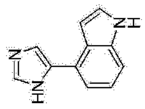 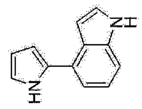 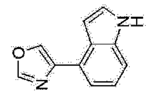

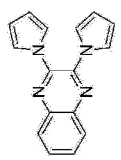 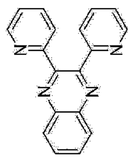 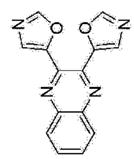 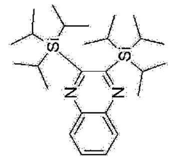

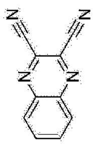
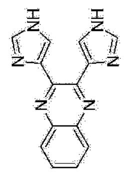
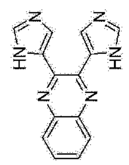
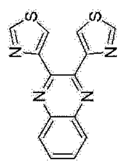
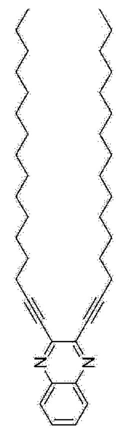
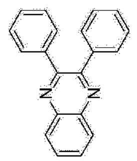
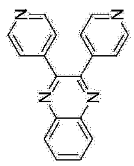
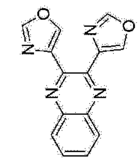
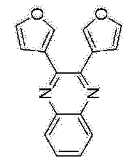
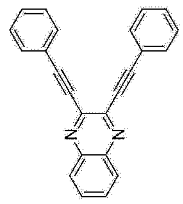
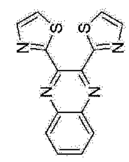
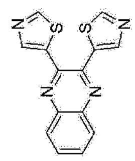
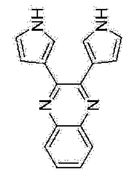
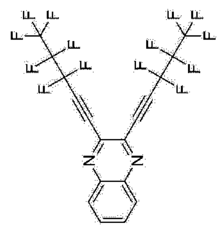
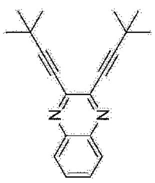
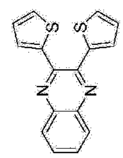
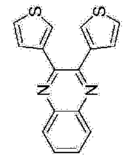
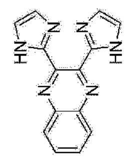
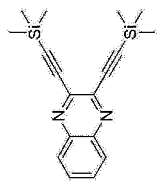
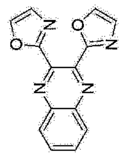
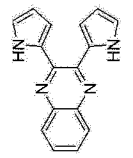
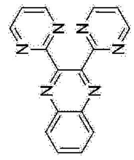
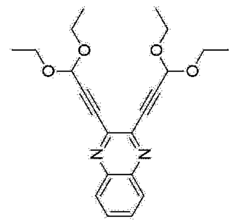
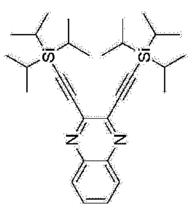
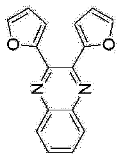
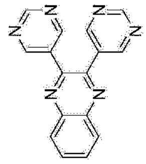
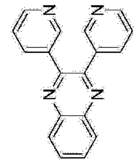
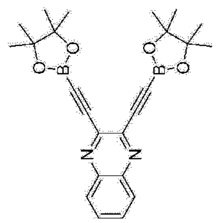
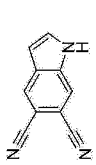
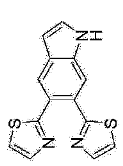
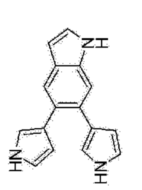
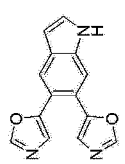
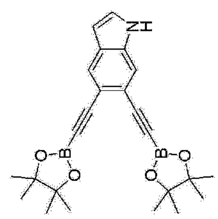

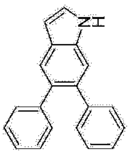
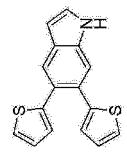
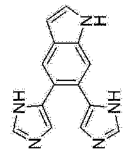
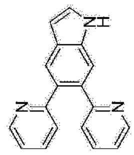
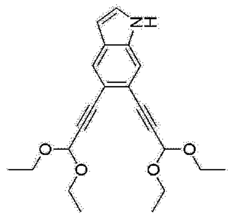

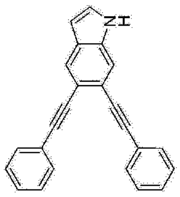
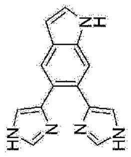
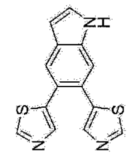
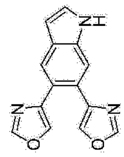
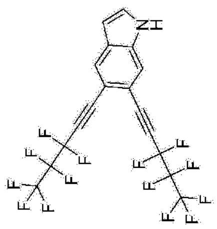

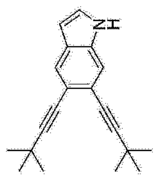
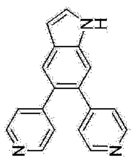
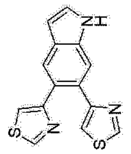
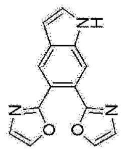
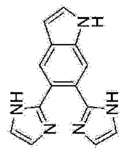
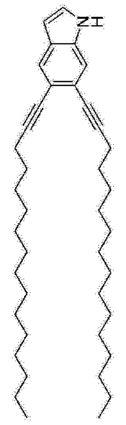

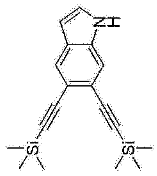
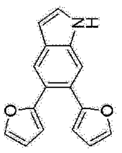
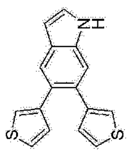
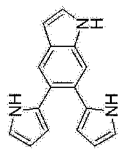
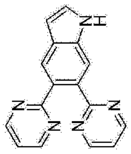

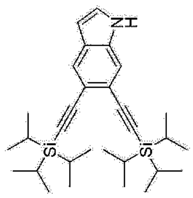
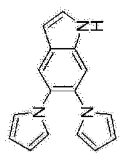
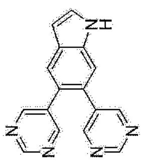
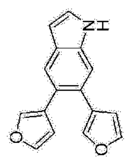
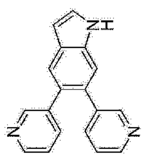
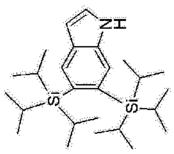

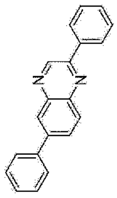
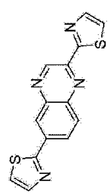
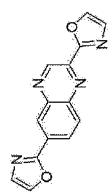
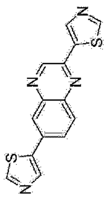
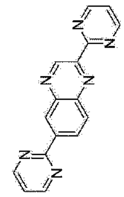
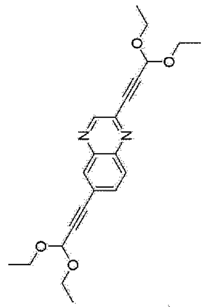
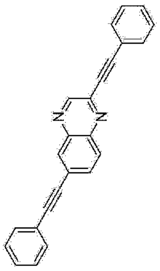
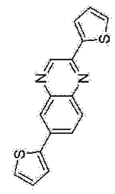
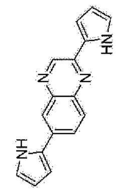
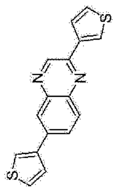
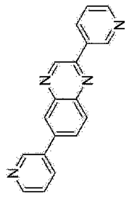
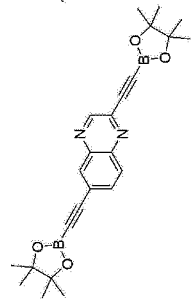
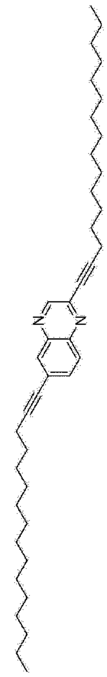
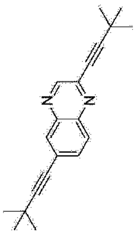
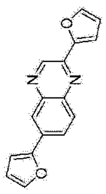
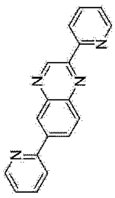
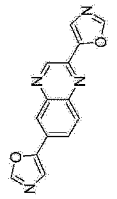
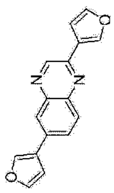
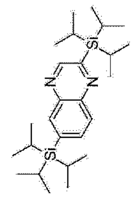
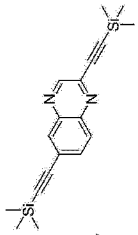
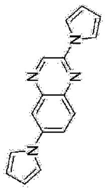
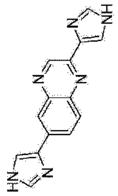
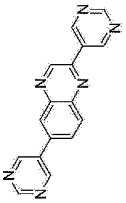
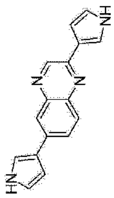
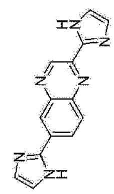
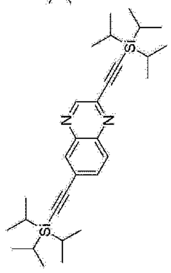
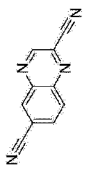
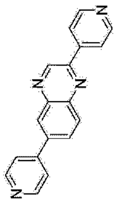
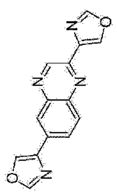
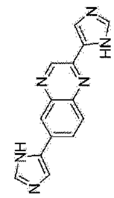
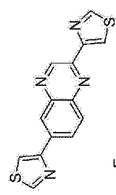
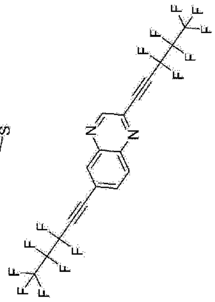
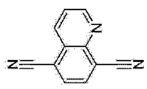
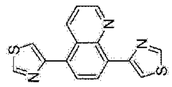
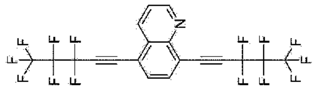
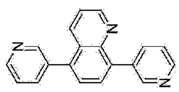
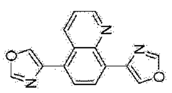
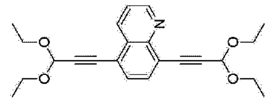
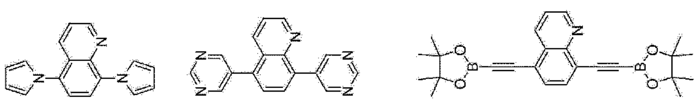

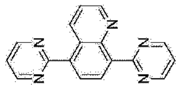 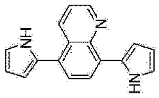 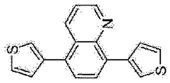 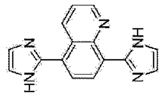

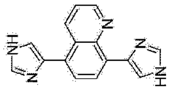 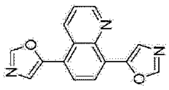 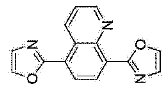 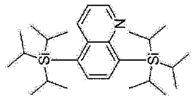

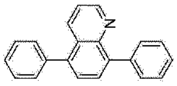 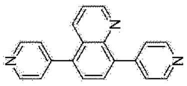 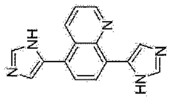 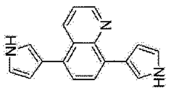

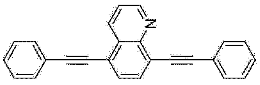 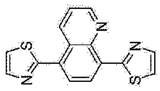 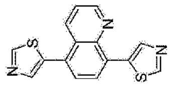 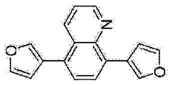

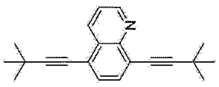 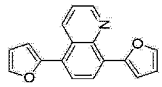 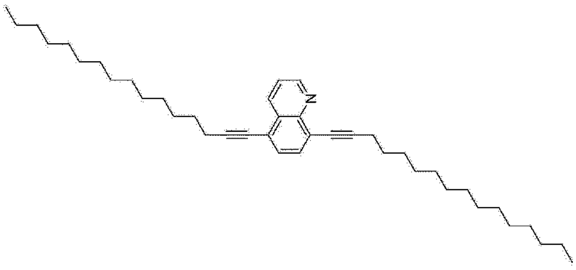

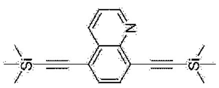 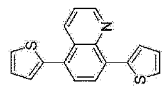

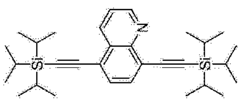 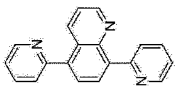

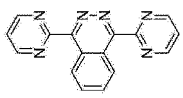 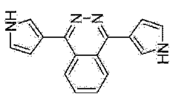 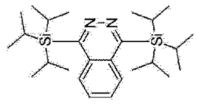

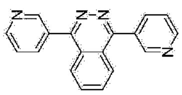 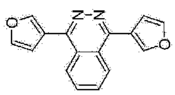 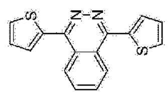

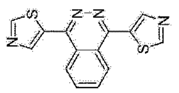 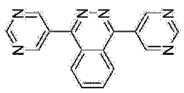 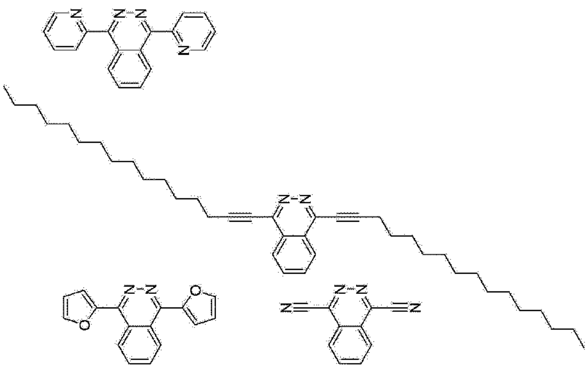

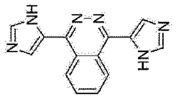 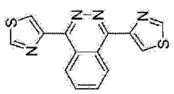

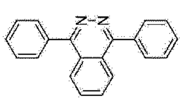 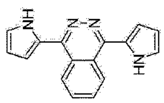

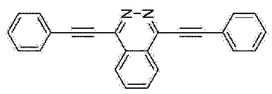 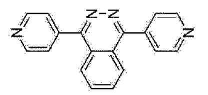 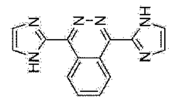 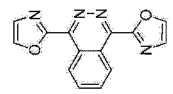

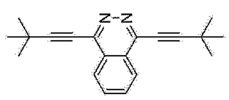 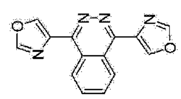 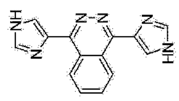 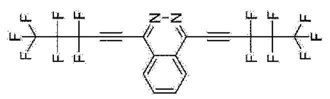

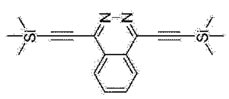 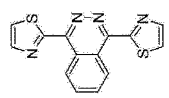 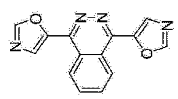 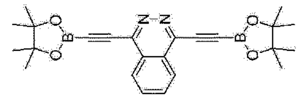

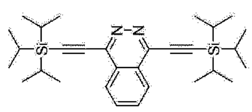 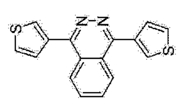 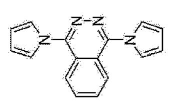 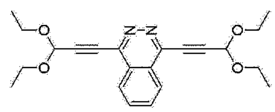

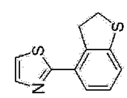 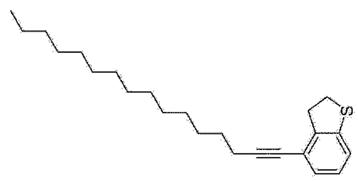

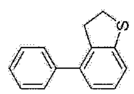 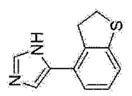 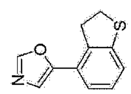

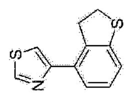 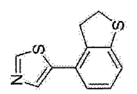 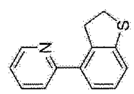

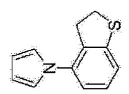 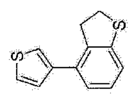 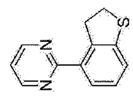

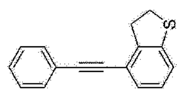 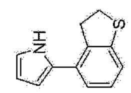 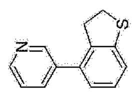

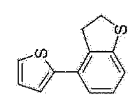 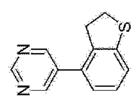 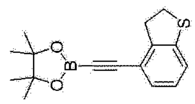

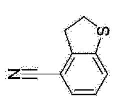 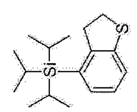 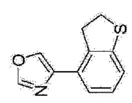

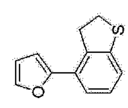 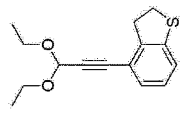 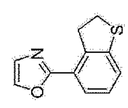

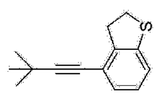

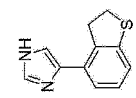

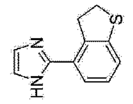

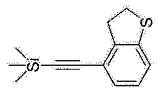

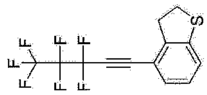

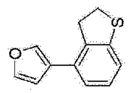

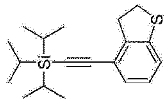

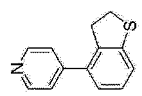

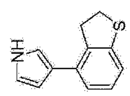

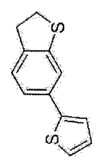

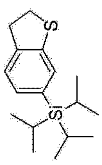

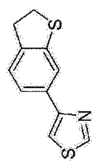

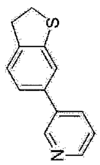

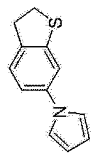
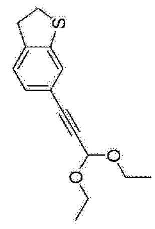
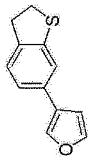
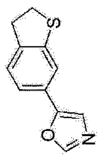
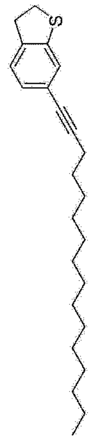
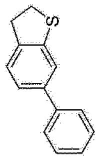
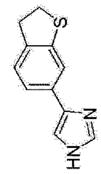
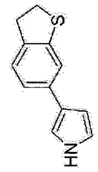
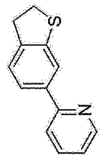
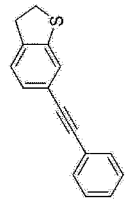
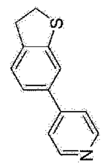
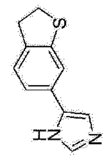
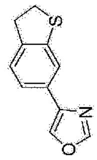
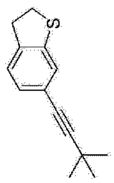
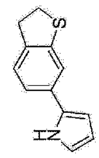
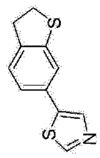
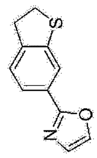
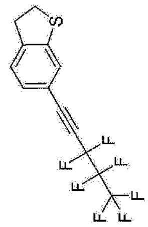
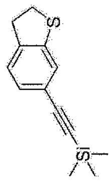
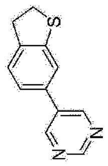
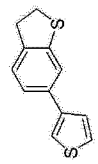
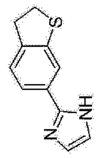
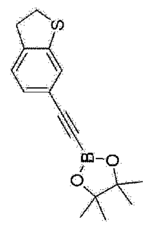
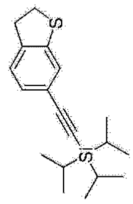
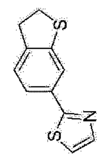
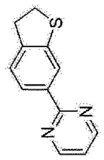
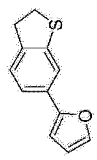
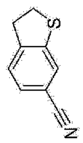

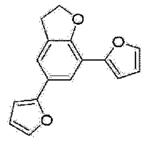
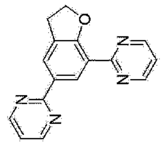
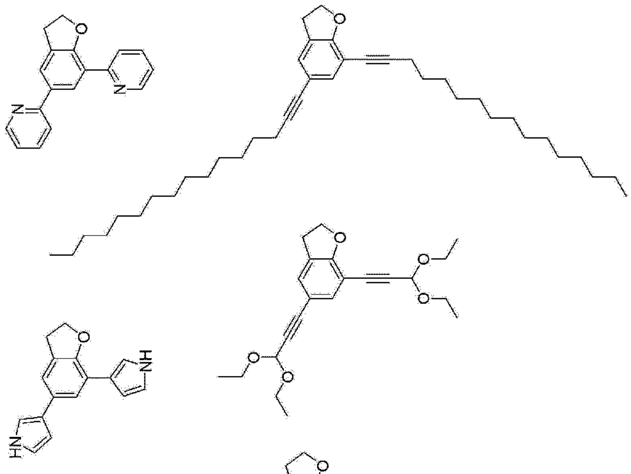
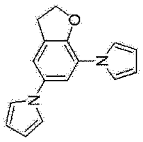
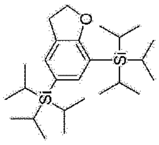
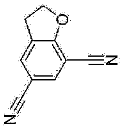
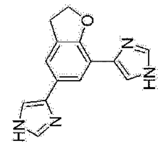
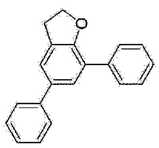
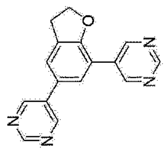
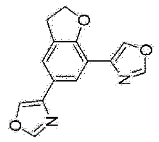
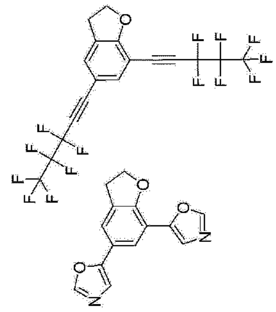
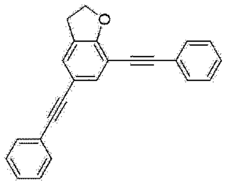
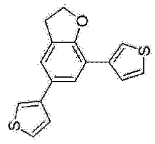
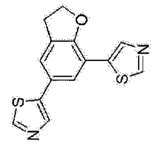
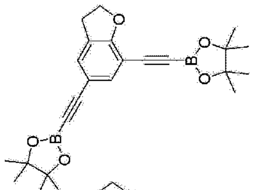
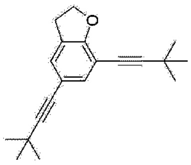
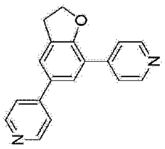
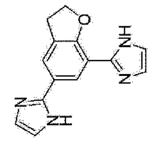
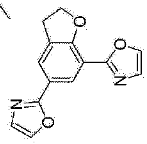
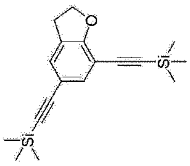
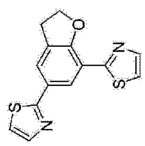
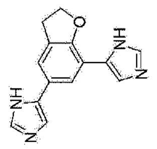
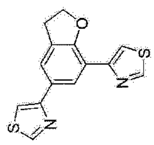
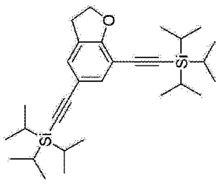
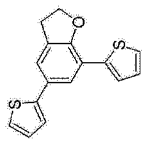
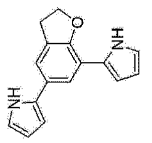
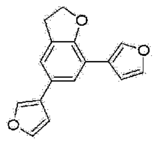
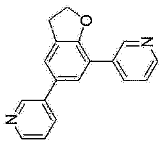
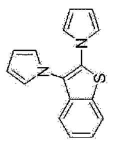
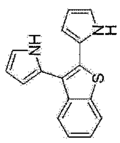
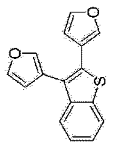
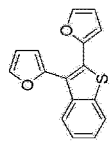

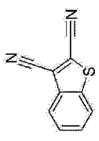
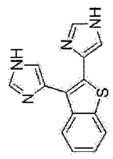
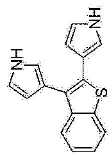
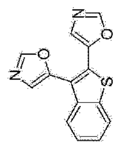
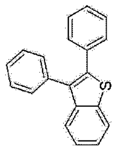
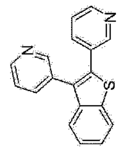
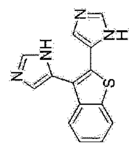
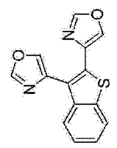
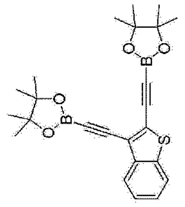
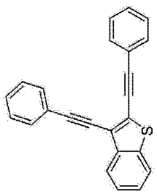
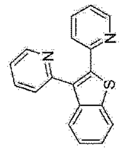
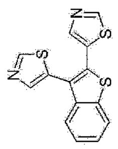
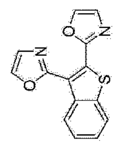
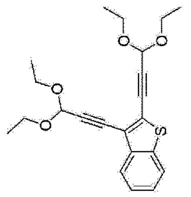
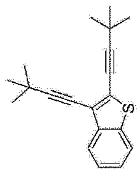
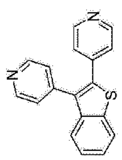
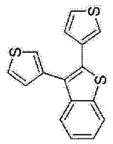
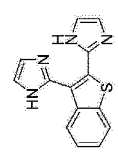
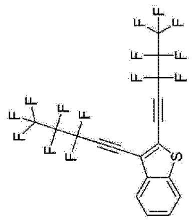
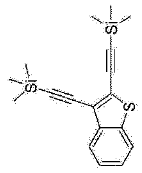
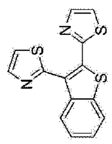
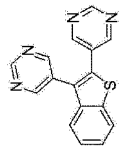
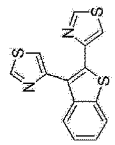
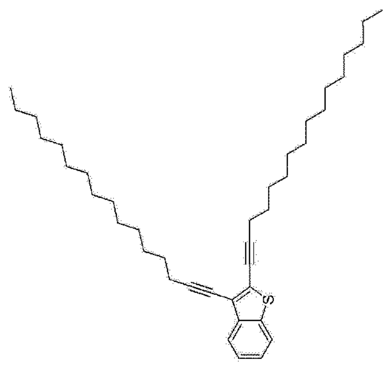
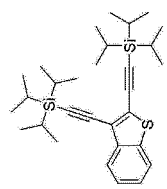
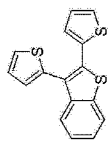
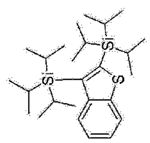
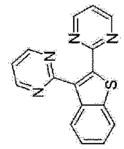
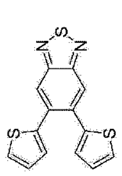
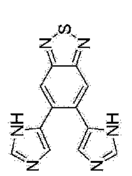
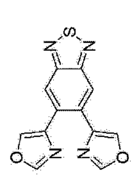
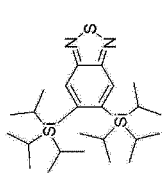

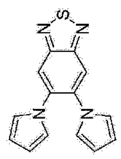
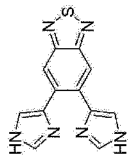
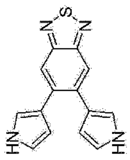
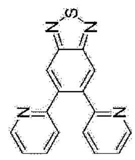
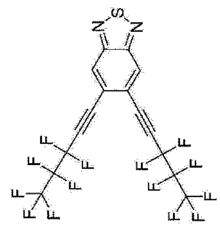
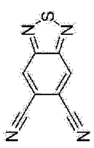
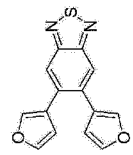
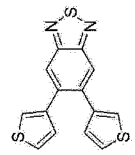
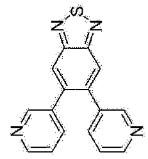
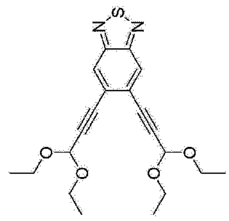
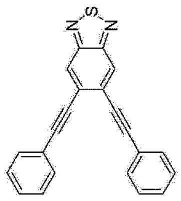
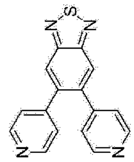
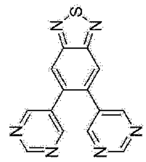
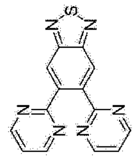
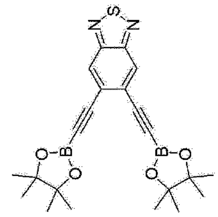
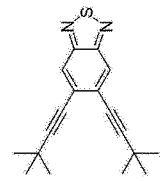
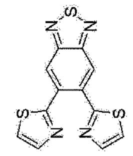
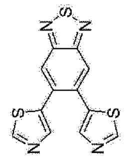
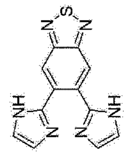
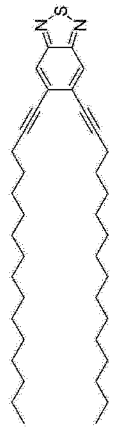
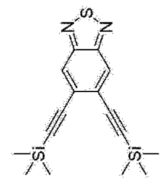
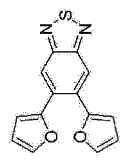
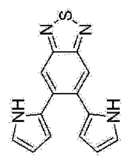
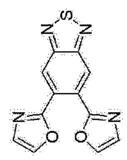
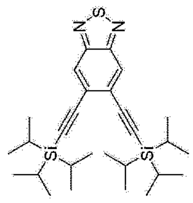
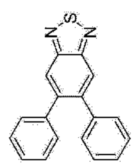
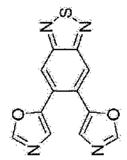
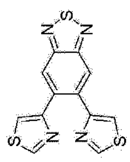
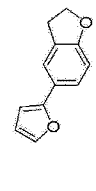
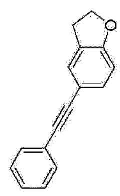
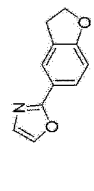
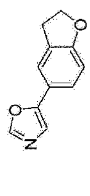

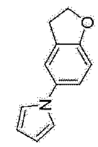
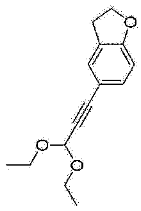
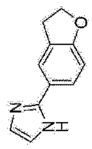
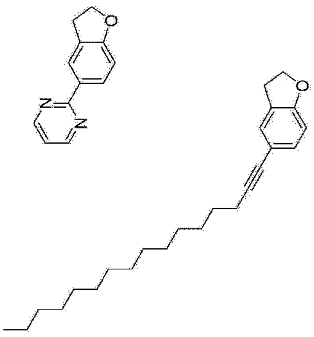
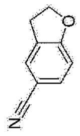
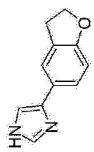
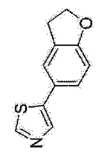
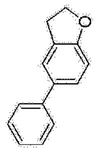
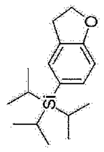
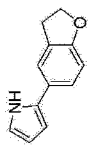
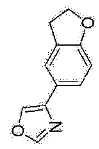
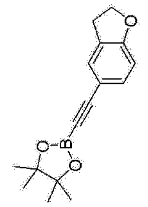
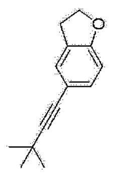
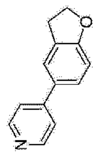
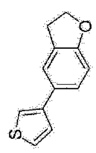
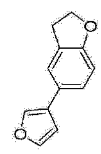
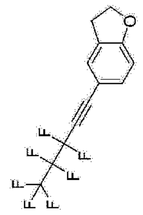
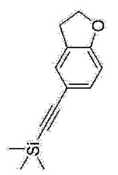
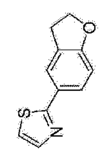
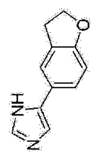
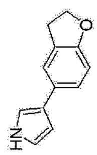
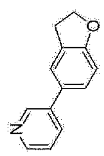
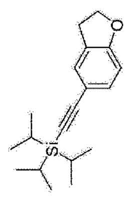
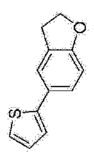
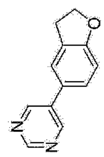
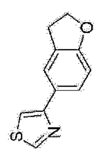
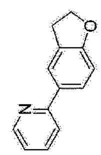
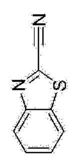
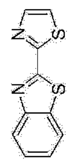
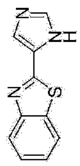
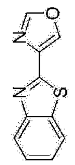
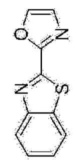

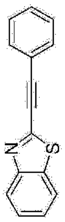 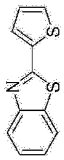 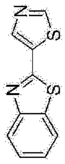 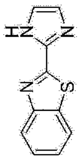 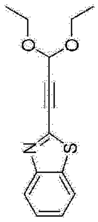

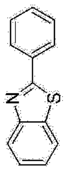 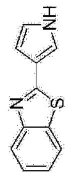 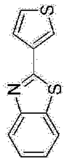 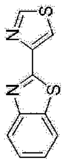 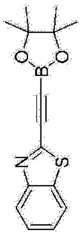

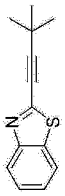 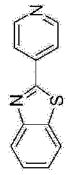 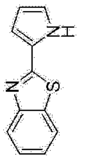 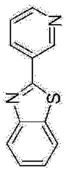 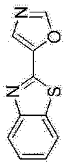 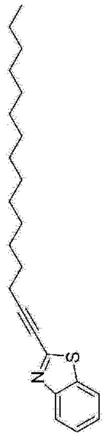

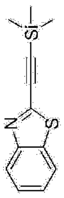 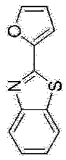 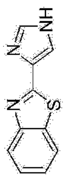 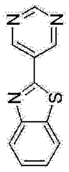 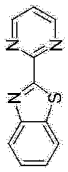

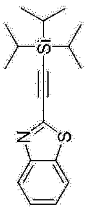 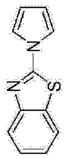 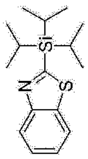 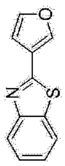 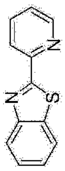 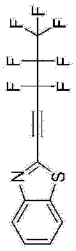

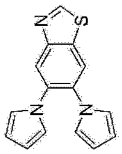 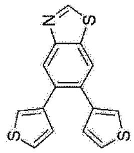 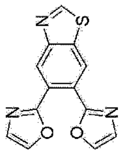 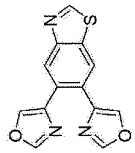

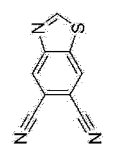
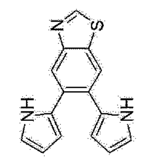
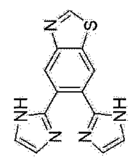
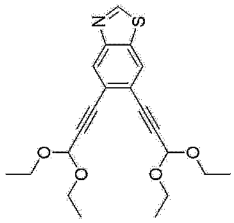
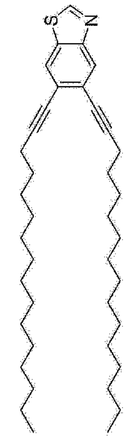
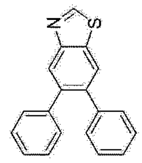
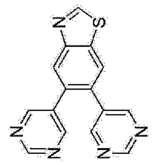
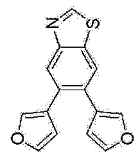
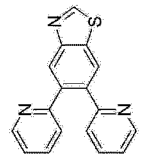
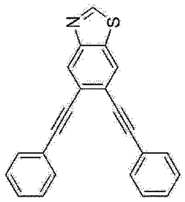
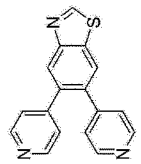
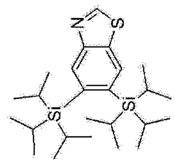
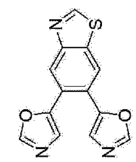
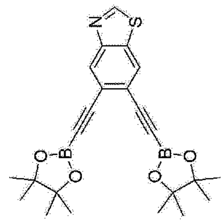
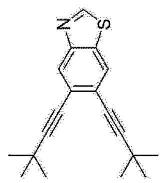
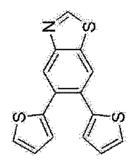
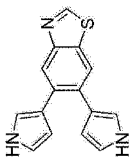
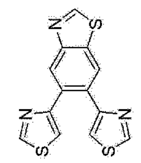
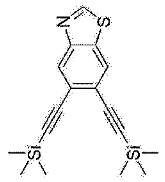
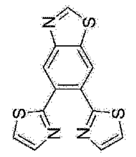
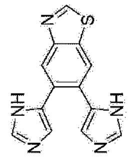
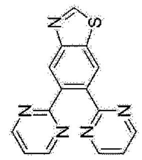
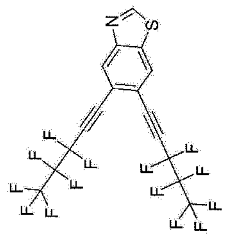
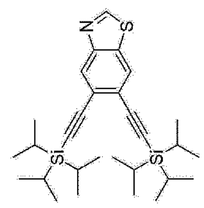
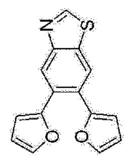
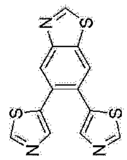
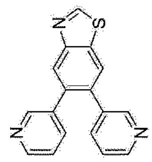
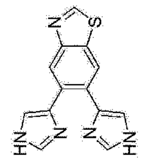
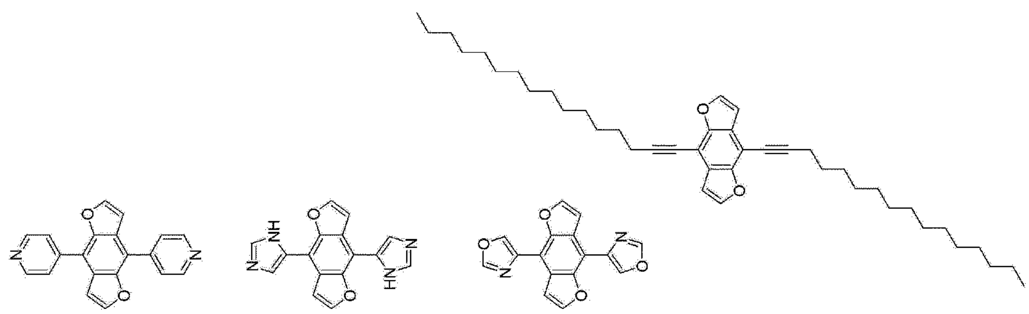
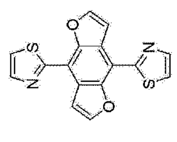
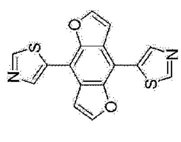
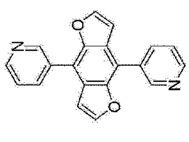
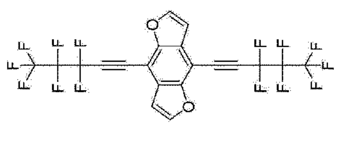

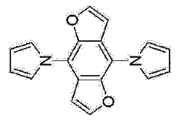
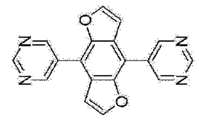
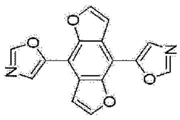
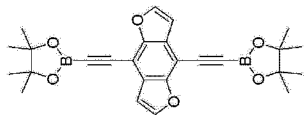

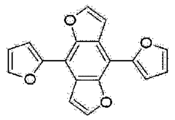
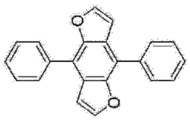
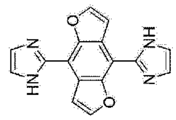
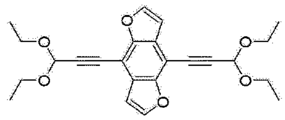

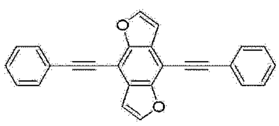
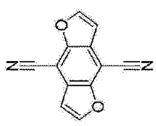
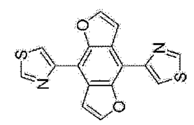
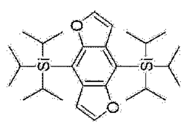

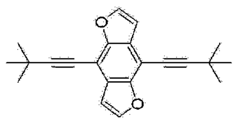
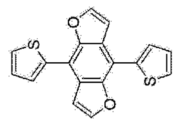
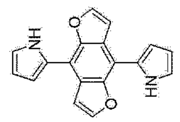
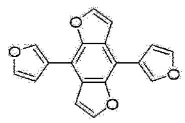

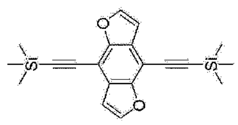
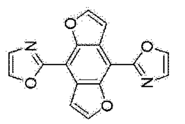
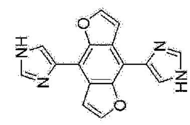
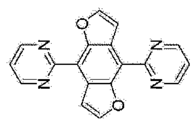

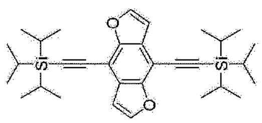
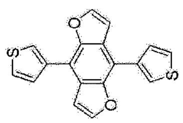
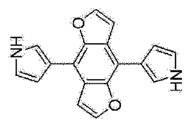
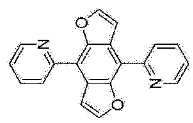

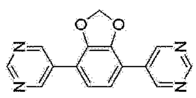
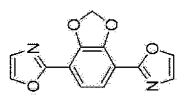
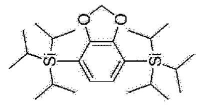

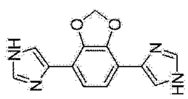
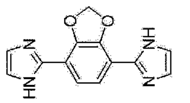
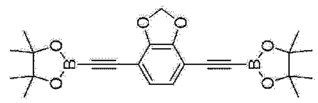

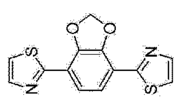
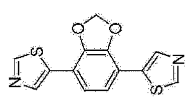
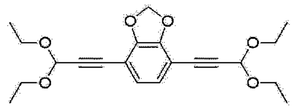

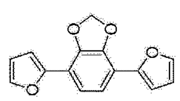
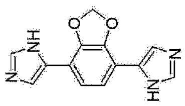
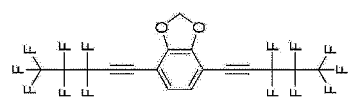

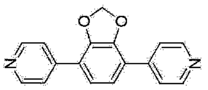
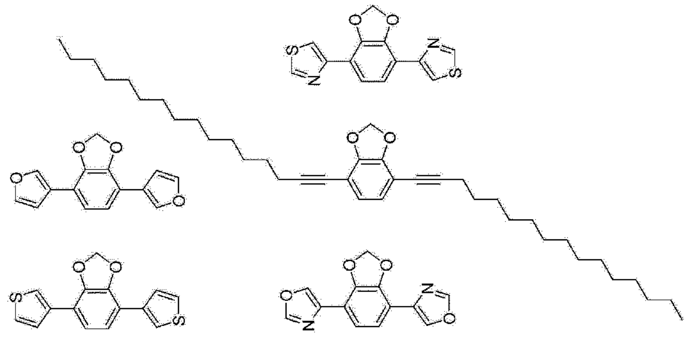
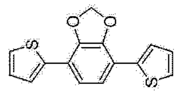
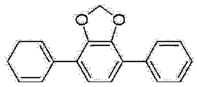
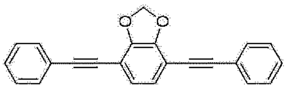
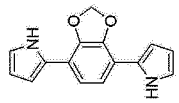
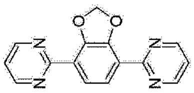
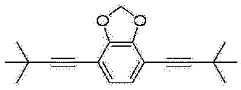
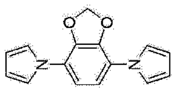
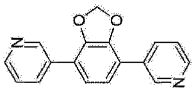
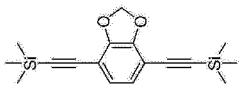
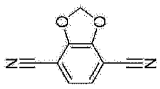
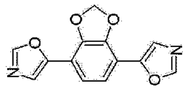
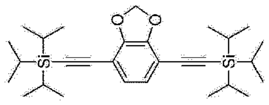
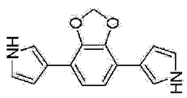
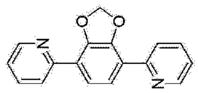
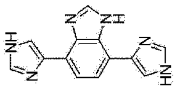
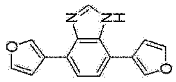
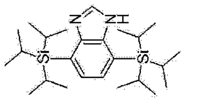
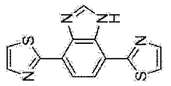
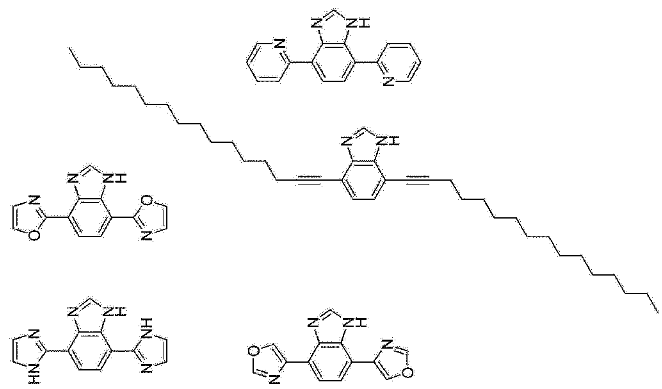
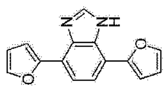
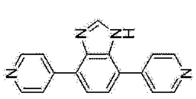
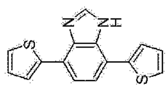
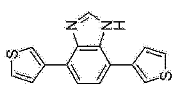
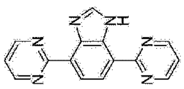
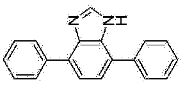
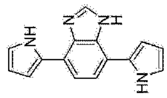
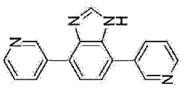

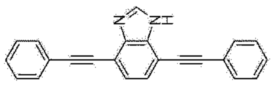
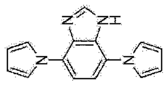
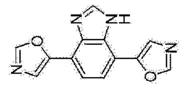
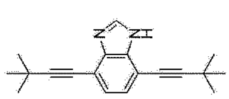
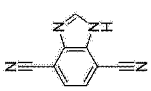
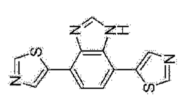
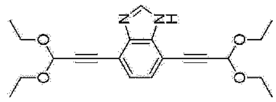
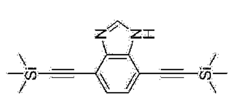
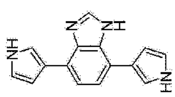
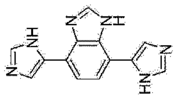
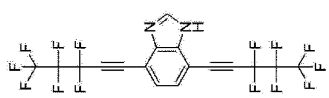
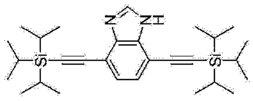
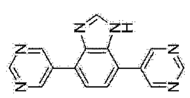
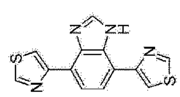
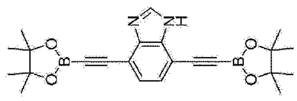
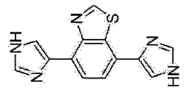
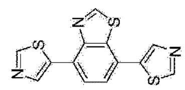
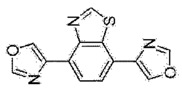
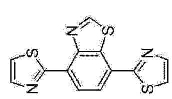
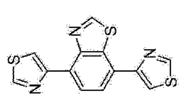
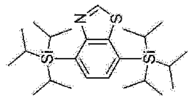
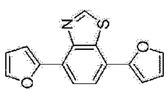
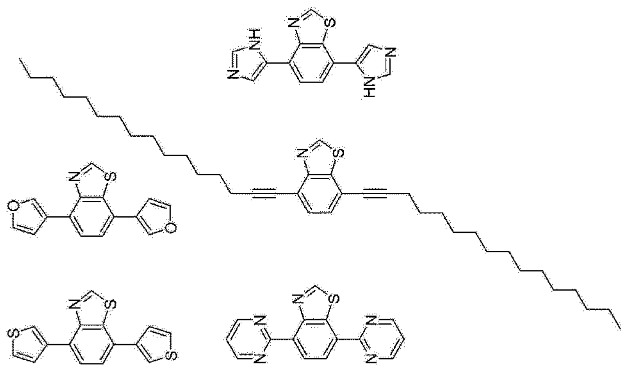
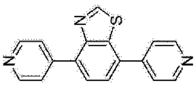
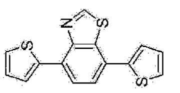
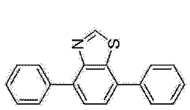
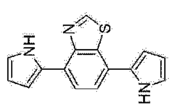
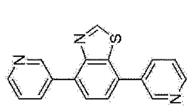
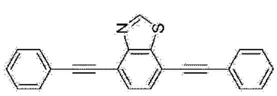
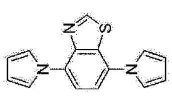
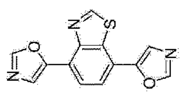
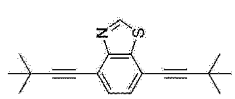
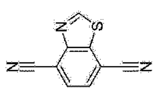
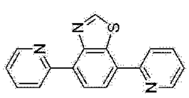
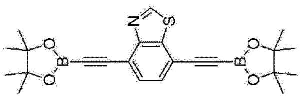

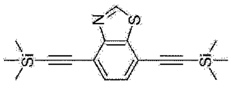
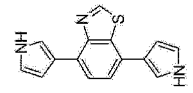
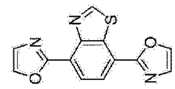
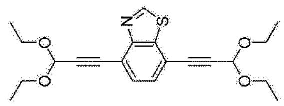
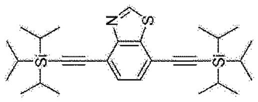
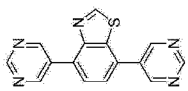
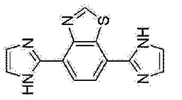
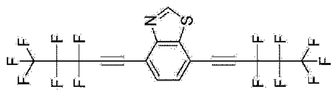
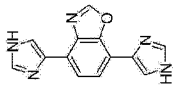
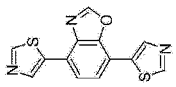
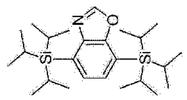
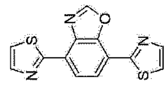
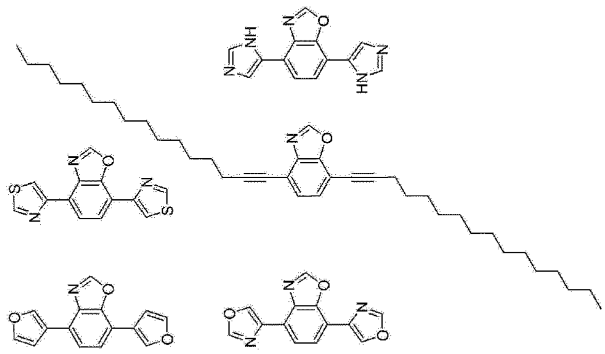
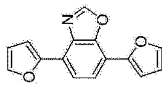
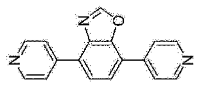
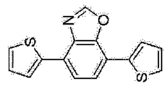
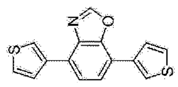
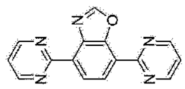
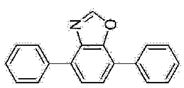
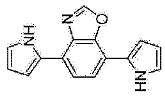
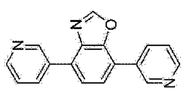
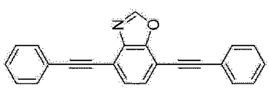
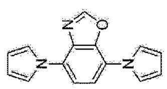
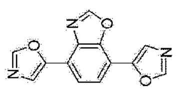
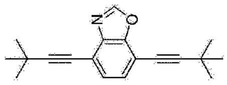
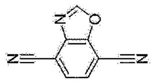
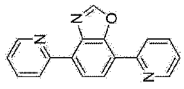
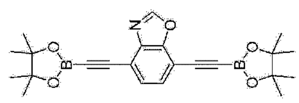
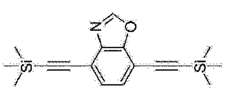
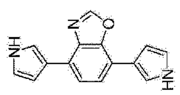
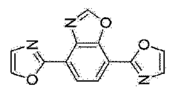
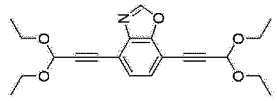
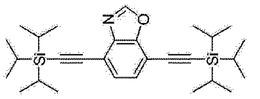
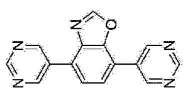
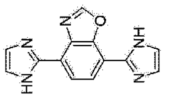
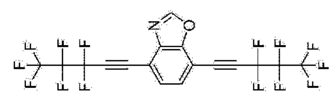

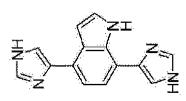
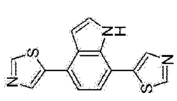
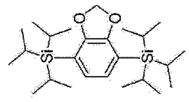
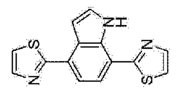
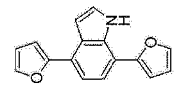
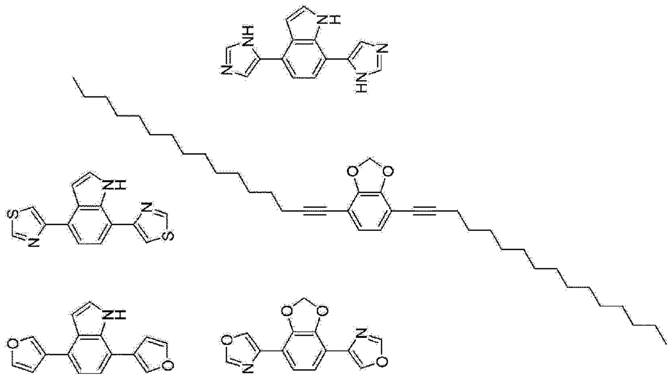
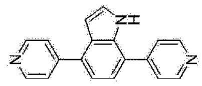
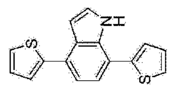
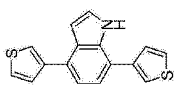
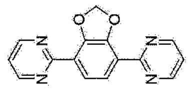
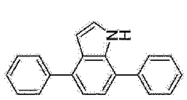
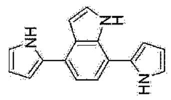
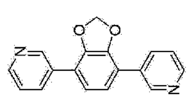
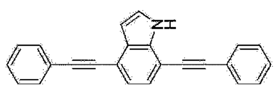
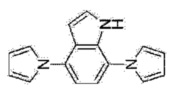
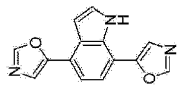
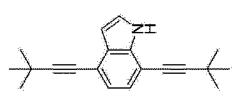
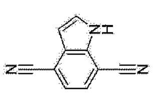
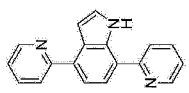
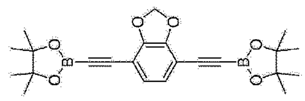
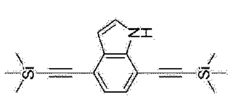
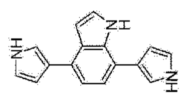
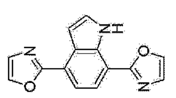
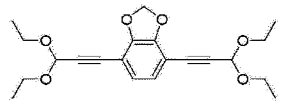
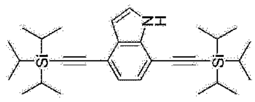
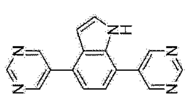
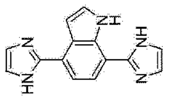
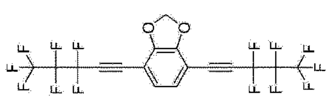
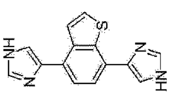
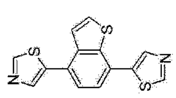
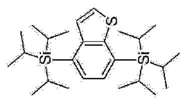

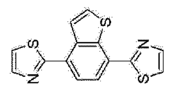
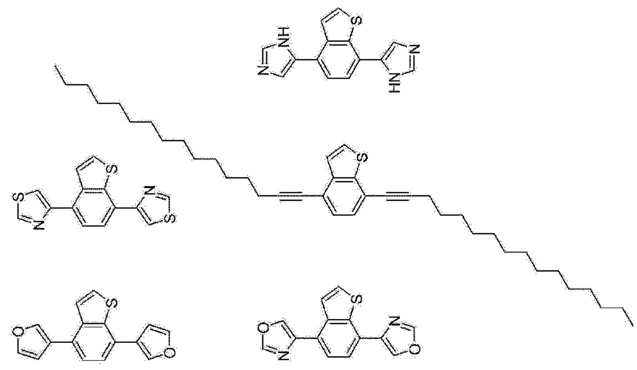
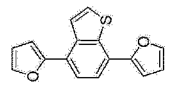
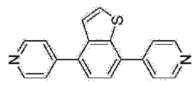
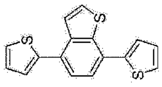
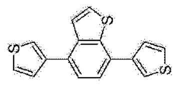
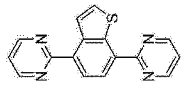
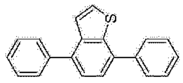
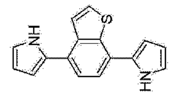
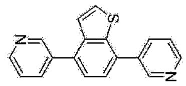
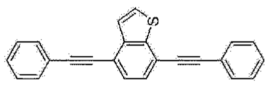
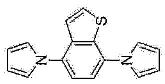
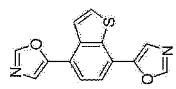
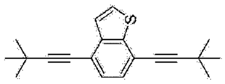
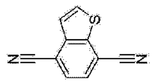
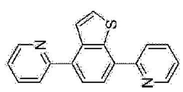
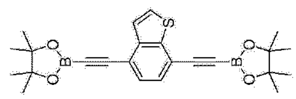
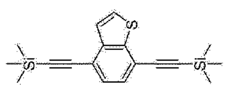
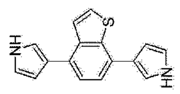
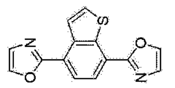
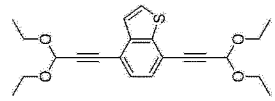
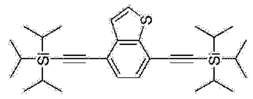
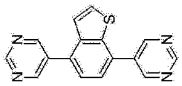
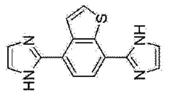
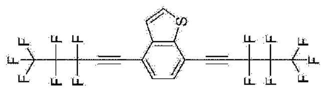
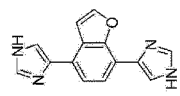
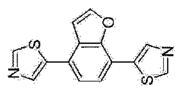
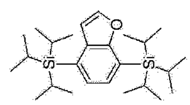
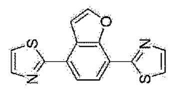
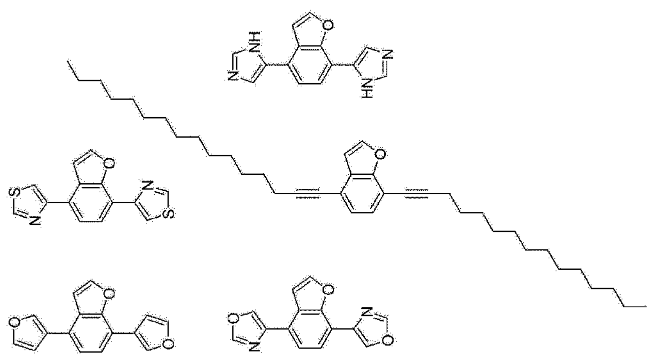
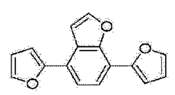
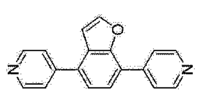

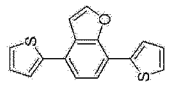
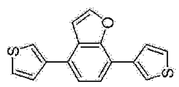
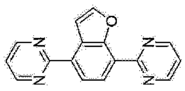

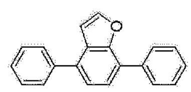
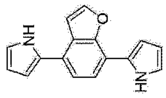
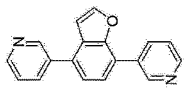

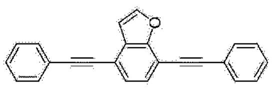
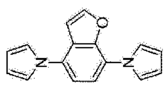
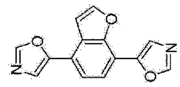

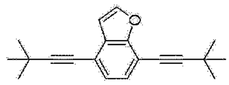
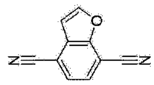
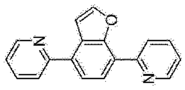
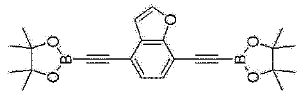

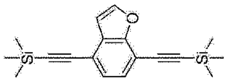
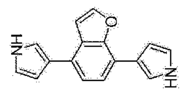
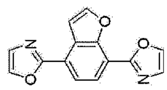
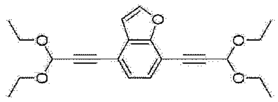

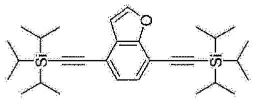
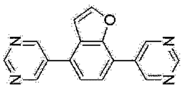
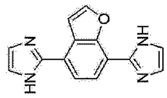
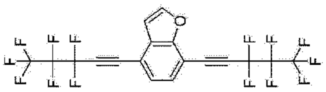

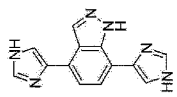
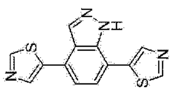
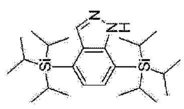

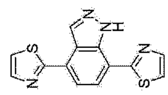
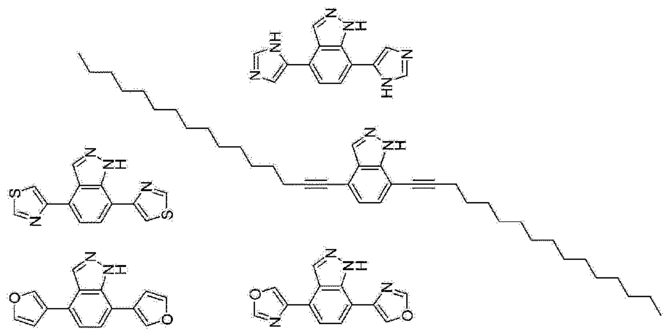

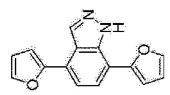

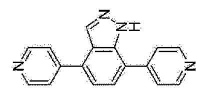

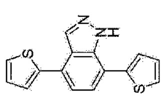
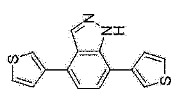
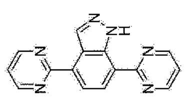

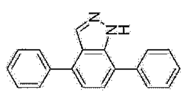
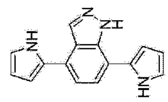
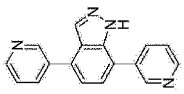

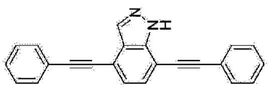
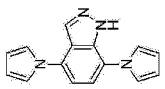
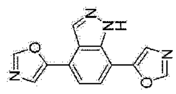

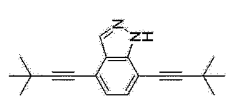 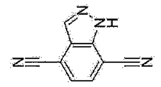 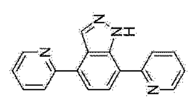 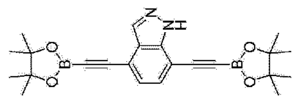

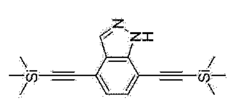 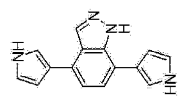 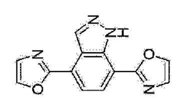 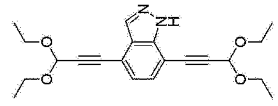

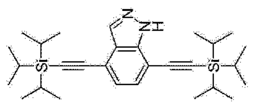 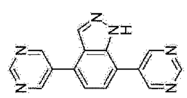 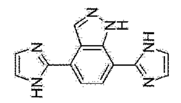 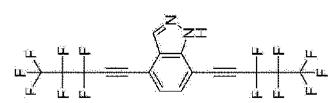

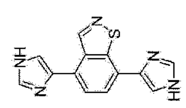 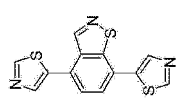 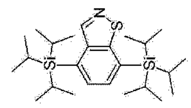

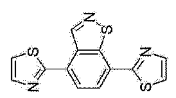 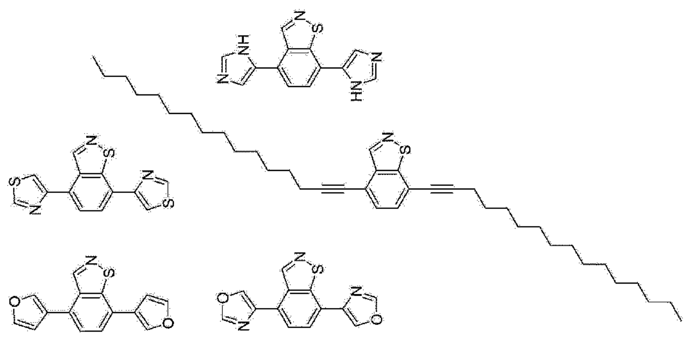

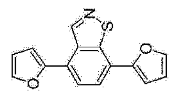

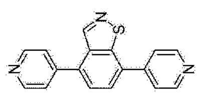

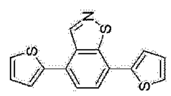 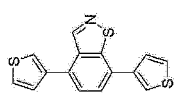 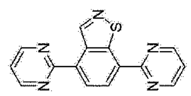

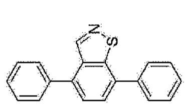 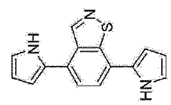 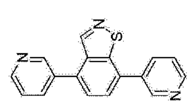

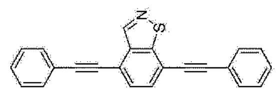 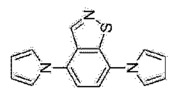 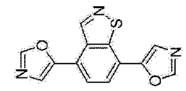

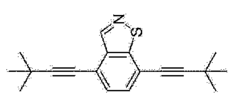 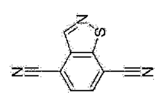 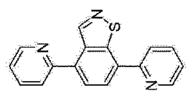 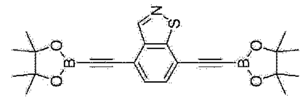

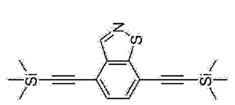 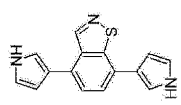 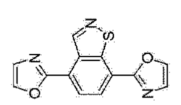 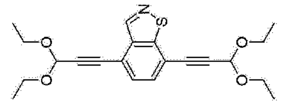

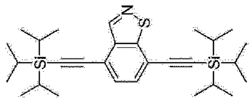 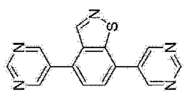 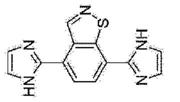 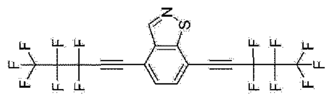

(Measurement method for lowest excited singlet energy level $S_1$ and lowest excited triplet energy level $T_1$)

The lowest excited singlet energy level $S_1$ of the compound for use in the present invention can be determined by measuring the fluorescent spectrum after preparing a solution of the compound, and by converting the wavelength of the fluorescence peak on the shortest wavelength side into an energy value according to the following conversion expression. The lowest excited triplet energy level $T_1$ of the compound for use in the present invention can be determined by measuring the phosphorescent spectrum after preparing a solution of the compound, and by converting the wavelength value of the fluorescence peak is converted into an energy value according to the following conversion expression. The solvent to be used in preparing a solution of the compound is selected as to be able to dissolve the compound (for example, tetrahydrofuran). The concentration of the solution can be one that enables spectrometry (for example, 100 μM). For measuring the emission spectrum, JASCO FP-8300 by JASCO Corporation can be used with a xenon lamp as an excitation light source.

Conversion Expression:

$$S_1\ [eV] = 1239.85/\lambda_F$$

Conversion Expression:

$$T_1\ [eV] = 1239.85/\lambda_P$$

In the above expressions, $\lambda_F$ is a fluorescence peak wavelength [nm], and $\lambda_P$ is a phosphorescence peak wavelength [nm].

[Blending Ratio of Donor Compound and Acceptor Compound]

When the photon upconversion composition contains a coumarin compound (donor compound) and an acceptor compound, the molar ratio of the donor compound to the acceptor compound [(molar number of donor compound/molar number of acceptor compound) × 100] is preferably 0.01 to 20%, more preferably 0.1 to 10%, even more preferably 1 to 5%. When the absorbance of the donor compound at the emission wavelength of the acceptor compound is small, the concentration of the donor compound can be increased to enhance absorption of excitation light.

[Other Component than Acceptor Compound]

The photon upconversion composition of the present invention can further contain any other component. The other component includes a solvent capable of dissolving the coumarin compound (donor compound) and the acceptor compound, a matrix material such as a polymer capable of keeping these compounds dispersed in a solid, and an additive such as a surfactant.

The solvent and the polymer can be appropriately selected from known ones for use herein. For example, the solvent includes dimethylformamide, tetrahydrofuran, chloroform, toluene, benzene and a mixed solvent thereof. The polymer includes polystyrene, poly(alkyl methacrylate), poly(alkyl acrylate), poly(N-alkylacrylamide), and polyvinyl alcohol. In addition, bioplastics are also usable. Bioplastics contain regenerable organic resources-derived substances as raw materials and chemically or biologically synthesized ones can be appropriately selected and used. For example, cellulose and protein can be employed, and a biodegradable biopolymer is especially preferably employed. In the present invention, two or more kinds of these polymers can be used as mixed. The polymer can have a glass transition temperature of room temperature (25°C) or higher, or the glass transition temperature thereof can be lower than room temperature. In the case where a polymer having a glass transition temperature of room temperature or higher is used as a matrix material, a film of the composition is stiff, in which therefore molecular diffusion occurs little so that the energy transfer between compound molecules is essentially performed by energy diffusion. In the case where a polymer having a glass transition temperature of lower than room temperature is used as a matrix material, a film of the composition is soft, in which therefore energy transfer can be attained by molecular diffusion. The glass transition temperature of the polymer

can be measured with a differential scanning calorimeter. The method of dispersing the coumarin compound and the acceptor compound in a polymer is not specifically limited. For example, the compounds can be dispersed via a step of dissolving them in a common solvent followed by mixing, or a solution prepared by dissolving the coumarin compound and the acceptor compound in a nonvolatile solvent can be dispersed in the polymer. The nonvolatile solvent can be a nonvolatile liquid that well dissolve the compounds, and can be appropriately selected from surfactants (e.g., Triton$^R$ X-100), low-molecular-weight organic solvents (e.g., hexadecane) or the like for use herein.

When the photon upconversion composition contains a solvent, the proportion of the coumarin compound relative to the total amount of the composition is preferably 0.00005 to 0.5% by weight, more preferably 0.00005 to 0.05% by weight, even more preferably 0.0005 to 0.03% by weight.

When the photon upconversion composition contains a polymer, the proportion of the coumarin compound relative to the total amount of the composition is preferably 0.001 to 1% by weight, more preferably 0.01 to 1% by weight, even more preferably 0.1 to 0.5% by weight.

[Usefulness of Photon Upconversion Composition]

The photon upconversion composition of the present invention exhibits a high UC efficiency at a low excitation light intensity while being heavy metal free. Consequently, the photon upconversion composition of the present invention has a characteristic that environmental load is small, stable raw materials can be easily secured, and industrial use is easy. With that, the photon upconversion composition of the present invention can emit light by efficiently converting an irradiation light such as visible light into UV light at an excitation light intensity on a practicable level. Accordingly, the photon upconversion composition of the present invention can be effectively used as a creation source for UV light in various scenes utilizing UV light.

For example, when a film of the photon upconversion composition of the present invention is applied to a transparent substance such as a transparent glass sheet or a transparent resin board and exposed to sunlight, a UV light can be obtained at low cost. In the case where the resultant UV light is used for activation of photocatalysts, the photocatalysts can be made to act at good energy efficiency, and the efficiency in artificial photosynthesis or the like utilizing the photocatalysts can be increased. For example, hydrogen can be produced from water and sunlight by the action of photocatalysts, which, therefore greatly contribute toward improvement of fuel efficiency for fuel cell vehicles in which the fuel cells generate power by the use of hydrogen. The transparent substance to which the film is applied may be any substance capable of transmitting at least a part of a UC light (preferably 10% or more, further preferably 50% or more, even more preferably 90% or more, especially preferably 99% or more), and especially can be a substance capable of transmitting at least a part of a UC light in a wavelength region to be utilized. In the case where the film is applied to a transparent substance, it can be directly stuck to the surface of a transparent substance, or can be laminated on the surface of a transparent substance, or can be detachably layered on the surface of a transparent substance. Also the film can be sandwiched between two transparent substances. Further, in the case where a collective lens is selected as a transparent substance, and where the film is applied thereto, a UC light can be collected in a specific spot to attain further more efficient utilization of energy.

It has been medically clarified that a UV light (ultraviolet light) falling within a range of 360 to 400 nm has a myopia-suppressing effect. Therefore, a film capable of emitting a UC light containing a UV light falling within a range of 360 to 400 nm can be used for myopia suppression. For example, by applying such a film to windowpanes, glasses, goggles, contact lenses and the like, the sunlight or indoor light impinging on the film is converted into a UV light, and can effectively exhibit myopia suppression for humans (especially children and students) and animals. Further by applying the film to LED lights, smartphones and displays of personal computers and televisions, the illumination light can be converted into a UV light to effectively exhibit myopia suppression for operators. The photon upconversion composition of the present invention is useful also as a film to be a creation source for such a UV light falling within a range of 360 to 400 nm. Products capable of exhibiting a myopia-suppressing effect can be produced by applying such a film to a transparent material, or can be produced by mixing the coumarin compound of the present invention with a transparent material such as a transparent resin to produce transparent products such as windowpanes, glasses, goggles, contact lenses and transparent sheets. In that manner, the photon upconversion composition of the present invention is applicable to a wide range of transparent products such as films, lenses and transparent sheets, and are useful for production of myopia-suppressing transparent products. The word "transparent" as referred to herein means that the substance can transmit at least a light falling within a range of 360 nm to 400 nm and a light necessary for causing photon upconversion for the composition of the present invention.

<Film>

Next, the film of the present invention is described.

The film of the present invention contains the photon upconversion composition of the present invention.

Regarding the description of the photon upconversion composition of the present invention, reference can be made to the description in the section of <Photon Upconversion Composition> given hereinabove.

Embodiments of the film of the present invention include those produced by forming the photon upconversion composition into films, and those produced by forming a layer of the photon upconversion composition on a substrate. In the latter embodiment, the film can be formed of the layered photon upconversion composition alone, or the film can be composed of a layered photon upconversion composition and a substrate. The method of forming the photon upconversion composition into a film is not specifically limited, and a known film molding method such as calendering, extrusion or inflation molding can be employed. The method of layering the photon upconversion composition is not also specifically limited, for example, any of a dry process or a wet process is employable. The substrate is not also specifically limited, and for example, glass, transparent plastics, quartz and silicon can be employed.

From the viewpoint of facilitating molding or layering film formation to control the mechanical properties of films, the photon upconversion composition for films preferably contains a coumarin compound and a polymer, or contains a coumarin compound (donor compound), an acceptor compound and a polymer. The polymer for use in the composition can be appropriately selected from known polymers for films and used, for example, including a polystyrene, a poly(alkyl acrylate), a ;poly(alkyl methacrylate), a poly(N-alkylacrylamide), an epoxy resin, and a polyvinyl alcohol. In the case where a hydrophilic polymer such as a polyvinyl alcohol is used, preferably a surfactant is added to the composition for improving the dispersibility of the compounds.

The film of the photon upconversion composition can be a single-layered film or a multilayered film. When the film is a multilayered film, preferably, at least the adjacent layers differ in the composition.

As an embodiment of the film of the present invention, also mentioned is an impregnated film produced by impregnating a porous film with a liquid material of the coumarin compound. As the liquid material, employable is a solution of a coumarin compound, or a solution of a coumarin compound (donor compound) and an acceptor compound, a melt liquid prepared by heating and melting a coumarin compound, or a melt liquid prepared by heating a mixture of a coumarin compound and an acceptor compound to be in a molten state. The melt liquid prepared by heating the mixture to be in a molten state can be one where a solid donor compound is dispersed in a melt liquid of the acceptor compound, or one where both the acceptor compound and a donor compound are in a molten state. Of those, a film prepared by impregnation with a solution is preferred as readily obtaining stable products. As the porous film, employable is an organic porous film where an organic filler is dispersed in a matrix polymer. As commercial products, a microporous film (by 3M Company) is employable. In addition, a PTFE membrane film (by Tokyo Garasu Kikai Co., Ltd.) and a polyethylene porous sheet (by Flon Chemical Co., Ltd.) are also employable. In one embodiment of the present invention, a polyolefin film, preferably a polypropylene film can be used as the porous film. In one embodiment of the present invention, one having a pore diameter of 0.3 μm or less, preferably 0.2 μm or less, further preferably 0.1 μm or less can be used as the porous film. In one embodiment of the present invention, one having a water-vapor permeability of 10000 $g/m^2 \cdot 24$ hr or more, or one having an air permeability of 200 sec/100 ml or more can be used as the porous film. In one embodiment of the present invention, a film that absorbs an organic liquid and holds it inside but does not allow water to penetrate therethrough can be used as the porous film.

The thickness of the film of the present invention is preferably 10 nm to 1cm, more preferably 100 nm to 500 μm, even more preferably 1 μm to 100 μm. In the case where the layer of the photon upconversion composition is a multilayer, the total thickness thereof falls within the above-mentioned range.

The film of the present invention can be composed of a film alone containing the photon upconversion composition of the present invention, or can contain any other layer or film. The other film includes an oxygen barrier film. In the case where an oxygen barrier film is used, preferably, the film containing the photon upconversion composition is entirely covered and sealed up with the oxygen barrier film. As the oxygen barrier film, usable is a polyvinyl alcohol film, or a film of a copolymer of a vinyl alcohol and any other monomer. For example, preferred is a film of an ethylene-vinyl alcohol copolymer. As the other layer, there can also be mentioned a layer having a microlens array. By forming a layer having a microlens array on the film containing the photon upconversion composition of the present invention followed by irradiating the film with excitation light through the microlens array-having layer, the photon upconversion emission efficiency can be improved. The lens diameter, the pitch and the array mode of the microlens array can be controlled so as to improve the photon upconversion emission efficiency. The lens diameter to determine the curvature of each lens to be arrayed can be selected within a range of, for example, 10 μm or more, 50 μm or more, or 100 μm or more, or can be selected within a range of, for example 200 μm or less, 160 μm or less, or 130 μm or less.

<Myopia-suppressing Transparent Product>

Next described are myopia-suppressing transparent products of the present invention.

The myopia-suppressing transparent product of the present invention contains the photon upconversion composition.

The transparent product in the "myopia-suppressing transparent product" of the present invention means a

product that can transmit at least a part (preferably 10% or more, more preferably 50% or more, further preferably 90% or more, especially preferably 99% or more) of UC light.

The photon upconversion composition for use in the present invention is preferably a photon upconversion composition capable of emitting at least 360 to 400 nm UV light through UC emission. As described above, 360 to 400 nm UV light exhibits a myopia-suppressing effect, and therefore, by using the composition that emits UV light falling within the wavelength range through UC emission, there can be realized a transparent product excellent in a myopia-suppressing effect.

Preferably, the photon upconversion composition for use in the present invention is the photon upconversion composition of the present invention, and is more preferably the photon upconversion composition of the present invention at least capable of emitting 360 to 400 nm UV light through UC emission. Regarding the description of the photon upconversion composition of the present invention, reference can be made to the description in the section of <Photon Upconversion Composition> given hereinabove.

For the myopia-suppressing transparent product, the present invention can be applied to any transparent product with no specific limitation, but preferred is a product where light having a longer wavelength than UV light is incident in an ordinary use method. Specific examples of the myopia-suppressing transparent product include glasses, goggles, contact lenses, transparent plates for windows, window glass films, lens cases for LED lights, and displays for smartphones, personal computers and televisions. Regarding the application method of the photon upconversion composition of the present invention to the products and the specific effect thereof, reference can be made to the description corresponding to the section of [Usefulness of Photon Upconversion Composition] described hereinabove.

<Method for converting visible light into UV light>

Next described is a method of converting a visible light into a UV light.

The method for converting a visible light into a UV light of the present invention is a method of applying a visible light to the photon upconversion composition of the present invention or to the film of the present invention to convert it into a UV light.

Regarding the description of the photon upconversion composition of the present invention and the definition of visible light and UV light, reference can be made to the description in the section of <Photon Upconversion Composition> given hereinabove, and regarding the description of the film of the present invention, reference can be made to the description in the section of <Film> also given hereinabove.

For converting a visible light into a UV light according to the method of the present invention, first, the photon upconversion composition of the present invention or the film of the present invention is irradiated with a visible light. The visible light to be applied can be a single light having an emission maximum wavelength at a specific wavelength in a visible region, or can be a composite light synthesized from plural visible lights differing in the emission maximum wavelength, or can also be a composite light synthesized from lights of continuous wavelengths in a visible region. Also the light to be applied to the composition can contain, in addition to a visible light, any other light than a visible light. Examples of the irradiation source include sunlight, LED, Xe lamp, and laser. The irradiation intensity is preferably 0.1 to 1000 $mW/cm^2$, more preferably 0.5 to 100 $mW/cm^2$, even more preferably 1 to 50 $mW/cm^2$. The irradiation time is not specifically limited, and can be, for example, 1 minute or longer.

In the method of the present invention, the photon upconversion composition of the present invention or the film of the present invention is made to emit a UV light as a UC light by irradiation with such a visible light. The emission can be recognized within a UV region (in a wavelength range of 200 to 400 nm), but preferably the UV emission is recognized within a range of 360 to 400 nm. Here, "the emission is recognized within a range of 360 to 400 nm" means that the emission maximum wavelength of the UV light falls within a range of 360 to 400 nm or the emission maximum wavelength thereof is around a range of 360 to 400 nm, and 50% or more of the emission intensity at the emission maximum wavelength is recognized in a range of 360 nm to 400 nm. As described above, a UV light falling within a range of 360 to 400 nm exhibits a myopia-suppressing effect, and therefore the UV light obtained in the embodiment of emitting a UV light within the range can be effectively utilized for myopia suppression.

## Examples

The features of the present invention will be described more specifically with reference to Examples and Comparative Examples given below. The materials, the amounts used, the proportions, the processes, the procedures and the like shown in the following examples may be appropriately modified unless they deviate from the substance of the invention. Accordingly, the scope of the invention should not be construed as being limited to the specific examples shown below. In the following examples, a spectrophotometer (V-670 by JASCO Corporation) was used for absorption spectrometry, and a fluorospectrophotometer (FP-8300 by JASCO Corporation) was used for emission spectrometry. The UC efficiency $\eta_{UC}$ was calculated according to a relative method using Coumarin 6 as a standard substance. In the

relative method, used were the fluorescence quantum yield of a Coumarin 6 solution, the absorbance and the emission spectrum of each solution targeted for measurement, the excitation light intensity in measurement and the refractive index of the solvent used, and in emission spectrometry, used was a multichannel spectrometer (MCPD-9800 by Otsuka Electronics Co., Ltd.). In UC emission lifetime measurement, used was Quantaurus-Tau C11367-02/C11567-01 by Hamamatsu Photonics K.K.

[Donor Compound and Acceptor Compound used in Examples]

Hereinunder the donor compounds and the acceptor compounds used in Examples are shown.

Donor Compounds

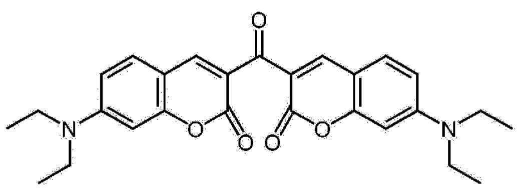

Compound D1

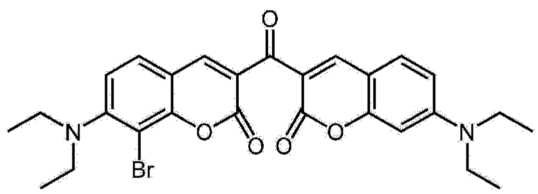

Compound D2

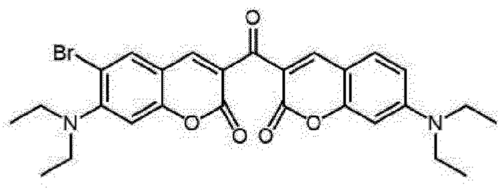

Compound D3

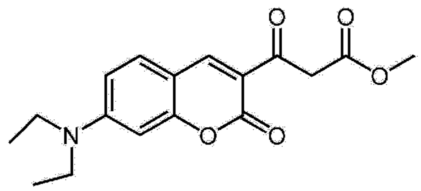

Compound D4

Acceptor Compounds

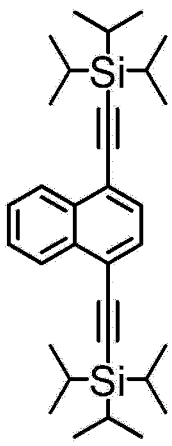

Compound A1

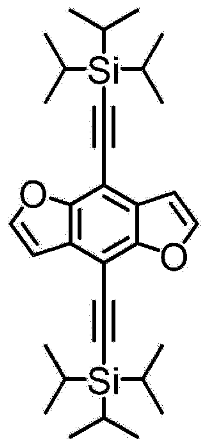

Compound A2

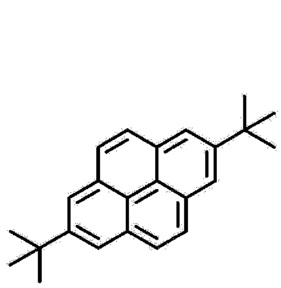

Compound A3

Table 1 shows the absorption maximum wavelength of main absorption peaks of these donor compounds and acceptor compounds, as well as the emission maximum wavelength, the lowest excited singlet energy level $S_1$ and the

lowest excited triplet energy level $T_1$ thereof. $S_1$ of the acceptor is a value calculated from the emission maximum wavelength, and $S_1$ of the donor is a value calculated from the absorption maximum wavelength. $T_1$ of the acceptor is a value calculated in density functional theory (DFT), and $T_1$ of the donor is a value calculated from the emission maximum wavelength. The emission maximum wavelength of Compounds D1, D2, D3 and D4 is an emission maximum wavelength of phosphorescence measured at a low temperature, and $T_1$ of these compounds is a value calculated from the measured emission maximum wavelength of phosphorescence.

Table 1

| | Absorption Maximum Wavelength (nm) of Main Absorption Peaks | Emission Maximum Wavelength (nm) | $S_1$(eV) | $T_1$(eV) |
|---|---|---|---|---|
| Compound D1 | 446 nm | 568 nm | 2.78 | 2.18 |
| Compound D2 | 446 nm | 581 nm | 2.78 | 2.13 |
| Compound D3 | 446 nm | 569 nm | 2.78 | 2.18 |
| Compound D4 | 434 nm | 573 nm | 2.86 | 2.16 |
| Compound A1 | 350 nm | 356 nm | 3.48 | 2.10 |
| Compound A2 | 350 nm | 379 nm | 3.27 | 2.14 |

(Example 1) Preparation and Evaluation of Photon Upconversion Composition containing Compound D1 and Compound A1

In a glove box in an Ar atmosphere, Compound D1 and Compound A1 were dissolved in toluene to prepare a toluene solution (composition 1). Here, the concentration of Compound D1 was 100 $\mu$M, and the concentration of Compound A1 was 10 mM.

Fig. 2 shows UC emission spectra of the prepared composition 1, measured at a different excitation light intensity varying within a range of 0.19 mW/cm$^2$ to 23.0 W/cm$^2$. In measurement, the wavelength $\lambda_{ex}$ of the excitation light was 445 nm, and a 425-nm long wavelength cut filter was arranged between the sample and the spectroscope in an Ar atmosphere. Fig. 3 shows the results of measurement of the excitation light intensity dependence of UC efficiency, and Fig. 4 shows a double logarithmic graph in which the emission intensity (UC emission intensity) at the emission maximum wavelength (374 nm) of the UC emission spectrum is plotted on the vertical axis and the excitation light intensity is on the horizontal axis. The lines in Fig. 4 are fitting lines of the plots, and the excitation light intensity at the intersection of the first line with slope = 2 and the second line with slope = 1 corresponds to the excitation intensity necessary for maximizing the UC efficiency (threshold excitation intensity $I_{th}$). As shown in Fig. 3 and Fig. 4, the UC efficiency $\eta_{UC}$ of the composition 1 was 15.1%, the threshold excitation intensity $I_{th}$ was 5.51 mW/cm$^2$, and the UC emission lifetime $\tau_{UC}$ was 0.40 ms (milliseconds). The results confirm that the composition 1 is heavy metal-free and exhibits a high UC efficiency at a low excitation light intensity.

(Example 2) Preparation and Evaluation of Photon Upconversion Composition containing Compound D2 and Compound A1

A toluene solution of Compound D2 and Compound A1 (composition 2) was prepared in the same manner as in Example 1 except that Compound D2 was used in place of Compound D1, and the UC characteristics thereof were evaluated. From the results, a double logarithmic graph was drawn in which the UC emission intensity and the excitation light intensity were fitted with the first line and the second line, like in Example 1. The UC efficiency $\eta_{UC}$ of the composition 2 was 3.4%, the threshold excitation intensity $I_{th}$ was 35.1 mW/cm$^2$, and the UC emission lifetime $\tau_{UC}$ was 0.26 ms (milliseconds).

(Example 3) Preparation and Evaluation of Photon Upconversion Composition containing Compound D3 and Compound A1

A toluene solution of Compound D3 and Compound A1 (composition 3) was prepared in the same manner as in Example 1 except that Compound D3 was used in place of Compound D1, and the UC characteristics thereof were evaluated. From the results, a double logarithmic graph was drawn in which the UC emission intensity and the excitation light intensity were fitted with the first line and the second line, like in Example 1. The UC efficiency $\eta_{UC}$ of the composition 3 was 4.36%, the threshold excitation intensity $I_{th}$ was 32.7 mW/cm$^2$, and the UC emission lifetime $\tau_{UC}$ was 0.35 ms

(milliseconds).

(Example 4) Preparation and Evaluation of Photon Upconversion Composition containing Compound D4 and Compound A1

A toluene solution of Compound D4 and Compound A1 (composition 4) was prepared in the same manner as in Example 1 except that Compound D4 was used in place of Compound D1, and the UC characteristics thereof were evaluated. From the results, a double logarithmic graph was drawn in which the UC emission intensity and the excitation light intensity were fitted with the first line and the second line, like in Example 1. The UC efficiency $\eta_{UC}$ of the composition 4 was 0.16%, the threshold excitation intensity $I_{th}$ was 10.7 mW/cm$^2$, and the UC emission lifetime $\tau_{UC}$ was 0.28 ms (milliseconds).

(Example 5) Preparation and Evaluation of Photon Upconversion Composition containing Compound D1 and Compound A2

A toluene solution of Compound D1 and Compound A2 (composition 5) was prepared in the same manner as in Example 1 except that Compound A2 was used in place of Compound A1, and the UC characteristics thereof were evaluated. From the results, a double logarithmic graph was drawn in which the UC emission intensity and the excitation light intensity were fitted with the first line and the second line, like in Example 1. The UC efficiency $\eta_{UC}$ of the composition 5 was 18.2%, the threshold excitation intensity $I_{th}$ was 334.4 mW/cm$^2$, and the UC emission lifetime $\tau_{UC}$ was 0.092 ms (milliseconds).

(Example 6) Preparation and Evaluation of Sealed Article of Porous Film Impregnated with Photon Upconversion Composition

In a glove box in an Ar atmosphere, Compound D1 and Compound A1 were dissolved in hexyl benzoate to prepare a solution. Here, the concentration of Compound D1 was 100 μM, and the concentration of Compound A1 was 10 mM. In the solution, a porous film (3M™ Microporous Film) having a thickness of 38 μm were immersed so as to make the solution penetrate into the porous film. Subsequently, the porous film was taken out, sandwiched between two glass substrates and sealed up therein. The porous film used here was a film containing polypropylene as a main component, of which the pore size was 0.3 μm or less, the tensile strength was 8 N/cm in both MD and CD directions, the tensile elongation was 280% in MD and 260% in CD, the air permeability was 210 sec/100 ml, and the water-vapor permeability was 12000 g/m$^2$·24 hr. The UC emission spectrum of the produced sealed article was measured with an excitation light intensity varying within a range of 146.3 mW/cm$^2$ to 6.8 W/cm$^2$, which confirmed the increase in the UC emission intensity in a range of 350 to 440 nm with the increase in the excitation light intensity.

On the other hand, according to the same process as above except that Compound A3 was used in place of Compound A1, a sealed article of a porous film impregnated with a hexyl benzoate solution of Compound D1 and Compound A3 was produced. The UC emission spectrum of the produced sealed article was measured with an excitation light intensity varying within a range of 215.8 mW/cm$^2$ to 12.7 W/cm$^2$, which confirmed the increase in the UC emission intensity in a range of 350 to 440 nm with the increase in the excitation light intensity.

The above results indicate that UC emission is observed in the same manner as in the case of the solution also in the case of sealing with the porous film.

(Example 7) Preparation and Evaluation of Laminate of Porous Film Impregnated with Photon Upconversion Composition and Microlens Array

A porous film with a thickness of 38 μm impregnated with a hexyl benzoate solution of Compound D1 and Compound A1 was produced according to the same process as in Example 6. The porous film was placed on a glass substrate, and a microlens array made of synthetic quartz with a thickness of 720 μm (lens diameter 124 μm) was laminated thereon and sealed up.

On the other hand, a comparative laminate was produced, differing from the above in that a sealing film with no microlens array was used instead of the microlens array.

These produced laminates were irradiated with 445-nm excitation light on the side of the microlens array (on side of the sealing film), and photon upconversion emission was detected with a detector. With varying the excitation light intensity, the UC emission spectra of the laminates were measured, which confirmed the increase in the UC emission intensity of every laminate in a region of 350 to 440 nm with the increase in the excitation light intensity. The relationship between the excitation light intensity and the UC emission intensity is shown in Fig. 5. This confirms significant increase in the UC emission efficiency by formation of the microlens array.

Industrial Applicability

The photon upconversion composition of the present invention exhibits a high UC efficiency at a low excitation light intensity while being heavy metal free. Consequently, since the photon upconversion composition of the present invention has a small environmental load and is easy to secure stable raw materials, it is easy to industrially utilize the composition, and therefore the present invention can greatly contribute to the development of products using the photon upconversion composition. Accordingly, the industrial applicability of the present invention is great.

## Claims

**1.** A photon upconversion composition containing a compound having a coumarin skeleton and not containing a heavy metal.

**2.** The photon upconversion composition according to claim 1, wherein the compound having a coumarin skeleton has a carbonyl group outside the coumarin skeleton.

**3.** The photon upconversion composition according to claim 1 or 2, wherein the compound having a coumarin skeleton has a halogen atom.

**4.** The photon upconversion composition according to claim 3, wherein the halogen atom is a bromine atom.

**5.** The photon upconversion composition according to any one of claims 1 to 4, wherein the compound having a coumarin skeleton has a tertiary amino group.

**6.** The photon upconversion composition according to any one of claims 1 to 5, wherein the compound having a coumarin skeleton has two or more coumarin skeletons.

**7.** The photon upconversion composition according to claim 6, wherein the compound having a coumarin skeleton has a structure in which two coumarin skeletons are linked by a carbonyl group.

**8.** A film containing the photon upconversion composition of any one of claims 1 to 7.

**9.** The film according to claim 8, wherein the photon upconversion composition is impregnated in a porous film.

**10.** A myopia-suppressing transparent product containing a photon upconversion composition.

**11.** The myopia-suppressing transparent product according to claim 10, wherein the photon upconversion composition is the photon upconversion composition of any one of claims 1 to 7.

**12.** A method for converting a visible light into a UV light by irradiating the photon upconversion composition of any one of claims 1 to 7 or the film of claim 8 with a visible light.

**13.** The method according to claim 12, wherein emission of the UV light is recognized in a range of 360 to 400 nm.

[FIG. 1]

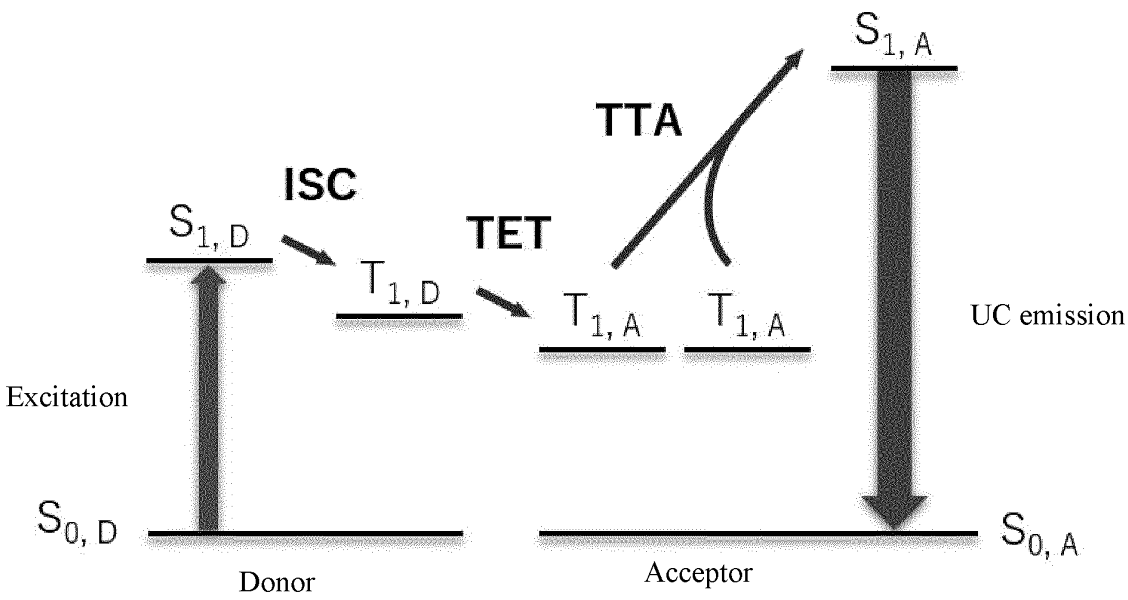
S1, A
TTA
ISC
S1, D
TET
T1, D
T1, A
T1, A
UC emission
Excitation
S0, D
S0, A
Donor
Acceptor

[FIG. 2]

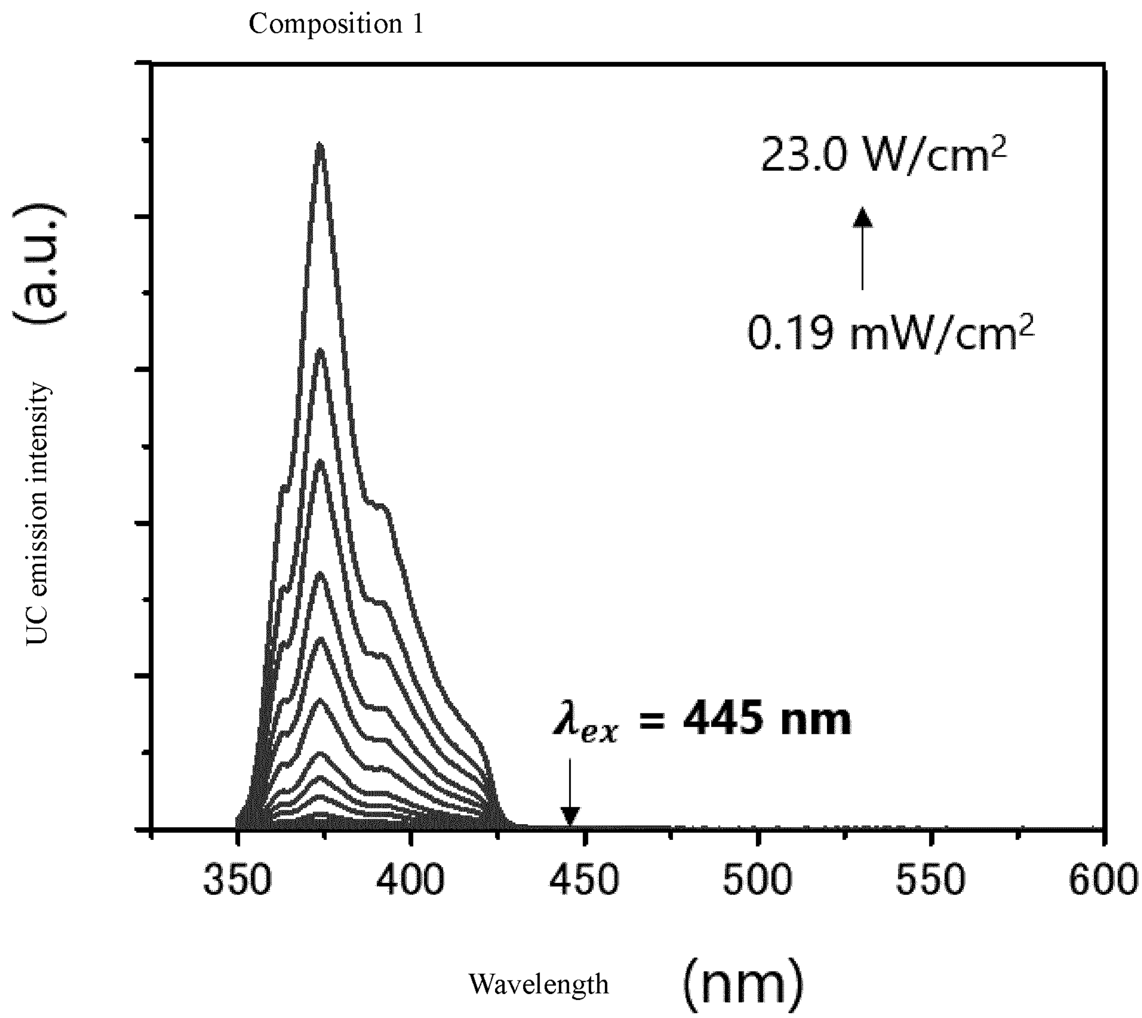
Composition 1
23.0 W/cm2
0.19 mW/cm2
UC emission intensity (a.u.)
λex = 445 nm
350
400
450
500
550
600
Wavelength (nm)

[FIG. 3]

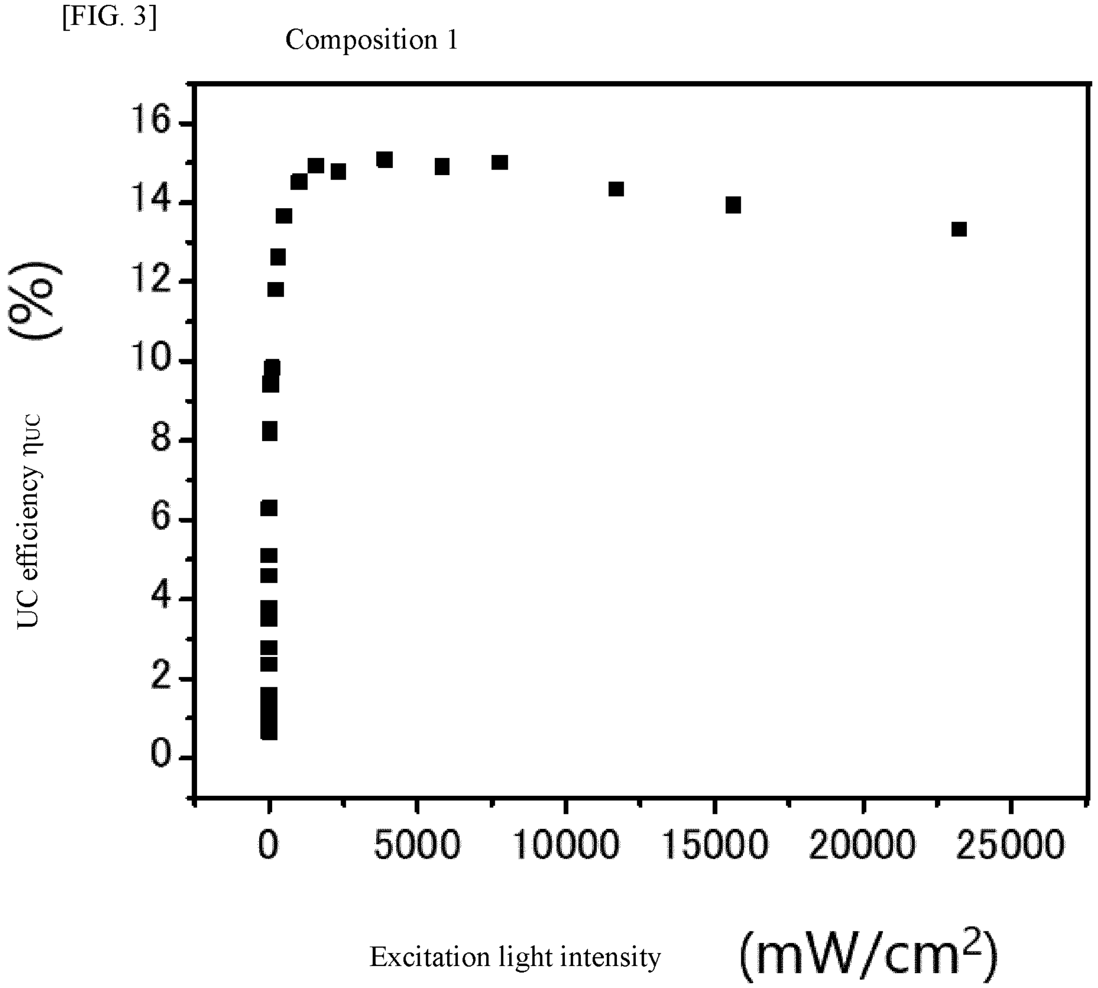
Composition 1
16
14
12
10
8
6
4
2
0
UC efficiency ηUC (%)
0
5000
10000
15000
20000
25000
Excitation light intensity (mW/cm2)

[FIG. 4]

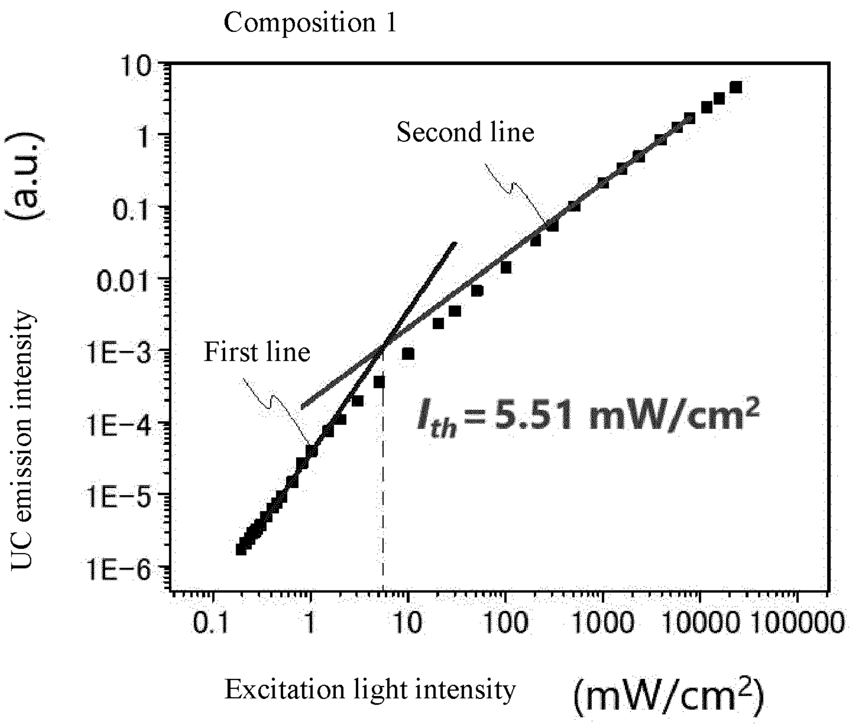
Composition 1
10
1
0.1
0.01
1E-3
1E-4
1E-5
1E-6
UC emission intensity (a.u.)
Second line
First line
Ith = 5.51 mW/cm2
0.1
1
10
100
1000
10000
100000
Excitation light intensity (mW/cm2)

[FIG. 5]

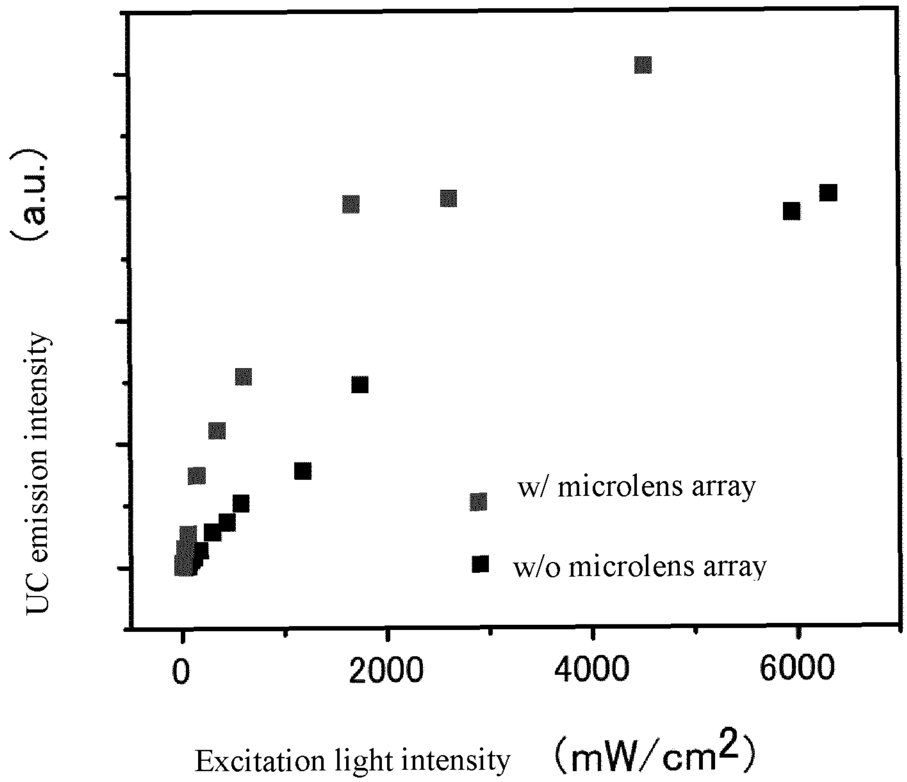
UC emission intensity (a.u.)
w/ microlens array
w/o microlens array
0
2000
4000
6000
Excitation light intensity (mW/cm2)

## INTERNATIONAL SEARCH REPORT

International application No.
**PCT/JP2022/031415**

**A. CLASSIFICATION OF SUBJECT MATTER**

***C09K 11/06***(2006.01)i; ***G02B 5/20***(2006.01)i
FI: C09K11/06; G02B5/20

According to International Patent Classification (IPC) or to both national classification and IPC

**B. FIELDS SEARCHED**

Minimum documentation searched (classification system followed by classification symbols)

C09K11/06; G02B5/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY/MEDLINE (STN); Japio-GPG/FX

**C. DOCUMENTS CONSIDERED TO BE RELEVANT**

| Category* | Citation of document, with indication, where appropriate, of the relevant passages | Relevant to claim No. |
|---|---|---|
| X<br><br><br><br>Y | HUANG, Dandan et al. Preparation of ketocoumarins as heavy atom-free triplet photosensitizers for triplet-triplet annihilation upconversion. Photochem. Photobiol. Sci. 2013, 12, 872-882, DOI: 10.1039/c3pp25416j<br>abstract, compounds 1-5, Results and discussion | 1-9, 12-13<br><br><br><br>11 |
| X<br><br><br><br>Y | HUANG, Ling et al. Expanding anti-stokes shifting in triplet-triplet annihilation upconversion for in vivo anticancer prodrug activation. Angewandte Chemie International Eddition. 2017, 56, 14400-14404, DOI: 10.1002/anie.201704430<br>abstract, fig. 2 | 1-9, 12-13<br><br><br><br>11 |
| X<br><br><br><br>Y | NAGASAWA, Yutaka et al. Dynamical aspects of ultrafast intermolecular electron transfer faster than solvation process: substituent effects and energy gap dependence. J. Phys. Chem. 1995, 99, 653-662<br>abstract, fig. 1-8, "2. Experimental Section", "3. Results" | 1-9, 12-13<br><br><br><br>11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 October 2022** | **08 November 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/031415**

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2016/183424 A1 (CALIFORNIA INSTITUTE OF TECHNOLOGY) 17 November 2016 (2016-11-17)<br>paragraphs [0001]-[0009], [0027]-[0033], [0064]-[0089], claims | 10<br>11 |
| X<br>Y | WO 2019/005943 A1 (CALIFORNIA INSTITUTE OF TECHNOLOGY) 03 January 2019 (2019-01-03)<br>paragraphs [0039]-[0046], claims | 10<br>11 |

Form PCT/ISA/210 (second sheet) (January 2015)

**INTERNATIONAL SEARCH REPORT**

International application No.
**PCT/JP2022/031415**

**Box No. III Observations where unity of invention is lacking (Continuation of item 3 of first sheet)**

This International Searching Authority found multiple inventions in this international application, as follows:

(Invention 1) Claims 1-9 and 12-13
Claims 1-9 and 12-13 have the special technical feature of a "photon upconversion composition which contains a compound having a coumarin skeleton and does not contain a heavy metal", and are thus classified as invention 1.

(Invention 2) Claims 10-11
Claim 10 cannot be said to share a same or corresponding technical feature with claim 1 classified as invention 1.
Claim 11 shares, with claim 1 classified as invention 1, the common technical feature of a "photon upconversion composition which contains a compound having a coumarin skeleton and does not contain a heavy metal". However, said technical feature does not make a contribution over the prior art in light of the disclosures of documents 1-3, and thus cannot be said to be a special technical feature. Moreover, there are no other same or corresponding special technical features between these inventions.
Accordingly, claims 10-11 cannot be classified as invention 1.
In addition, claims 10-11 have the special technical feature of a "myopia suppression transparent product containing a photon upconversion composition", and are thus classified as invention 2.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (January 2015)

**INTERNATIONAL SEARCH REPORT**
**Information on patent family members**

International application No.
**PCT/JP2022/031415**

| Patent document cited in search report | Publication date (day/month/year) | Patent family member(s) | Publication date (day/month/year) |
|---|---|---|---|
| WO 2016/183424 A1 | 17 November 2016 | JP 2018-516652 A | |
| | | US 2018/0177922 A1 | |
| | | US 2016/0331868 A1 | |
| | | EP 3294798 A1 | |
| | | AU 2016260403 A | |
| | | CA 2985368 A1 | |
| | | CN 107849265 A | |
| | | BR 112017024531 A | |
| WO 2019/005943 A1 | 03 January 2019 | US 2019/0001024 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **Y. MURAKAMI et al.** *Phys. Chem. Chem. Phys.,* 2020, vol. 22, 27134